# EUROPEAN PATENT APPLICATION

(11) **EP 4 822 583 A1**
(43) Date of publication of application: **14.10.2026**
(21) Application number: 26158525.1
(22) Date of filing: 13.02.2026
(51) Int. Cl.: G06F 30/20, B29C 70/38, G06F 30/23

(54) **METHODS AND AUTOMATED SYSTEMS FOR LAYUP AND ANALYSIS OF COMPOSITE MATERIALS DURING FABRICATION OF COMPOSITE WORKPIECES**

(30) Priority: 09.04.2025 US 202519174101
(71) Applicant: The Boeing Company, Arlington, VA 22202 (US)
(72) Inventor: BAUER, Andrew L., Arlington, 22202 (US); REYNOLDS, Carla E., Arlington, 22202 (US)
(74) Representative: Boult Wade Tennant LLP

(57) **Abstract**

Methods for layup and analysis of composite materials during fabrication of composite workpieces are disclosed. For example, the method includes: (1) receiving design data for the layup of the composite material, the composite workpiece decomposed into multiple design zones, the design data including localized zone data for the multiple design zones; (2) processing the design data for multiple layers of the composite workpiece to determine as-planned fiber volume fill characteristics for the design zones of each layer individually and for the multiple layers collectively; (3) laying up a layer of the composite material for the composite workpiece based on the localized zone data; and (4) detecting as-built data for the layer using a quality detection device, the as-built data divided into an as-built grid structure that includes as-built grid cells. Automated systems for layup and analysis of composite materials during fabrication of composite workpieces are also disclosed.

## Description

### FIELD

The present disclosure relates generally to layup and analysis of composite materials during fabrication of composite workpieces and, particularly, to methods and automated systems associated therewith. The methods include laying up multiple layers of composite material and detecting as-built data for each layer. For example, the as-built data is processed to determine as-built fiber volume fill characteristics or fiber angle deviation characteristics. The as-built fiber volume fill characteristics are compared to as-planned fiber volume fill characteristics based on design data for the composite workpiece. Similarly, the as-built fiber angle deviation characteristics are compared to as-planned fiber angle deviation characteristics based on the design data for the composite workpiece. The comparisons can determine projected fiber volume fill ratios and projected fiber angle deviation ratios, respectively, for each layer. The projected fiber volume fill ratios for each layer can be processed to determine through thickness projected fiber volume fill ratios for any combination of the multiple layers. Similarly, the projected fiber angle deviation ratios for each layer can be processed to determine through thickness projected fiber angle deviation ratios for any combination of the multiple layers. Where the design data is decomposed into design zones, the analysis can be performed for any combination of design zones and layers. Where the design zones are further decomposed into design grid structures, the analysis can be performed for any combination of design grid cells.

### BACKGROUND

In the current state, analysis of fiber volume fill in composite workpieces is done manually with large quantities of engineering manufacturing and labor hours required to evaluate requirements. Due to the significant reliance on tedious analysis, errors may be prone to occur. Typically, this requires time consuming manual analysis as well as part build processes to evaluate the requirement. To meet a set of similar requirements has been known in some cases for large complex parts to take more than a year of successive iterations to design an NC program which meets the requirements.

Accordingly, those skilled in the art continue with research and development efforts to improve techniques for layup and analysis of composite materials during fabrication of composite workpieces.

In general, a composite structure is a structure that is formed from two or more constituent component materials with different physical and/or chemical properties that, when combined, produce a composite material having characteristics that are different than the characteristics of the individual components materials.

As an example, one type of composite material is carbon fiber reinforced plastic ("CFRP"). CFRP optionally includes one or more composite layers or plies laminated together to form a sheet, laminate or layup. Each of the composite layers or plies can include a reinforcement material and a matrix material. The matrix material surrounds, binds and supports the reinforcement material.

### SUMMARY

Disclosed are examples of methods for layup and analysis of composite material during fabrication of a composite workpieces and automated systems for layup and analysis of composite material during fabrication of a composite workpiece. The following is a non-exhaustive list of examples, which may or may not be claimed, of the subject matter according to the present disclosure.

In some examples, the disclosed method for layup and analysis of composite material during fabrication of a composite workpiece includes: (1) receiving design data for the layup of the composite material, the composite workpiece decomposed into multiple design zones, the design data including localized zone data for the multiple design zones; (2) processing the design data for multiple layers of the composite workpiece to determine as-planned fiber volume fill characteristics for the design zones of each layer individually and for the multiple layers collectively; (3) laying up a layer of the composite material for the composite workpiece based on the localized zone data for the layer; and (4) detecting as-built data for the layer using a quality detection device, the as-built data divided into an as-built grid structure that includes a plurality of as-built grid cells.

In some examples, the disclosed method for layup and analysis of composite material during fabrication of a composite workpiece includes: (1) receiving design data for the layup of the composite material, the composite workpiece decomposed into multiple design zones, the design data including localized zone data for the multiple design zones; (2) processing the design data for multiple layers of the composite workpiece to determine as-planned fiber angle deviation characteristics for the design zones of each layer individually and for the multiple layers collectively; (3) laying up a layer of the composite material for the composite workpiece based on the localized zone data for the layer; and (4) detecting as-built data for the layer using a quality detection device, the as-built data divided into an as-built grid structure includes a plurality of as-built grid cells.

In some examples, the disclosed automated system for layup and analysis of composite material during fabrication of a composite workpiece includes at least one analytical computing device, a robotic manipulator, a layup mandrel and a quality detection device. The at least one analytical computing device storing a design data analysis application program, a localized zone data analysis application program and a localized grid data analysis application program. The at least one analytical computing device is configured to receive design data for the layup of the composite material from a design data storage device via a communication network. The composite workpiece decomposed into multiple design zones. At least a portion of the multiple design zones are further decomposed into a design grid structure with a plurality of design grid cells for the corresponding design zone. The design data including localized zone data for the multiple design zones. The design data also including localized grid data for the design grid cells of the design grid structures. The robotic manipulator in a fabrication cell and in operative communication with the at least one analytical computing device. The robotic manipulator including a composite material placement device. The layup mandrel in the fabrication cell and configured for layup of the composite material. A layer of the composite material is laid up on the layup mandrel in the fabrication cell. A second layer of the composite material is laid up over the layer and subsequent layers of the composite material are laid up over current layers. The quality detection device in the fabrication cell and in operative communication with the at least one analytical computing device.

In some examples, the disclosed method for layup and analysis of composite material during fabrication of a composite workpiece includes: (1) dividing a structure into multiple design zones based upon design and stress analysis; (2) determining a design fill ratio for each of the multiple design zones; (3) detecting as-built data for each current layer using a quality detection device; (4) determining an as-built fill ratio for each of the multiple design zones that are laid up; and (5) comparing the as-built fill ratio for each zone to the design fill ratio.

In some examples, the disclosed method for layup and analysis of composite material during fabrication of a composite workpiece includes: (1) dividing a structure into multiple design zones based upon design and stress analysis; (2) determining a design angle of deviation for each of the multiple design zones; (3) detecting as-built data for each current layer using a quality detection device; (4) determining an as-built angle of deviation for each of the multiple design zones that are laid up; and (5) comparing the as-built angle of deviation for each zone to the design angle of deviation.

In some examples, the disclosed automated system for layup and analysis of composite material during fabrication of a composite workpiece includes at least one analytical computing device, a robotic manipulator, a layup mandrel and a quality detection device. The at least one analytical computing device storing a design data analysis application program, a localized zone data analysis application program and a localized grid data analysis application program. The at least one analytical computing device is configured to receive design data for the layup of the composite material. The robotic manipulator in a fabrication cell and in operative communication with the at least one analytical computing device. The robotic manipulator including a composite material placement device. The layup mandrel in the fabrication cell and configured for layup of the composite material. The quality detection device in the fabrication cell and in operative communication with the at least one analytical computing device. The at least one analytical computing device, in conjunction with running a design data optimization application program, is configured to optimize the design data to form optimized design data for the layup of subsequent layers of the composite material during the fabrication of the composite workpiece to reduce a through-thickness risk probability of not achieving fiber requirements for the composite workpiece after the subsequent layers are laid up. The at least one analytical computing device, in conjunction with running the design data analysis application program, is configured to process the optimized design data for the subsequent layers of the layup to determine as-planned fiber characteristics for the subsequent layers. The robotic manipulator and the composite material placement device are configured to layup a next layer of the composite material over the layers currently on the layup mandrel based on the optimized design data.

Other examples of the disclosed methods for layup and analysis of composite materials during fabrication of composite workpieces and automated systems for layup and analysis of composite materials during fabrication of composite workpieces will become apparent from the following detailed description, the accompanying drawings and the appended claims.

### BRIEF DESCRIPTION OF THE DRAWINGS

Fig. 1 is a functional block diagram of an example of an automated system for layup and analysis of composite material during fabrication of a composite workpiece;
Fig. 2 is a functional block diagram of another example of an automated system for layup and analysis of composite material during fabrication of a composite workpiece;
Fig. 3 is a side view of an example of a composite workpiece that includes multiple design zones;
Fig. 4 is a top view of an example of a portion of the composite workpiece of Fig. 3 that includes a portion of the multiple design zones of Fig. 3 with each design zone divided into a design grid structure having a plurality of design grid cells;
Fig. 5 is a flow diagram of an example of a method for layup and analysis of composite material during fabrication of a composite workpiece;
Fig. 6, in combination with Fig. 5, is a flow diagram of another example of a method for layup and analysis of composite material during fabrication of a composite workpiece;
Fig. 7, in combination with Fig. 5, is a flow diagram of yet another example of a method for layup and analysis of composite material during fabrication of a composite workpiece;
Fig. 8, in combination with Figs. 5 and 7, is a flow diagram of still another example of a method for layup and analysis of composite material during fabrication of a composite workpiece;
Fig. 9, in combination with Figs. 5, 7 and 8, is a flow diagram of still yet another example of a method for layup and analysis of composite material during fabrication of a composite workpiece;
Fig. 10 is a flow diagram showing examples of the optimizing of the design data of Fig. 9;
Fig. 11, in combination with Figs. 5, 7 and 8, is a flow diagram of another example of a method for layup and analysis of composite material during fabrication of a composite workpiece;
Fig. 12, in combination with Figs. 5 and 7, is a flow diagram of yet another example of a method for layup and analysis of composite material during fabrication of a composite workpiece;
Fig. 13, in combination with Figs. 5, 7 and 12, is a flow diagram of still another example of a method for layup and analysis of composite material during fabrication of a composite workpiece;
Fig. 14 is a flow diagram showing examples of the optimizing of the design data of Fig. 13;
Fig. 15, in combination with Figs. 5, 7 and 12, is a flow diagram of still yet another example of a method for layup and analysis of composite material during fabrication of a composite workpiece;
Fig. 16, in combination with Figs. 5 and 7, is a flow diagram of another example of a method for layup and analysis of composite material during fabrication of a composite workpiece;
Fig. 17, in combination with Figs. 5, 7 and 16, is a flow diagram of yet another example of a method for layup and analysis of composite material during fabrication of a composite workpiece;
Fig. 18 is a flow diagram showing examples of the optimizing of the design data of Fig. 17;
Fig. 19, in combination with Figs. 5, 7 and 16, is a flow diagram of still another example of a method for layup and analysis of composite material during fabrication of a composite workpiece;
Fig. 20 is a flow diagram of still yet another example of a method for layup and analysis of composite material during fabrication of a composite workpiece;
Fig. 21, in combination with Fig. 20, is a flow diagram of another example of a method for layup and analysis of composite material during fabrication of a composite workpiece;
Fig. 22, in combination with Fig. 20, is a flow diagram of yet another example of a method for layup and analysis of composite material during fabrication of a composite workpiece;
Fig. 23, in combination with Figs. 20 and 22, is a flow diagram of still another example of a method for layup and analysis of composite material during fabrication of a composite workpiece;
Fig. 24, in combination with Figs. 20, 22 and 23, is a flow diagram of still yet another example of a method for layup and analysis of composite material during fabrication of a composite workpiece;
Fig. 25 is a flow diagram showing examples of the optimizing of the design data of Fig. 24;
Fig. 26, in combination with Figs. 20, 22 and 23, is a flow diagram of another example of a method for layup and analysis of composite material during fabrication of a composite workpiece;
Fig. 27, in combination with Figs. 20 and 22, is a flow diagram of yet another example of a method for layup and analysis of composite material during fabrication of a composite workpiece;
Fig. 28, in combination with Figs. 20, 22 and 27, is a flow diagram of still another example of a method for layup and analysis of composite material during fabrication of a composite workpiece;
Fig. 29 is a flow diagram showing examples of the optimizing of the design data of Fig. 28;
Fig. 30, in combination with Figs. 20, 22 and 27, is a flow diagram of still yet another example of a method for layup and analysis of composite material during fabrication of a composite workpiece;
Fig. 31, in combination with Figs. 20 and 22, is a flow diagram of another example of a method for layup and analysis of composite material during fabrication of a composite workpiece;
Fig. 32, in combination with Figs. 20, 22 and 31, is a flow diagram of yet another example of a method for layup and analysis of composite material during fabrication of a composite workpiece;
Fig. 33 is a flow diagram showing examples of the optimizing of the design data of Fig. 32;
Fig. 34, in combination with Figs. 20, 22 and 31, is a flow diagram of still another example of a method for layup and analysis of composite material during fabrication of a composite workpiece;
Fig. 35 is a functional block diagram of yet another example of yet another automated system for layup and analysis of composite material during fabrication of a composite workpiece;
Fig. 36 is a functional block diagram of an example of an analytical computing device of Fig. 35;
Fig. 37 is a block diagram showing examples of design data, localized zone data and localized grid data used in conjunction with layup and analysis of composite material during fabrication of a composite workpiece;
Fig. 38 is a block diagram showing an example of the composite material placement device of Fig. 35;
Fig. 39 is a block diagram showing examples of as-built data used in conjunction with layup and analysis of composite material during fabrication of a composite workpiece;
Figs. 40A-C are functional diagrams showing examples of plies, tows and courses of tows used in conjunction with layup of composite material during fabrication of a composite workpiece;
Figs. 41A and 41B are functional diagrams showing examples of gaps and overlaps between adjacent tows in conjunction with layup and analysis of composite material during fabrication of a composite workpiece;
Fig. 42 is a block diagram showing examples of the quality detection device of Fig. 35;
Fig. 43 is a functional diagram showing an example of an as-built grid structure with as-built grid cells for a composite workpiece used in conjunction with layup and analysis of composite material during fabrication of a composite workpiece;
Fig. 44 is a flow diagram of still yet another example of a method for layup and analysis of composite material during fabrication of a composite workpiece;
Fig. 45 is a flow diagram of another example of a method for layup and analysis of composite material during fabrication of a composite workpiece;
Fig. 46 is a block diagram of aircraft production and service methodology that implements one or more of the examples of methods for layup and analysis of composite materials during fabrication of composite workpieces disclosed herein;
Fig. 47 is a schematic illustration of an aircraft that incorporates components fabricated using one or more of the examples of methods for layup and analysis of composite materials during fabrication of composite workpieces disclosed herein;
Fig. 48, in combination with Fig. 44, is a flow diagram of yet another example of a method for layup and analysis of composite material during fabrication of a composite workpiece; and
Fig. 49, in combination with Fig. 45, is a flow diagram of still another example of a method for layup and analysis of composite material during fabrication of a composite workpiece.

### DETAILED DESCRIPTION

The various examples of methods 500, 600, 700, 800, 900, 1100, 1200, 1300, 1500, 1600, 1700, 1900, 2000, 2100, 2200, 2300, 2400, 2600, 2700, 2800, 3000, 3100, 3200, 3400, 4400, 4500, 4800, 4900 for layup and analysis of composite materials 3502 during fabrication of composite workpieces 300 disclosed herein provide techniques for in-process analysis and control during the fabrication. The various examples of automated systems 100, 200, 3500 for layup and analysis of composite materials 3502 during fabrication of composite workpieces 300 disclosed herein enable the methods 500, 600, 700, 800, 900, 1100, 1200, 1300, 1500, 1600, 1700, 1900, 2000, 2100, 2200, 2300, 2400, 2600, 2700, 2800, 3000, 3100, 3200, 3400, 4400, 4500, 4800, 4900 and techniques for in-process analysis and control during the fabrication.

The various techniques for layup and analysis of composite materials during fabrication of composite workpieces disclosed herein may be implemented, for example, to address the generation of localized engineering requirements for automated composite lamination fill ratio and angle deviation risk analysis during the design of numerical control programs and lamination fill ratio risk analysis applied during processing for monitoring and control.

The various methods and automated systems allow for generation of localized tailored requirements for specific engineering requirements and for rapid analysis and inspection of specific engineering requirements relevant to lamination of composite materials. Particularly, the risk in failing to meet fiber volume fill due to either relative placement of ply, course or tow boundaries or the converges of the ply, course or tow boundaries defined by a numerical control program. An additional engineering requirement is the analysis of ply angle deviations occurring due to course path planning. The various methods and automated systems also enable an optimization of a numerical control program that specifies ply, course or tow placement to minimize risk associated with meeting fiber volume fill requirements or ply angle deviation requirements. Additionally, the various methods and automated systems enables the generation of a localized grid of requirements of fill ratio and angle deviation depending on the design margin present relevant to the engineering risks. The various methods and automated systems also enable the risk analysis for fiber volume fill to be discretized into zones within a lamination surface of the composite workpiece, such as a surface of a part or subsection within a part which may or may not correspond to the localized grid of requirements. The various methods and automated systems also enable these analyses to be accomplished through the thickness of the part, subsection within a part or more generally multiple layers of a surface.

An additional feature of the various methods and automated systems is that they allow alternate methods of in-process measurement, comparative analysis of as-built to as-planned fill ratio and refinement of as-planned requirements to drive manual optimization of numerical control programming. This approach can be modified if a sampling plan is included, whereby a sampling plan maybe refined to meet requirements.

The various methods and automated systems require the input of relevant data sets associated with design, numerical control programming, and engineering requirements. The various methods and automated systems include application programs that generates gridded data structure registering data and separate gridded data structure for analysis and requirements capture. The various methods and automated systems include features for aggregating relevant data in the gridded structure for analysis and enabling through thickness analysis. The various automated systems include a risk analysis module for meeting the specific fiber volume. The various methods include the process to evaluate risk analysis by zone and manually optimize numerical control program design to minimize risk. The various methods and automated systems also include an option for automated optimization of numerical control path start points to optimize numerical control program design. Additionally, the various methods and automated systems produce a localized requirements grid based on higher resolution requirements derived from localized engineering margin data.

The various methods and automated systems break down the structure into zones with margins for each zone. The quantity of zones depends upon design and stress analysis. Not every location needs the same fill ratio and/or angle of deviation. Not all locations have the same risk needing the same fill ratio and/or angle of deviation. Also, the angle of deviation of orientation of the tows relative to the load path can be reduced in certain areas and in others not as much. It is possible to have transition zones from one zone to another zone.

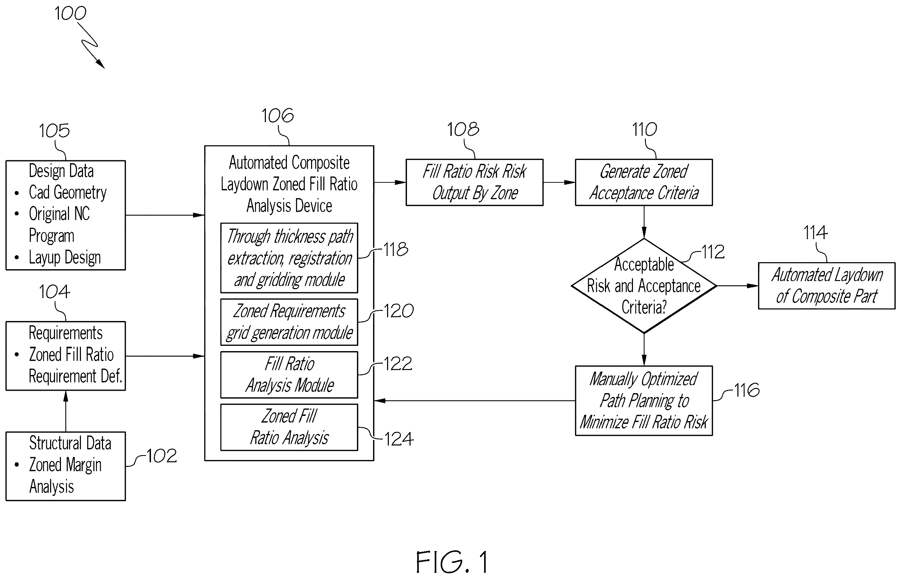

With reference to Fig. 1, in one or more examples an automated system 100 for layup and analysis of composite material 3502 during fabrication of a composite workpiece 300 includes structural data 102, requirements 104, design data 105, an automated composite laydown zoned fill ratio analysis device 106, a fill ratio risk risk output by zone 108, a generate zoned acceptance criteria 110, an acceptable risk and acceptance criteria decision 112, an automated laydown of composite part process 114 and a manually optimized path planning to minimize fill ratio risk process 116. The structural data 102 is in operative communication with the requirements 104. The structural data 102, for example, includes a zoned margin analysis. The requirements 104 are in operative communication with the automated composite laydown zoned fill ratio analysis device 106. The requirements 104, for example, include a zoned fill ratio requirement definition. The design data 105 is in operative communication with the automated composite laydown zoned fill ratio analysis device 106. The design data 105, for example, includes a computer aided design geometry, an original numerical control program and a layup design.

The automated composite laydown zoned fill ratio analysis device 106 includes a through thickness path extraction, registration and gridding module 118, a zoned requirements grid generation module 120, a fill ratio analysis module 122 and a zoned fill ratio analysis 124. The automated composite laydown zoned fill ratio analysis device 106 is in operative communication with the fill ratio risk risk output by zone 108. The fill ratio risk risk output by zone 108 is in operative communication with the generate zoned acceptance criteria 110. The generate zoned acceptance criteria 110 is in operative communication with an acceptable risk and acceptance criteria decision 112. The acceptable risk and acceptance criteria decision 112 is in operative communication with the automated laydown of composite part process 114 and the manually optimized path planning to minimize fill ratio risk process 116. If the risk is acceptable, the flow chart continues from 112 to the automated laydown of composite part process 114. If the risk is not acceptable, the flow chart continues from 112 to the manually optimized path planning to minimize fill ratio risk process 116. The manually optimized path planning to minimize fill ratio risk process 116 is in operative communication with the automated composite laydown zoned fill ratio analysis device 106.

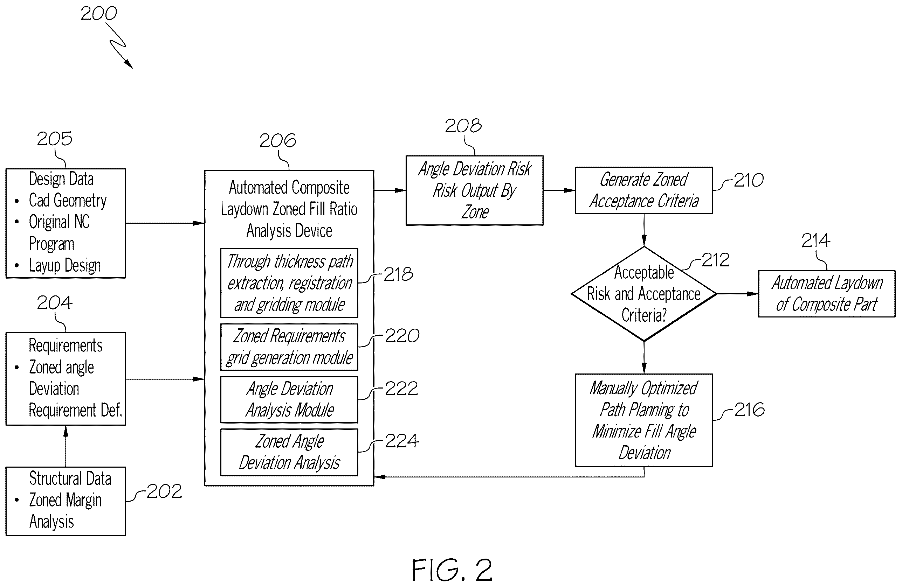

With reference to Fig. 2, in one or more examples an automated system 200 for layup and analysis of composite material 3502 during fabrication of a composite workpiece 300 includes structural data 202, requirements 204, design data 205, an automated composite laydown zoned fill ratio analysis device 206, an angle deviation risk risk output by zone 208, a generate zoned acceptance criteria 210, an acceptable risk and acceptance criteria decision 212, an automated laydown of composite part process 214 and a manually optimized path planning to minimize fill angle deviation process 216. The structural data 202 is in operative communication with the requirements 204. The structural data 202, for example, includes a zoned margin analysis. The requirements 204 are in operative communication with the automated composite laydown zoned fill ratio analysis device 206. The requirements 204, for example, include a zoned angle deviation requirement definition. The design data 205 is in operative communication with the automated composite laydown zoned fill ratio analysis device 206. The design data 205, for example, includes a computer aided design geometry, an original numerical control program and a layup design.

The automated composite laydown zoned fill ratio analysis device 206 includes a through thickness path extraction, registration and gridding module 218, a zoned requirements grid generation module 220, an angle deviation analysis module 222 and a zoned angle deviation analysis 224. The automated composite laydown zoned fill ratio analysis device 206 is in operative communication with the angle deviation risk risk output by zone 208. The angle deviation risk risk output by zone 208 is in operative communication with the generate zoned acceptance criteria 210. The generate zoned acceptance criteria 210 is in operative communication with an acceptable risk and acceptance criteria decision 212. The acceptable risk and acceptance criteria decision 212 is in operative communication with the automated laydown of composite part process 214 and the manually optimized path planning to minimize fill angle deviation process 216. If the risk is acceptable, the flow chart continues from 212 to the automated laydown of composite part process 214. If the risk is not acceptable, the flow chart continues from 212 to the manually optimized path planning to minimize fill angle deviation process 216. The manually optimized path planning to minimize fill angle deviation process 216 is in operative communication with the automated composite laydown zoned fill ratio analysis device 206.

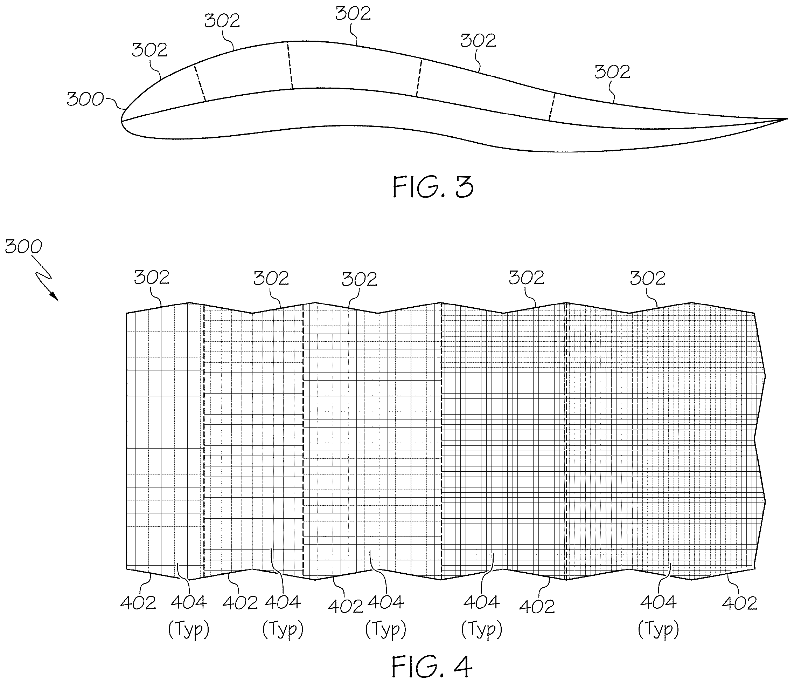

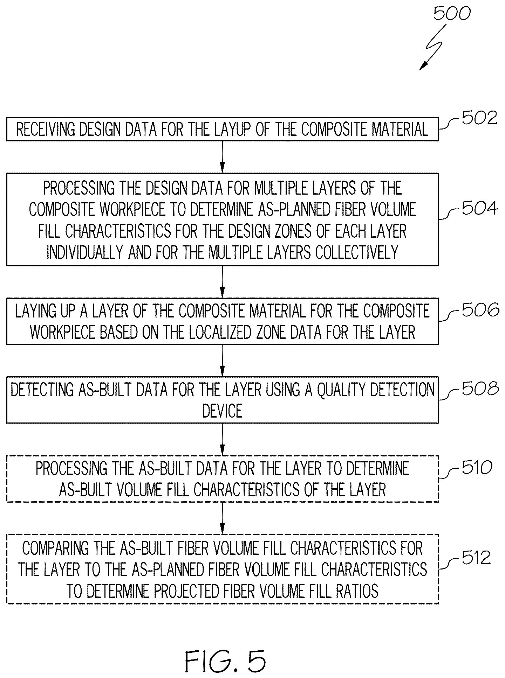

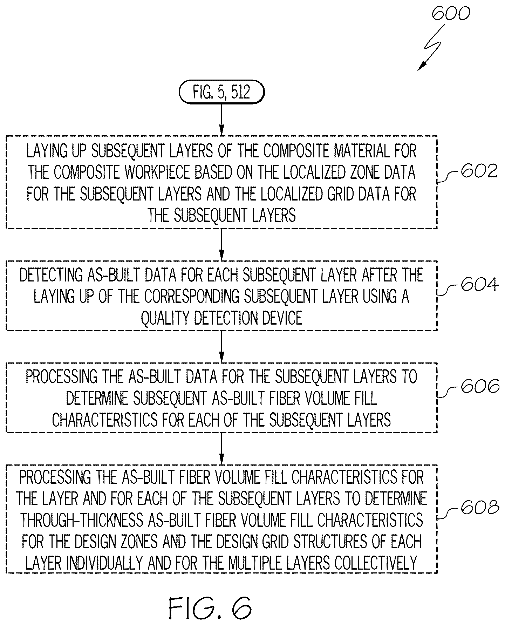

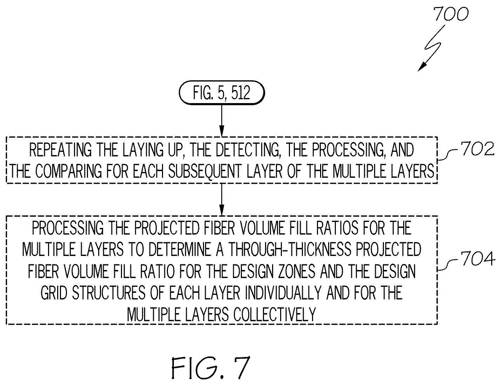

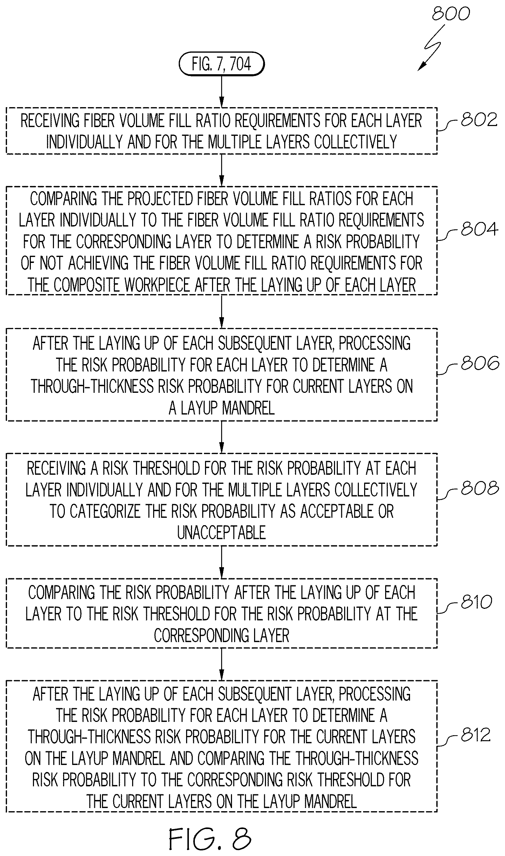

Referring generally to Figs 3-19, 35-37, 39, 40A-C, 41A-B, 42 and 43, by way of examples, the present disclosure is directed to methods 500, 600, 700, 800, 900, 1100, 1200, 1300, 1500, 1600, 1700, 1900 for layup and analysis of composite materials 3502 during fabrication of composite workpieces 300. Fig. 3 is a side view of an example of a composite workpiece 300 that includes multiple design zones 302. Fig. 4 is a top view of an example of a portion of the composite workpiece 300 of Fig. 3 that includes a portion of the multiple design zones 302 of Fig. 3 with each design zone 302 divided into a design grid structure 402 having a plurality of design grid cells 404. Fig. 5 provides an example of the method 500 for layup and analysis of composite material 3502 during fabrication of a composite workpiece 300. Fig. 6, in combination with Fig. 5, provides an example of the method 600 for layup and analysis of composite material 3502 during fabrication of a composite workpiece 300. Fig. 7, in combination with Fig. 5, provides an example of the method 700 for layup and analysis of composite material 3502 during fabrication of a composite workpiece 300. Fig. 8, in combination with Figs. 5 and 7, provides an example of the method 800 for layup and analysis of composite material 3502 during fabrication of a composite workpiece 300.

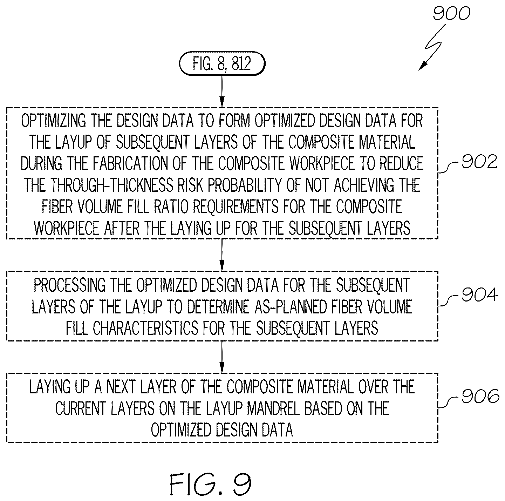

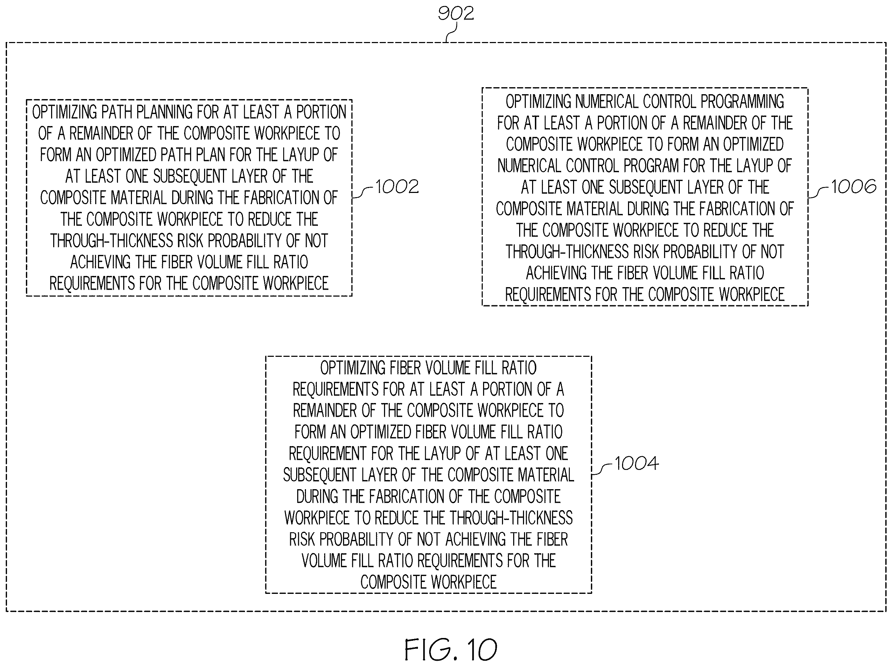

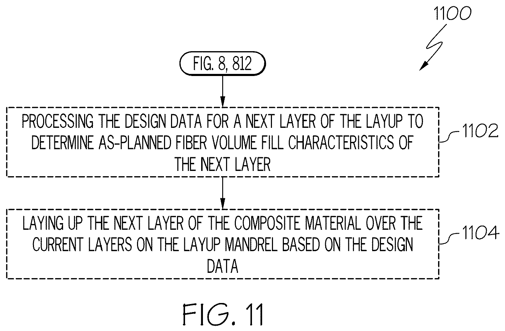

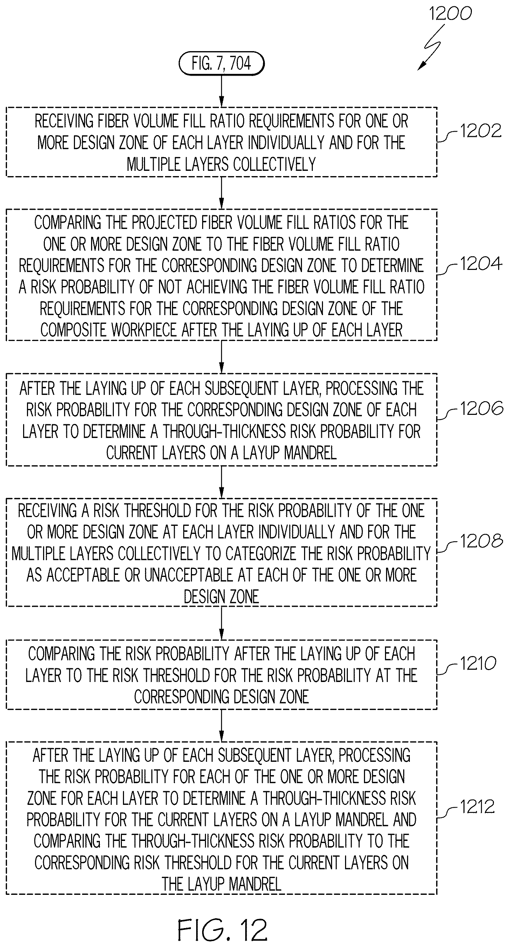

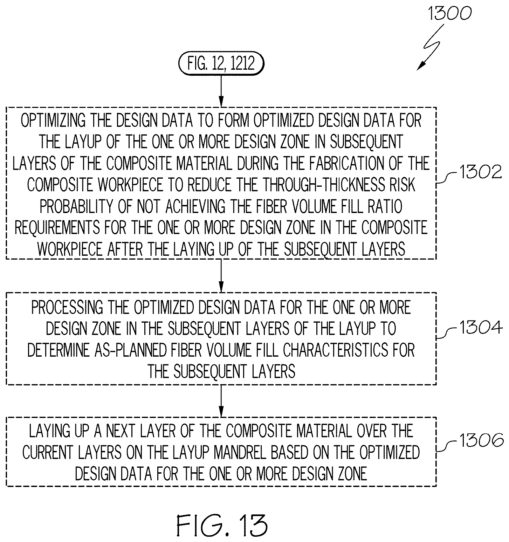

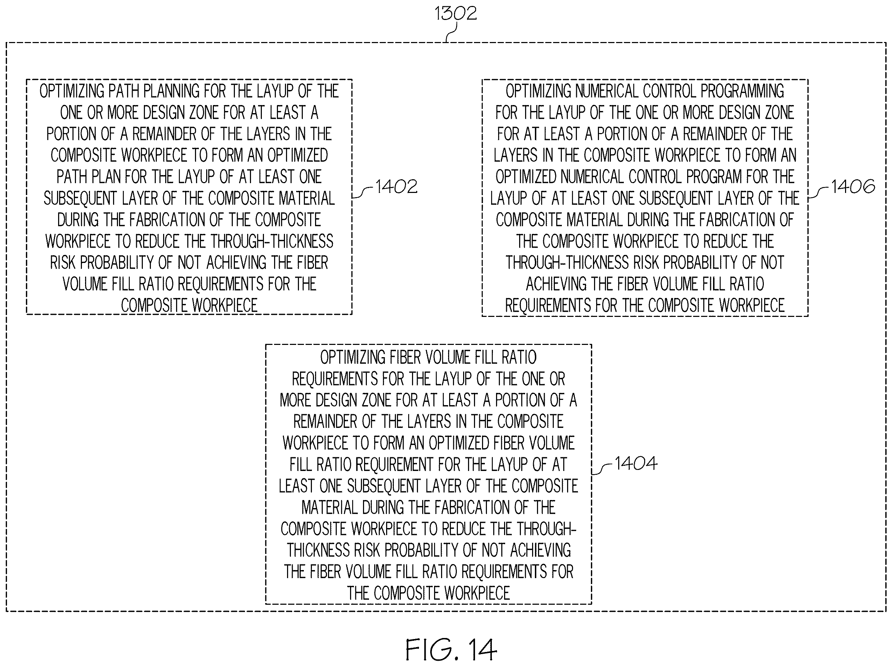

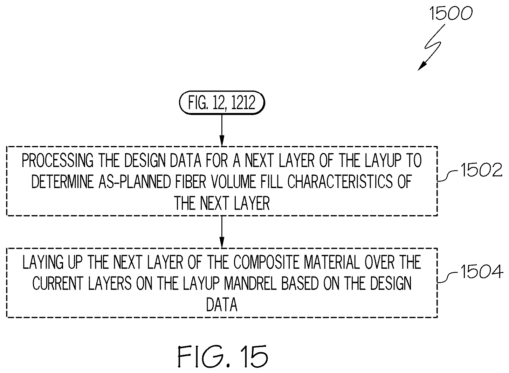

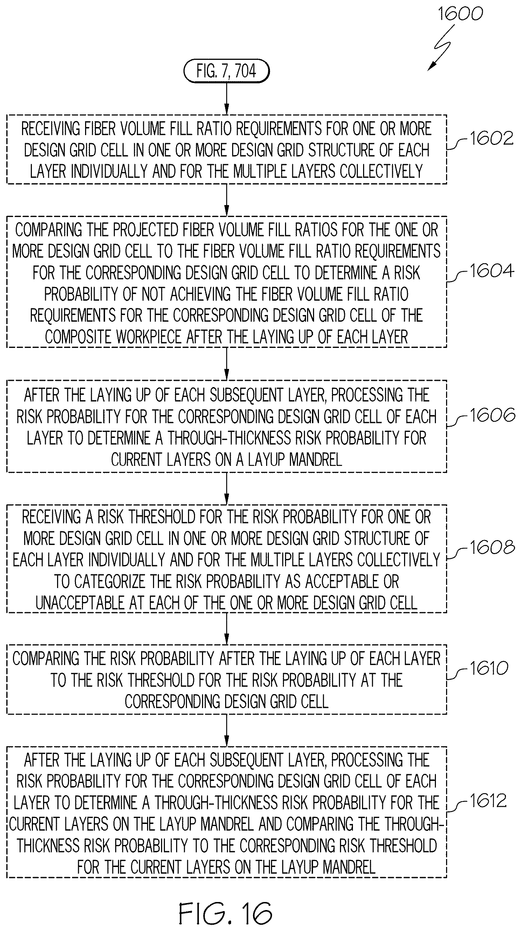

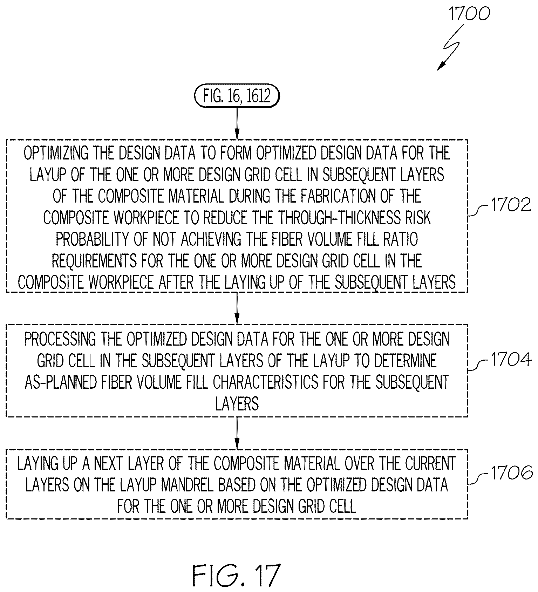

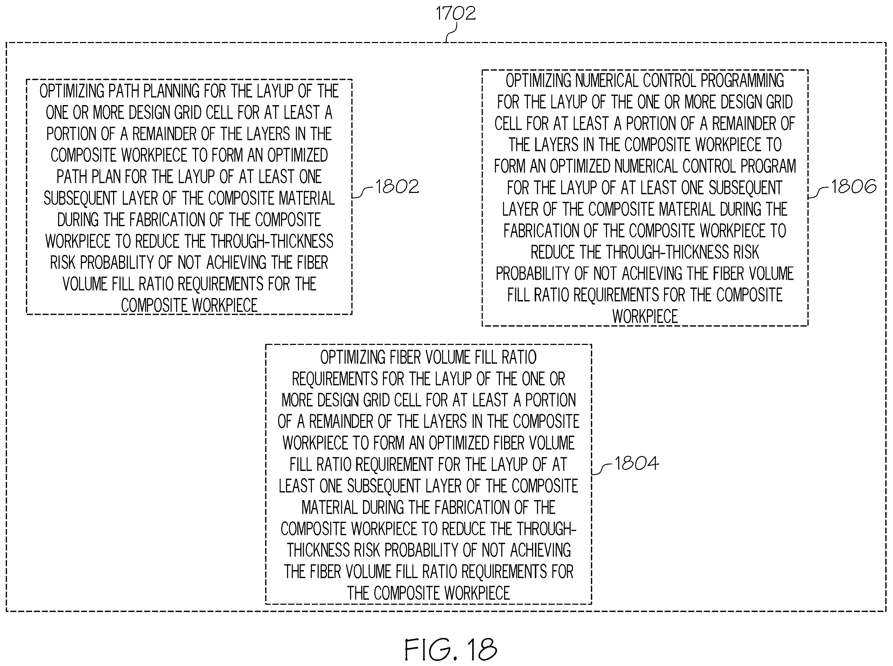

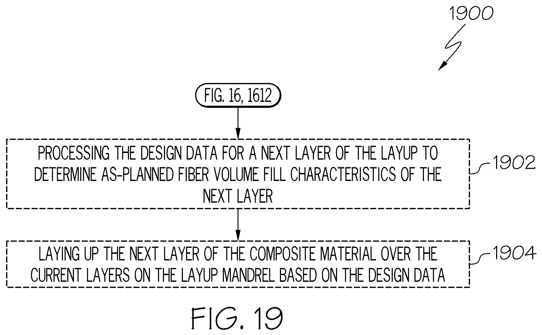

Fig. 9, in combination with Figs. 5, 7 and 8, provides an example of the method 900 for layup and analysis of composite material 3502 during fabrication of a composite workpiece 300. Fig. 10 provides examples of the optimizing 902 of the design data 3634 of Fig. 9. Fig. 11, in combination with Figs. 5, 7 and 8, provides an example of the method 1100 for layup and analysis of composite material 3502 during fabrication of a composite workpiece 300. Fig. 12, in combination with Figs. 5 and 7, provides an example of the method 1200 for layup and analysis of composite material 3502 during fabrication of a composite workpiece 300. Fig. 13, in combination with Figs. 5, 7 and 12, provides an example of the method 1300 for layup and analysis of composite material 3502 during fabrication of a composite workpiece 300. Fig. 14 provides examples of the optimizing 1302 of the design data 3634 of Fig. 13. Fig. 15, in combination with Figs. 5, 7 and 12, provides an example of the method 1500 for layup and analysis of composite material 3502 during fabrication of a composite workpiece 300. Fig. 16, in combination with Figs. 5 and 7, provides an example of the method 1600 for layup and analysis of composite material 3502 during fabrication of a composite workpiece 300. Fig. 17, in combination with Figs. 5, 7 and 16, provides an example of the method 1700 for layup and analysis of composite material 3502 during fabrication of a composite workpiece 300. Fig. 18 provides examples of the optimizing 1702 of the design data 3634 of Fig. 17. Fig. 19, in combination with Figs. 5, 7 and 16, provides an example of the method 1900 for layup and analysis of composite material 3502 during fabrication of a composite workpiece 300.

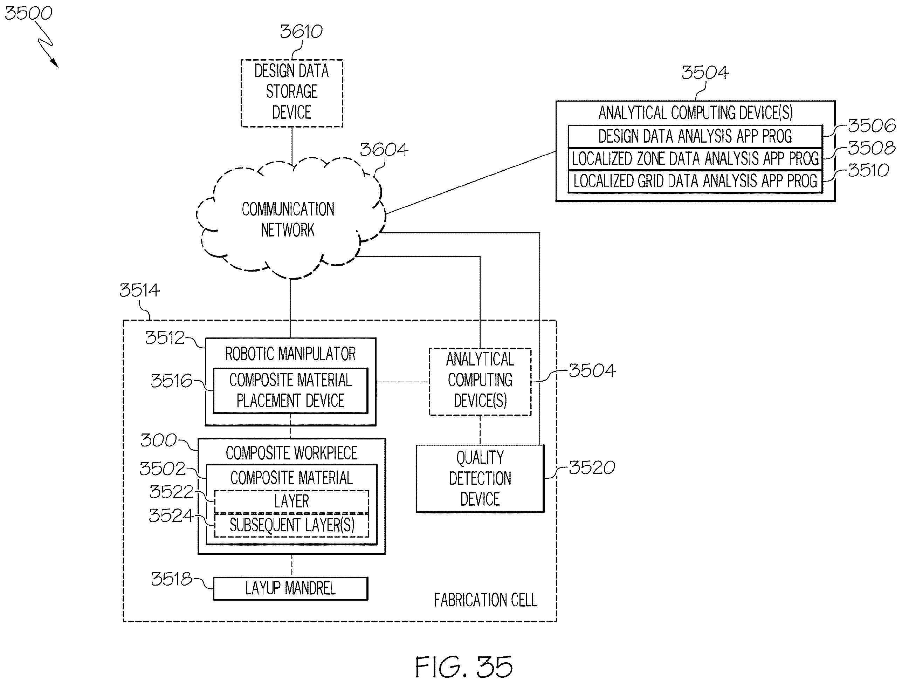

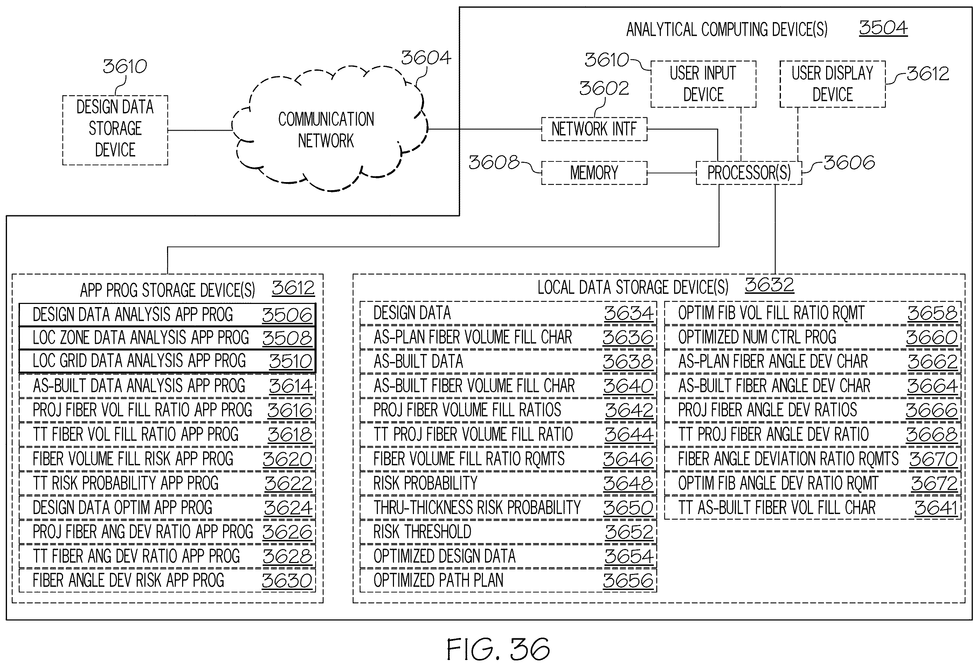

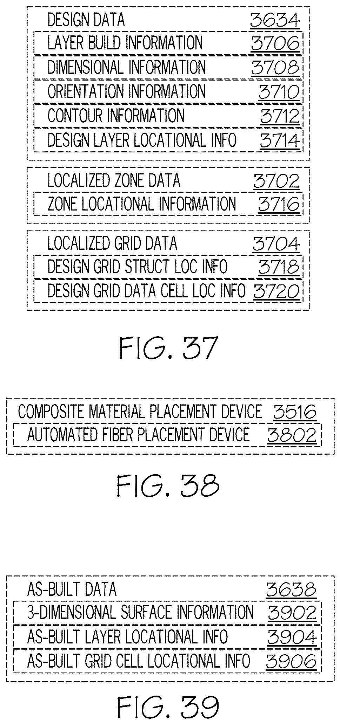

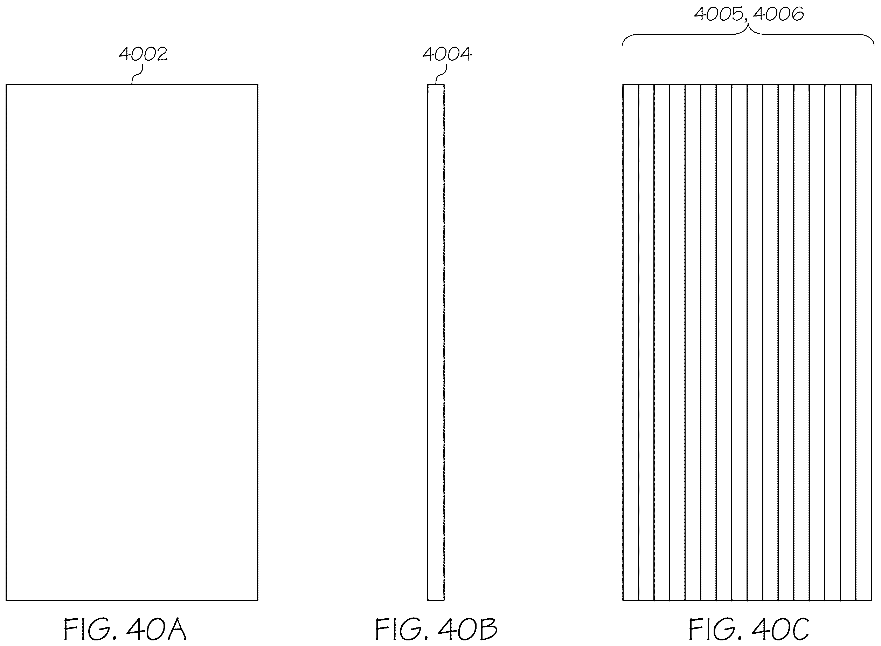

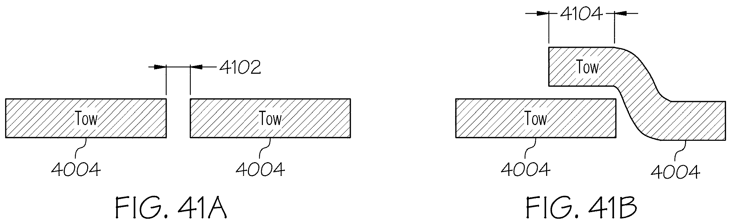

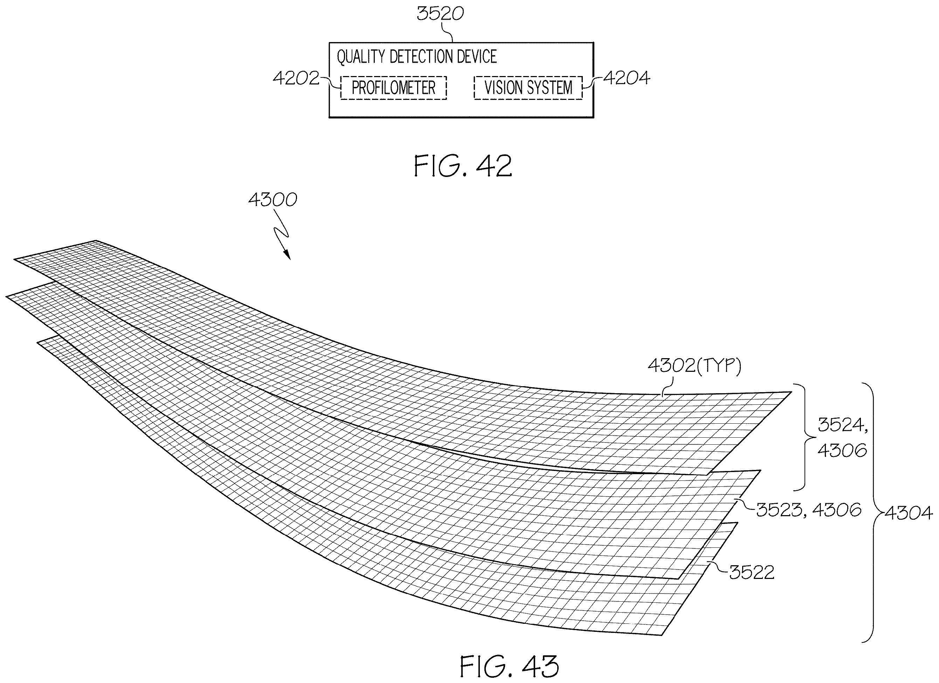

Fig. 35 is a functional block diagram of an example of an automated system 3500 for layup and analysis of composite material 3502 during fabrication of a composite workpiece 300. Fig. 36 is a functional block diagram of an example of the analytical computing device 3504 of Fig. 35. Fig. 37 is a block diagram showing examples of design data 3634, localized zone data 3702 and localized grid data 3704 used in conjunction with layup and analysis of composite material 3502 during fabrication of a composite workpiece 300. Fig. 39 is a block diagram showing examples of as-built data 3638 used in conjunction with layup and analysis of composite material 3502 during fabrication of a composite workpiece 300. Figs. 40A-C are functional diagrams showing examples of plies 4002, tows 4005 and courses 4006 of tows 4005 used in conjunction with layup of composite material 3502 during fabrication of a composite workpiece 300. Figs. 41A and 41B are functional diagrams showing examples of gaps 4102 and overlaps 4104 between adjacent tows 4005 in conjunction with layup and analysis of composite material 3502 during fabrication of a composite workpiece 300. Fig. 42 is a block diagram showing examples of the quality detection device 3520 of Fig. 35. Fig. 43 is a functional diagram showing an example of an as-built grid structure 4300 with as-built grid cells 4302 for a composite workpiece 300 used in conjunction with layup and analysis of composite material 3502 during fabrication of a composite workpiece 300.

With reference again to Figs. 3-5, 35-37, 39, 40A-C, 41A-B, 42 and 43, in one or more examples, a method 500 (see Fig. 5) for layup and analysis of composite materials 3502 during fabrication of a composite workpiece 300 includes receiving 502 design data 3634 for the layup of the composite material 3502. The composite workpiece 300 decomposed into multiple design zones 302. The design data 3634 including localized zone data 3702 for the multiple design zones 302. At 504, the design data 3634 is processed for multiple layers 3522, 3524 of the composite workpiece 300 to determine as-planned fiber volume fill characteristics 3636 for the design zones 302 of each layer 3522, 3524 individually and for the multiple layers 3522, 3524 collectively. At 506, a layer 3522 of the composite material 3502 for the composite workpiece 300 is laid up based on the localized zone data 3702 for the layer 3522. At 508, as-built data 3638 for the layer 3522 is detected using a quality detection device 3520. The as-built data 3638 is divided into an as-built grid structure 4300 that includes a plurality of as-built grid cells 4302.

In some examples of the method 500, the layer 3522 of the composite material 3502 is laid up on a layup mandrel 3518 in a fabrication cell 3514. In some examples of the method 500, the detecting 508 of the as-built data 3638 is performed while the layer 3522 is on a layup mandrel 3518. In some examples of the method 500, the composite material 3502 includes a reinforcement material and a matrix material. In some examples, the reinforcement material includes fiber materials, and the matrix material includes resin material. In some examples, the fiber materials include unidirectional fiber materials. In some examples of the method 500, the design data 3634 for the layup includes layer build information 3706. In some examples of the method 500, the design data 3634 for the layup includes dimensional information 3708 for the composite material 3502, orientation information 3710 for the composite material 3502, dimensional information 3708 for the composite workpiece 300, contour information 3712 for the composite workpiece 300 or any other suitable design data in any suitable combination. In some examples of the method 500, the design data 3634 for the layup includes design layer locational information 3714 for at least a portion of the design data 3634.

In some examples of the method 500, the localized zone data 3702 for the layup includes zone locational information 3716 for at least a portion of the localized zone data 3702. In some examples of the method 500, the localized zone data 3702 for the layup permits different localized design parameters and different localized design requirements to be specified for different design zones 302 in the composite workpiece 300. In some examples of the method 500, the localized zone data 3702 for the layup permits different localized design parameters and different localized design requirements to be specified for different layers of the composite material 3502 in the composite workpiece 300. In some examples of the method 500, the localized grid data 3704 for the layup includes design grid structure locational information 3718 and design grid data cell locational information 3720 for at least a portion of the localized grid data 3704. In some examples of the method 500, the plurality of design grid cells 404 in a given design grid structure 402 permit different localized design grid parameters and different localized design grid requirements to be specified for different design grid cells 404 in a given design grid structure 402.

In some examples of the method 500, the plurality of design grid cells 404 in a given design grid structure 402 permit different localized design grid parameters and different localized design grid requirements to be specified for different layers of the composite material 3502 in the composite workpiece 300. In some examples of the method 500, each layer 3522, 3524 of the multiple layers 3522, 3524 includes at least one of a ply 4002 of the composite material 3502, a plurality of tows 4005 of the composite material 3502, and a plurality of courses 4006 of tows 4005 of the composite material 3502. In some examples of the method 500, the as-planned fiber volume fill characteristics 3636 take into account planned overlaps 4104 and planned gaps 4102 for each layer 3522, 3524 of the multiple layers 3522, 3524.

In some examples of the method 500, the as-built data 3638 for each layer 3522, 3524 of the multiple layers 3522, 3524 includes three-dimensional surface information 3902 representative of a surface of the corresponding layer to capture actual overlaps 4104 and actual gaps 4102 of the corresponding layer. In some examples of the method 500, the quality detection device 3520 includes a profilometer 4202, a vision system 4204 or any other suitable quality detection device in any suitable combination. In some examples of the method 500, the as-built data 3638 includes as-built layer locational information 3904. In some examples of the method 500, the as-built grid structure 4300 for the composite workpiece 300 includes a plurality of as-built grid cells 4302 for each layer 3522, 3524 of the multiple layers 3522, 3524. In some examples, the as-built data 3638 includes as-built grid cell locational information 3906.

In some examples, the method 500 also includes processing 510 the as-built data 3638 for the layer 3522 to determine as-built fiber volume fill characteristics 3640 of the layer 3522. The as-built fiber volume fill characteristics 3640 stored in the plurality of as-built grid cells 4302. At 512, the as-built fiber volume fill characteristics 3640 for the layer 3522 are compared to the as-planned fiber volume fill characteristics 3636 to determine projected fiber volume fill ratios 3642.

With reference again to Figs. 3, 5, 6 and 35-37, in one or more examples, a method 600 (see Fig. 6) for layup and analysis of composite materials 3502 during fabrication of a composite workpiece 300 includes the method 500 of Fig. 5 and continues from 512 to 602 where subsequent layers 3524 of the composite material 3502 for the composite workpiece 300 are laid up based on the localized zone data 3702 for the subsequent layers 3524. At 604, as-built data 3638 for each subsequent layer 3524 is detected after the laying up 602 of the corresponding subsequent layer 3524 using a quality detection device 3520. At 606, the as-built data 3638 for the subsequent layers 3524 is processed to determine subsequent as-built fiber volume fill characteristics 3640 for each of the subsequent layers 3524. At 608, the as-built fiber volume fill characteristics 3640 for the layer 3522 and for each of the subsequent layers 3524 are processed to determine through-thickness as-built fiber volume fill characteristics 3641 for the design zones 302 of each layer 3522, 3524 individually and for the multiple layers 3522, 3524 collectively.

With reference again to Figs. 3, 5, 7, 35, 36 and 41A-B, in one or more examples, a method 700 (see Fig. 7) for layup and analysis of composite materials 3502 during fabrication of a composite workpiece 300 includes the method 500 of Fig. 5 and continues from 512 to 702 where the laying up 506, the detecting 508, the processing 510, and the comparing 512 is repeated for each subsequent layer 3524 of the multiple layers 3522, 3524. At 704, the projected fiber volume fill ratios 3642 for the multiple layers 3522, 3524 are processed to determine a through-thickness projected fiber volume fill ratio 3644 for the design zones 302 of each layer 3522, 3524 individually and for the multiple layers 3522, 3524 collectively. In some examples of the method 700, the as-built fiber volume fill characteristics 3640 for each layer 3522, 3524 of the multiple layers 3522, 3524 take into account measured overlaps 4104 and measured gaps 4102 for the corresponding layer of the multiple layers 3522, 3524. In some examples of the method 700, the through-thickness projected fiber volume fill ratio 3644 is determined for any combination of consecutive multiple layers 3522, 3524 of the composite workpiece 300.

With reference again to Figs. 3, 5, 7, 8, 35 and 36, in one or more examples, a method 800 (see Fig. 8) for layup and analysis of composite materials 3502 during fabrication of a composite workpiece 300 includes the method 500 of Fig. 5, the method 700 of Fig. 7 and continues from 704 of Fig. 7 to 802 where fiber volume fill ratio requirements 3646 are received for each layer 3522, 3524 individually and for the multiple layers 3522, 3524 collectively. At 804, the projected fiber volume fill ratios 3642 for each layer 3522, 3524 individually are compared to the fiber volume fill ratio requirements 3646 for the corresponding layer to determine a risk probability 3648 of not achieving the fiber volume fill ratio requirements 3646 for the composite workpiece 300 after the laying up 506 of each layer 3522, 3524. At 806, after the laying up 506 of each subsequent layer 3524, the risk probability 3648 for each layer 3524 is processed to determine a through-thickness risk probability 3650 for current layers 4304 on a layup mandrel 3518. In some examples, the method 800 also includes receiving 808 a risk threshold 3652 for the risk probability 3648 at each layer 3522, 3524 individually and for the multiple layers 3522, 3524 collectively to categorize the risk probability 3648 as acceptable or unacceptable. At 810, the risk probability 3648 after the laying up 506 of each layer 3522, 3524 is compared to the risk threshold 3652 for the risk probability 3648 at the corresponding layer. At 812, after the laying up 506 of each subsequent layer 3524, the risk probability 3648 for each layer 3524 is processed to determine a through-thickness risk probability 3650 for the current layers 4304 on the layup mandrel 3518 and the through-thickness risk probability 3650 is compared to the corresponding risk threshold 3652 for the current layers 4304 on the layup mandrel 3518.

With reference again to Figs. 3, 5, 7-10, 35 and 36, in one or more examples, a method 900 (see Fig. 9) for layup and analysis of composite materials 3502 during fabrication of a composite workpiece 300 includes the method 500 of Fig. 5, the method 700 of Fig. 7, the method 800 of Fig. 8 and continues from 812 of Fig. 8 to 902 if the through-thickness risk probability 3650 for the current layers 4304 on the layup mandrel 3518 exceeds the risk threshold 3652. In these and certain other examples, the through-thickness risk probability 3650 is unacceptable and the method 900 includes optimizing 902 the design data 3634 to form optimized design data 3654 for the layup of subsequent layers 3524 of the composite material 3502 during the fabrication of the composite workpiece 300 to reduce the through-thickness risk probability 3650 of not achieving the fiber volume fill ratio requirements 3646 for the composite workpiece 300 after the laying up 506 of the subsequent layers 3524. At 904, the optimized design data 3654 for the subsequent layers 3524 of the layup is processed to determine as-planned fiber volume fill characteristics 3636 for the subsequent layers 3524. At 906, a next layer 4306 of the composite material 3502 is laid up over the current layers 4304 on the layup mandrel 3518 based on the optimized design data 3654.

In some examples of the method 900, the optimizing 902 of the design data 3634 includes optimizing 1002 (see Fig. 10) path planning for at least a portion of a remainder of the composite workpiece 300 to form an optimized path plan 3656 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300. In some examples of the method 900, the optimizing 902 of the design data 3634 includes optimizing 1004 (see Fig. 10) fiber volume fill ratio requirements 3646 for at least a portion of a remainder of the composite workpiece 300 to form an optimized fiber volume fill ratio requirement 3658 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300. In some example sof the method 900, the optimizing 902 of the design data 3634 includes optimizing 1006 (see Fig. 10) numerical control programming for at least a portion of a remainder of the composite workpiece 300 to form an optimized numerical control program 3660 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300.

With reference again to Figs. 3, 5, 7, 8, 11, 35 and 36, in one or more examples, a method 1100 (see Fig. 11) for layup and analysis of composite materials 3502 during fabrication of a composite workpiece 300 includes the method 500 of Fig. 5, the method 700 of Fig. 7, the method 800 of Fig. 8 and continues from 812 of Fig. 8 to 1102 if the through-thickness risk probability 3650 for the current layers 4304 on the layup mandrel 3518 does not exceed the risk threshold 3652. In these and certain other examples, the through-thickness risk probability 3650 is acceptable and the method 1100 includes processing 1102 the design data 3634 for a next layer 4306 of the layup to determine as-planned fiber volume fill characteristics 3636 of the next layer 4306. At 1104, the next layer 4306 of the composite material 3502 is laid up over the current layers 4304 on the layup mandrel 3518 based on the design data 3634.

With reference again to Figs. 3, 5, 7, 12, 35 and 36, in one or more examples, a method 1200 (see Fig. 12) for layup and analysis of composite materials 3502 during fabrication of a composite workpiece 300 includes the method 500 of Fig. 5, the method 700 of Fig. 7 and continues from 704 of Fig. 7 to 1202 where fiber volume fill ratio requirements 3646 are received for one or more design zone 302 of each layer 3522, 3524 individually and for the multiple layers 3522, 3524 collectively. At 1204, the projected fiber volume fill ratios 3642 for the one or more design zone 302 are compared to the fiber volume fill ratio requirements 3646 for the corresponding design zone 302 to determine a risk probability 3648 of not achieving the fiber volume fill ratio requirements 3646 for the corresponding design zone 302 of the composite workpiece 300 after the laying up 506 of each layer 3522, 3524. At 1206, after the laying up 506 of each subsequent layer 3524, the risk probability 3648 for the corresponding design zone 302 of each layer 3524 is processed to determine a through-thickness risk probability 3650 for current layers 4304 on a layup mandrel 3518. In some examples, the method 1200 also includes receiving 1208 a risk threshold 3652 for the risk probability 3648 of the one or more design zone 302 at each layer 3522, 3524 individually and for the multiple layers 3522, 3524 collectively to categorize the risk probability 3648 as acceptable or unacceptable at each of the one or more design zone 302. At 1210, the risk probability 3648 after the laying up 506 of each layer 3522, 3524 is compared to the risk threshold 3652 for the risk probability 3648 at the corresponding design zone 302. At 1212, after the laying up 506 of each subsequent layer 3524, the risk probability 3648 for each of the one or more design zone 302 for each layer 3524 is processed to determine a through-thickness risk probability 3650 for the current layers 4304 on the layup mandrel 3518 and the through-thickness risk probability 3650 is compared to the corresponding risk threshold 3652 for the current layers 4304 on the layup mandrel 3518.

With reference again to Figs. 3, 5, 7, 12-14, 35 and 36, in one or more examples, a method 1300 (see Fig. 13) for layup and analysis of composite materials 3502 during fabrication of a composite workpiece 300 includes the method 500 of Fig. 5, the method 700 of Fig. 7, the method 1200 of Fig. 12 and continues from 1212 of Fig. 12 to 1302 if the through-thickness risk probability 3650 for the current layers 4304 on the layup mandrel 3518 exceeds the risk threshold 3652. In these and certain other examples, the through-thickness risk probability 3650 is unacceptable and the method 1300 includes optimizing 1302 the design data 3634 to form optimized design data 3654 for the layup of the one or more design zone 302 in subsequent layers 3524 of the composite material 3502 during the fabrication of the composite workpiece 300 to reduce the through-thickness risk probability 3650 of not achieving the fiber volume fill ratio requirements 3646 for the one or more design zone 302 in the composite workpiece 300 after the laying up 506 of the subsequent layers 3524. At 1304, the optimized design data 3654 for the one or more design zone 302 in the subsequent layers 3524 of the layup is processed to determine as-planned fiber volume fill characteristics 3636 for the subsequent layers 3524. At 1306, a next layer 4306 of the composite material 3502 is laid up over the current layers 4304 on the layup mandrel 3518 based on the optimized design data 3654 for the one or more design zone 302.

In some examples of the method 1300, the optimizing 1302 of the design data 3634 includes optimizing 1402 (see Fig. 14) path planning for the layup of the one or more design zone 302 for at least a portion of a remainder of the subsequent layers 3524 in the composite workpiece 300 to form an optimized path plan 3656 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300. In some examples of the method 1300, the optimizing 1302 of the design data 3634 includes optimizing 1404 (see Fig. 14) fiber volume fill ratio requirements 3646 for the layup of the one or more design zone 302 for at least a portion of a remainder of the subsequent layers 3524 in the composite workpiece 300 to form an optimized fiber volume fill ratio requirement 3658 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300. In some examples of the method 1300, the optimizing 1302 of the design data 3634 includes optimizing 1406 (see Fig. 14) numerical control programming for the layup of the one or more design zone 302 for at least a portion of a remainder of the subsequent layers 3524 in the composite workpiece 300 to form an optimized numerical control program 3660 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300.

With reference again to Figs. 3, 5, 7, 12, 15, 35 and 36, in one or more examples, a method 1500 (see Fig. 15) for layup and analysis of composite materials 3502 during fabrication of a composite workpiece 300 includes the method 500 of Fig. 5, the method 700 of Fig. 7, the method 1200 of Fig. 12 and continues from 1212 of Fig. 12 to 1502 if the through-thickness risk probability 3650 for the current layers 4304 on the layup mandrel 3518 does not exceed the risk threshold 3652. In these and certain other examples, the through-thickness risk probability 3650 is acceptable and the method 1500 includes processing 1502 the design data 3634 for a next layer 4306 of the layup to determine as-planned fiber volume fill characteristics 3636 of the next layer 4306. At 1504, the next layer 4306 of the composite material 3502 is laid up over the current layers 4304 on the layup mandrel 3518 based on the design data 3634.

With reference again to Figs. 3-5, 7, 16 and 35-37, in one or more examples, a method 1600 (see Fig. 16) for layup and analysis of composite materials 3502 during fabrication of a composite workpiece 300 includes the method 500 of Fig. 5 and the method 700 of Fig. 7. In these and certain other examples, at least a portion of the multiple design zones 302 are further decomposed into a design grid structure 402 with a plurality of design grid cells 404 for the corresponding design zone 302. The design data 3634 also includes localized grid data 3704 for the design grid cells 404 of the design grid structures 402. In the method 500 of Fig. 5, the processing 504 of the design data 3634 for the multiple layers 3522, 3524 of the composite workpiece 300 also determines the as-planned fiber volume fill characteristics 3636 for the design grid cells 404 of the design grid structures 402 of each layer 3522, 3524 individually and for the multiple layers 3522, 3524 collectively. At 506 of Fig. 5, the laying up 506 of the layer 3522 is also based on the localized grid data 3704 for the layer 3522. In these and certain other examples, the method 500 of Fig. 5 also includes processing 510 the as-built data 3638 for the layer 3522 to determine as-built fiber volume fill characteristics 3640 of the layer 3522, the as-built fiber volume fill characteristics 3640 stored in the plurality of as-built grid cells 4302. At 512, the as-built fiber volume fill characteristics 3640 for the layer 3522 are compared to the as-planned fiber volume fill characteristics 3636 to determine projected fiber volume fill ratios 3642. In these and certain other examples, the method 700 of Fig. 7 includes repeating 702 the laying up 506, the detecting 508, the processing 510, and the comparing 512 for each subsequent layer 3524 of the multiple layers 3522, 3524. At 704, the projected fiber volume fill ratios 3642 for the multiple layers 3522, 3524 are processed to determine a through-thickness projected fiber volume fill ratio 3644 for the design zones 302 and the design grid structures 402 of each layer 3522, 3524 individually and for the multiple layers 3522, 3524 collectively.

The method 1600 continues from 704 of Fig. 7 to 1602 where fiber volume fill ratio requirements 3646 are received for one or more design grid cell 404 in one or more design grid structure 402 of each layer 3522, 3524 individually and for the multiple layers 3522, 3524 collectively. At 1604, the projected fiber volume fill ratios 3642 for the one or more design grid cell 404 are compared to the fiber volume fill ratio requirements 3646 for the corresponding design grid cell 404 to determine a risk probability 3648 of not achieving the fiber volume fill ratio requirements 3646 for the corresponding design grid cell 404 of the composite workpiece 300 after the laying up 506 of each layer 3522, 3524. At 1606, after the laying up 506 of each subsequent layer 3524, the risk probability 3648 for the corresponding design grid cell 404 of each layer 3524 is processed to determine a through-thickness risk probability 3650 for current layers 4304 on a layup mandrel 3518. In some examples , the method 1600 also includes receiving 1608 a risk threshold 3652 for the risk probability 3648 for one or more design grid cell 404 in one or more design grid structure 402 of each layer 3522, 3524 individually and for the multiple layers 3522, 3524 collectively to categorize the risk probability 3648 as acceptable or unacceptable at each of the one or more design grid cell 404. At 1610, the risk probability 3648 after the laying up 506 of each layer 3522, 3524 is compared to the risk threshold 3652 for the risk probability 3648 at the corresponding design grid cell 404. At 1612, after the laying up 506 of each subsequent layer 3524, the risk probability 3648 for the corresponding design grid cell 404 of each layer 3524 is processed to determine a through-thickness risk probability 3650 for the current layers 4304 on the layup mandrel 3518 and the through-thickness risk probability 3650 is compared to the corresponding risk threshold 3652 for the current layers 4304 on the layup mandrel 3518.

With reference again to Figs. 3-5, 7, 16-18, 35 and 36, in one or more examples, a method 1700 (see Fig. 17) for layup and analysis of composite materials 3502 during fabrication of a composite workpiece 300 includes the method 500 of Fig. 5, the method 700 of Fig. 7, the method 1600 of Fig. 16 and continues from 1612 of Fig. 16 to 1702 if the through-thickness risk probability 3650 for the current layers 4304 on the layup mandrel 3518 exceeds the risk threshold 3652. In these and certain other examples, the through-thickness risk probability 3650 is unacceptable and the method 1700 includes optimizing 1702 the design data 3634 to form optimized design data 3654 for the layup of the one or more design grid cell 404 in subsequent layers 3524 of the composite material 3502 during the fabrication of the composite workpiece 300 to reduce the through-thickness risk probability 3650 of not achieving the fiber volume fill ratio requirements 3646 for the one or more design grid cell 404 in the composite workpiece 300 after the laying up 506 of the subsequent layers 3524. At 1704, the optimized design data 3654 for the one or more design grid cell 404 in the subsequent layers 3524 of the layup is processed to determine as-planned fiber volume fill characteristics 3636 for the subsequent layers 3524. At 1706, a next layer 4306 of the composite material 3502 is laid up over the current layers 4304 on the layup mandrel 3518 based on the optimized design data 3654 for the one or more design grid cell 404.

In some examples of the method 1700, the optimizing 1702 of the design data 3634 includes optimizing 1802 (see Fig. 18) path planning for the layup of the one or more design grid cell 404 for at least a portion of a remainder of the subsequent layers 3524 in the composite workpiece 300 to form an optimized path plan 3656 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300. In some examples of the method 1700, the optimizing 1702 of the design data 3634 includes optimizing 1804 (see Fig. 18) fiber volume fill ratio requirements 3646 for the layup of the one or more design grid cell 404 for at least a portion of a remainder of the subsequent layers 3524 in the composite workpiece 300 to form an optimized fiber volume fill ratio requirement 3658 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300. In some examples of the method 1700, the optimizing 1702 of the design data 3634 includes optimizing 1806 (see Fig. 18) numerical control programming for the layup of the one or more design grid cell 404 for at least a portion of a remainder of the subsequent layers 3524 in the composite workpiece 300 to form an optimized numerical control program 3660 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300.

With reference again to Figs. 3, 5, 7, 16, 19, 35 and 36, in one or examples, a method 1900 (see Fig. 19) for layup and analysis of composite materials 3502 during fabrication of a composite workpiece 300 includes the method 500 of Fig. 5, the method 700 of Fig. 7, the method 1600 of Fig. 16 and continues from 1612 of Fig. 16 to 1902 if the through-thickness risk probability 3650 for the current layers 4304 on the layup mandrel 3518 does not exceed the risk threshold 3652. In these and certain other examples, the through-thickness risk probability 3650 is acceptable and the method 1900 includes processing 1902 the design data 3634 for a next layer 4306 of the layup to determine as-planned fiber volume fill characteristics 3636 of the next layer 4306. At 1904, the next layer 4306 of the composite material 3502 is laid up over the current layers 4304 on the layup mandrel 3518 based on the design data 3634.

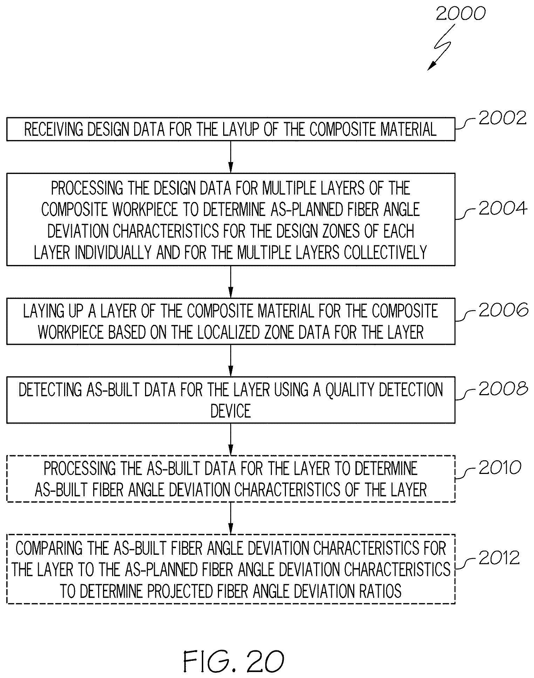

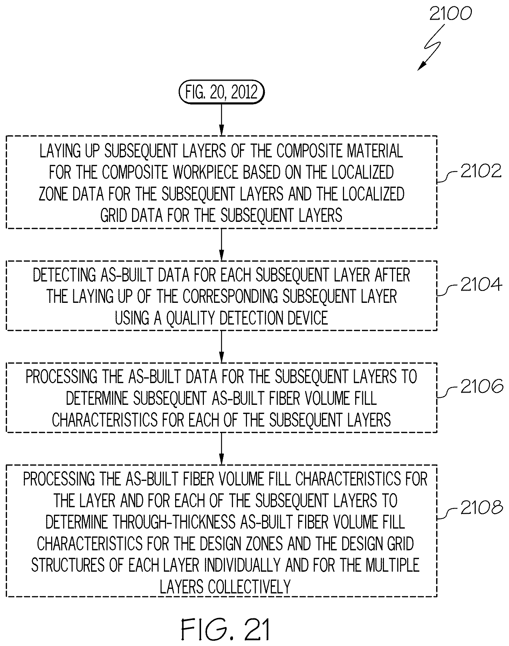

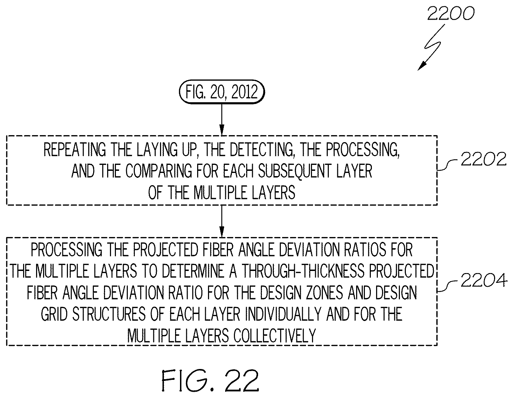

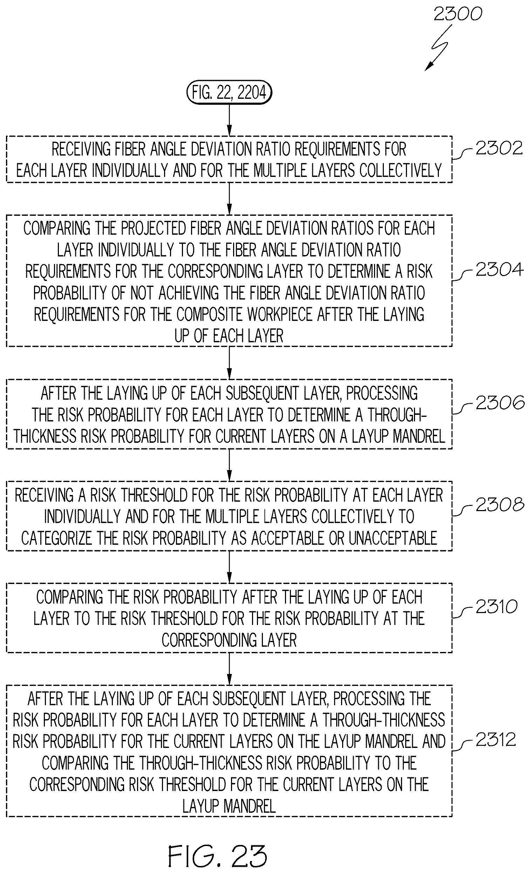

Referring generally to Figs. 3, 4, 20-37 and 43, by way of examples, the present disclosure is directed to methods 2000, 2100, 2200, 2300, 2400, 2600, 2700, 2800, 3000, 3100, 3200, 3400 for layup and analysis of composite materials 3502 during fabrication of composite workpieces 300. Fig. 3 is a side view of an example of a composite workpiece 300 that includes multiple design zones 302. Fig. 4 is a top view of an example of a portion of the composite workpiece 300 of Fig. 3 that includes a portion of the multiple design zones 302 of Fig. 3 with each design zone 302 divided into a design grid structure 402 having a plurality of design grid cells 404. Fig. 20 is an example of the method 2000 for layup and analysis of composite material 3502 during fabrication of a composite workpiece 300. Fig. 21, in combination with Fig. 20, is an example of the method 2100 for layup and analysis of composite material 3502 during fabrication of a composite workpiece 300. Fig. 22, in combination with Fig. 20, is an example of the method 2200 for layup and analysis of composite material 3502 during fabrication of a composite workpiece 300. Fig. 23, in combination with Figs. 20 and 22, is an example of the method 2300 for layup and analysis of composite material 3502 during fabrication of a composite workpiece 300.

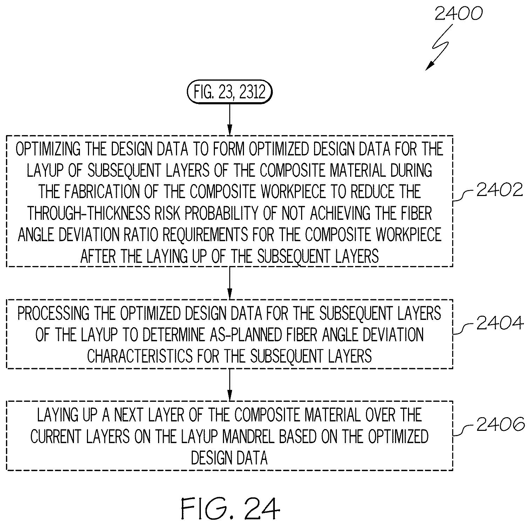

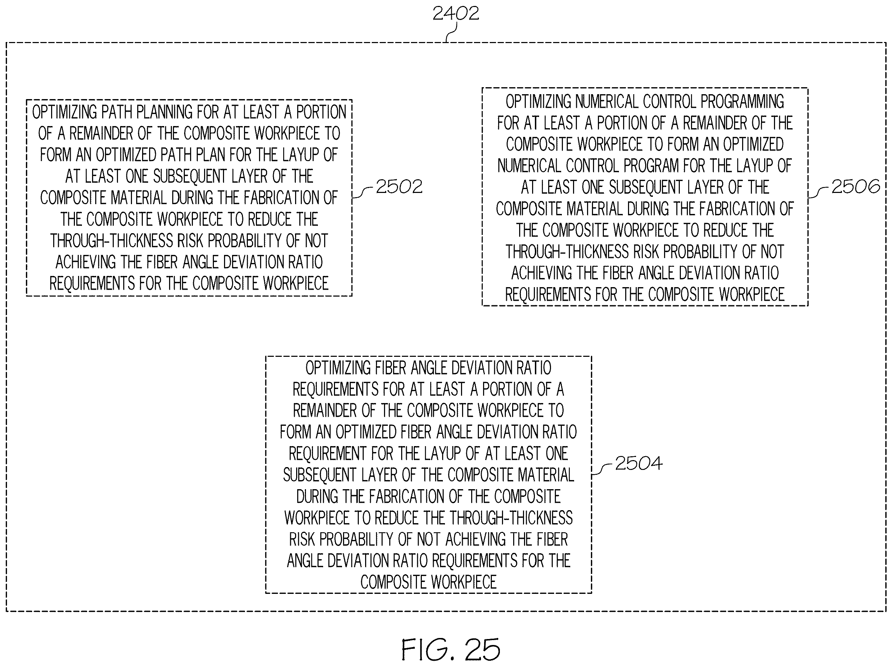

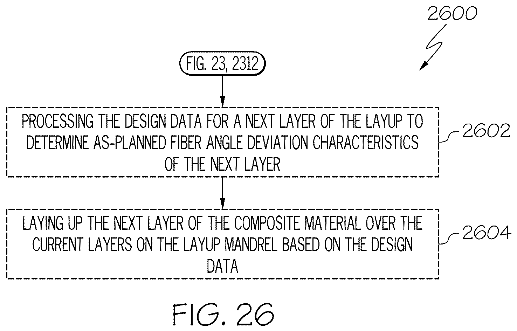

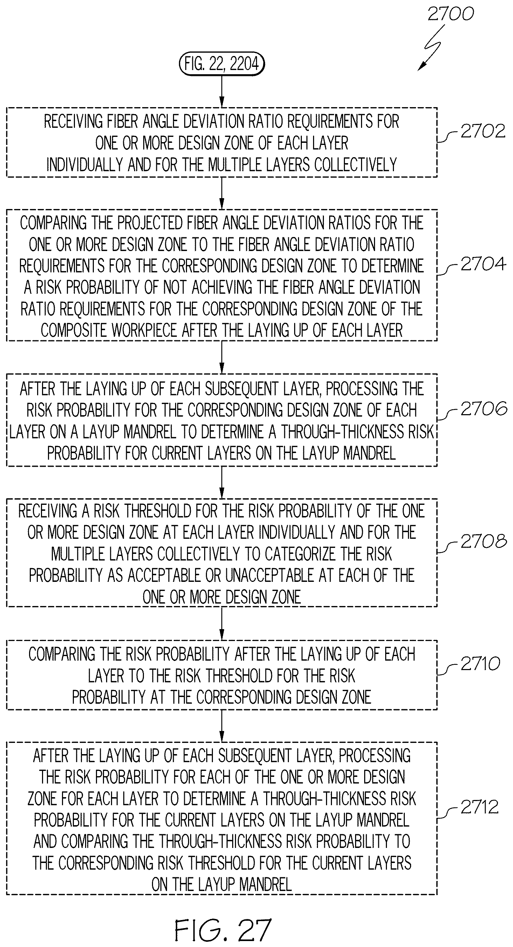

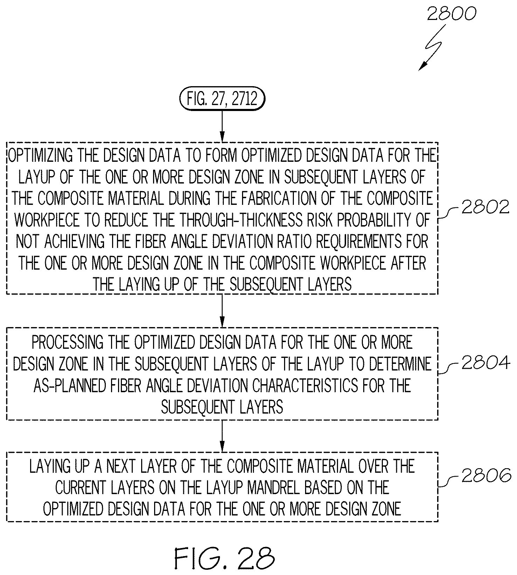

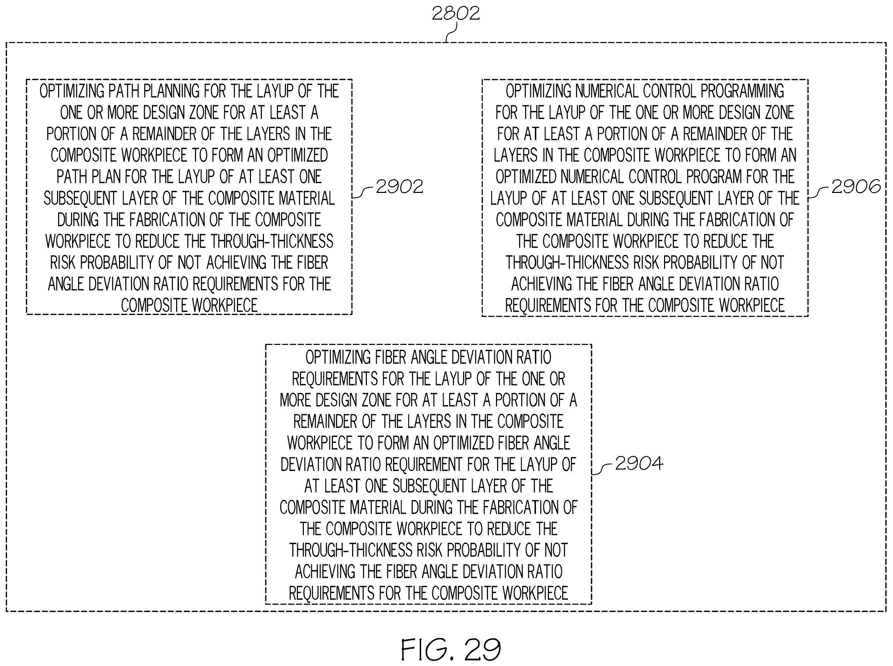

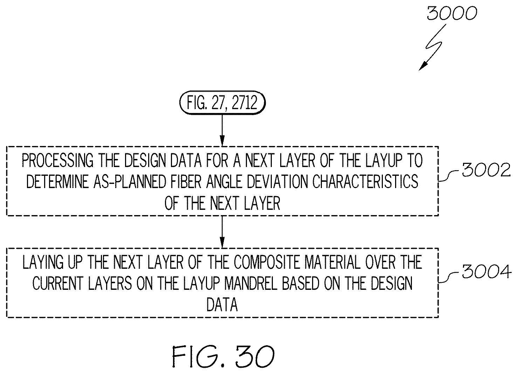

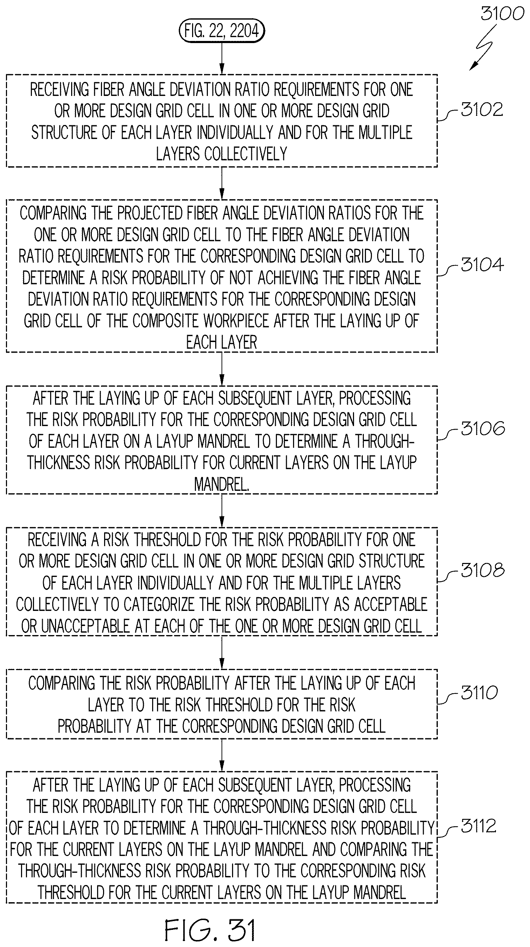

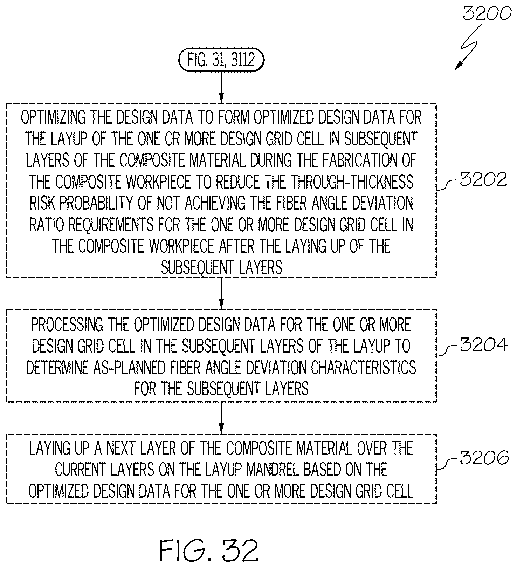

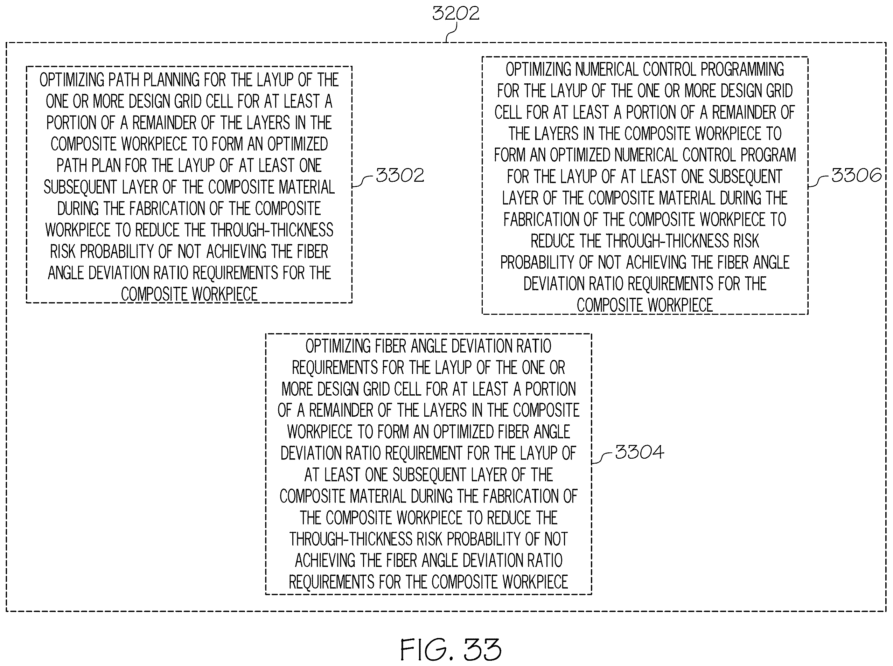

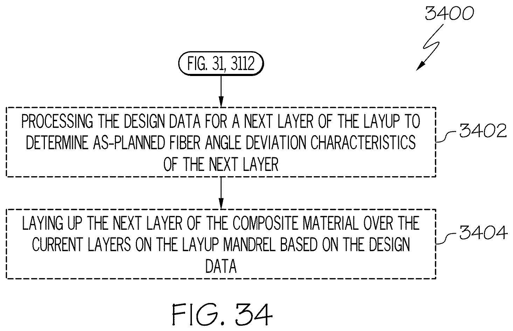

Fig. 24, in combination with Figs. 20, 22 and 23, is an example of the method 2400 for layup and analysis of composite material 3502 during fabrication of a composite workpiece 300. Fig. 25 provides examples of the optimizing 2402 of the design data 3634 of Fig. 24. Fig. 26, in combination with Figs. 20, 22 and 23, provides an example of the method 2600 for layup and analysis of composite material 3502 during fabrication of a composite workpiece 300. Fig. 27, in combination with Figs. 20 and 22, provides an example of the method 2700 for layup and analysis of composite material 3502 during fabrication of a composite workpiece 300. Fig. 28, in combination with Figs. 20, 22 and 27, provides an example of the method 2800 for layup and analysis of composite material 3502 during fabrication of a composite workpiece 300. Fig. 29 provides examples of the optimizing 2802 of the design data 3634 of Fig. 28. Fig. 30, in combination with Figs. 20, 22 and 27, provides an example of the method 3000 for layup and analysis of composite material 3502 during fabrication of a composite workpiece 300. Fig. 31, in combination with Figs. 20 and 22, provides an example of the method 3100 for layup and analysis of composite material 3502 during fabrication of a composite workpiece 300. Fig. 32, in combination with Figs. 20, 22 and 31, provides an example of the method 3200 for layup and analysis of composite material 3502 during fabrication of a composite workpiece 300. Fig. 33 provides examples of the optimizing 3202 of the design data 3634 of Fig. 32. Fig. 34, in combination with Figs. 20, 22 and 31, provides an example of the method 3400 for layup and analysis of composite material 3502 during fabrication of a composite workpiece 300.

Fig. 35 is a functional block diagram of an example of an automated system 3500 for layup and analysis of composite material 3502 during fabrication of a composite workpiece 300. Fig. 36 is a functional block diagram of an example of the analytical computing device 3504 of Fig. 35. Fig. 37 is a block diagram showing examples of design data 3634, localized zone data 3702 and localized grid data 3704 used in conjunction with layup and analysis of composite material 3502 during fabrication of a composite workpiece 300. Fig. 43 is a functional diagram showing an example of an as-built grid structure 4300 with as-built grid cells 4302 for a composite workpiece 300 used in conjunction with layup and analysis of composite material 3502 during fabrication of a composite workpiece 300.

With reference again to Figs. 3, 20, 35-37 and 43, in one or more examples, a method 2000 (see Fig. 20) for layup and analysis of composite material 3502 during fabrication of a composite workpiece 300 includes receiving 2002 design data 3634 for the layup of the composite material 3502. The composite workpiece 300 decomposed into multiple design zones 302. The design data 3634 including localized zone data 3702 for the multiple design zones 302. At 2004, the design data 3634 for multiple layers 3522, 3524 of the composite workpiece 300 is processed to determine as-planned fiber angle deviation characteristics 3662 for the design zones 302 of each layer 3522, 3524 individually and for the multiple layers 3522, 3524 collectively. At 2006, a layer 3522 of the composite material 3502 for the composite workpiece 300 is laid up based on the localized zone data 3702 for the layer 3522. At 2008, as-built data 3638 for the layer 3522 is detected using a quality detection device 3520. The as-built data 3638 divided into an as-built grid structure 4300 including a plurality of as-built grid cells 4302.

In some examples of the method 2000, the layer 3522 of the composite material 3502 is laid up on a layup mandrel 3518 in a fabrication cell 3514. In some examples of the method 2000, the detecting 2008 of the as-built data 3638 is performed while the layer 3522 is on a layup mandrel 3518.

In some examples mple of the method 2000, the as-planned fiber angle deviation characteristics 3662 take into account planned orientation of unidirectional fibers in each layer 3522, 3524 of the multiple layers 3522, 3524. In some examples, the as-planned fiber angle deviation characteristics 3662 take into account planned quasi-isotropic requirements for groups of layers within the multiple layers 3522, 3524. In some examples, the groups of layers within the multiple layers 3522, 3524 include a first group type with a minimum of four layers of composite material 3502, a second group type with a minimum of three layers of composite material 3502, a third group type with a minimum of two layers of composite material 3502 or any suitable group type with multiple layers in any suitable combination. In some examples, the groups of layers within the multiple layers 3522, 3524 include a four-layer group type in which the orientations of unidirectional fibers are 0 degrees, 90 degrees, +45 degrees and -45 degrees for groups of four layers. In some examples, the groups of layers within the multiple layers 3522, 3524 include a three-layer group type in which the orientations of unidirectional fibers are 0 degrees, +60 degrees and -60 degrees for groups of three layers. In some examples, the groups of layers within the multiple layers 3522, 3524 include a two-layer group type in which the orientations of unidirectional fibers are 0 degrees and 90 degrees for groups of two layers.

In some examples, the method 2000 also includes processing 2010 the as-built data 3638 for the layer 3522 to determine as-built fiber angle deviation characteristics 3664 of the layer 3522. The as-built fiber angle deviation characteristics 3664 stored in the plurality of as-built grid cells 4302. At 2012, the as-built fiber angle deviation characteristics 3664 for the layer 3522 are compared to the as-planned fiber angle deviation characteristics 3662 to determine projected fiber angle deviation ratios 3666.

With reference again to Figs. 3, 20, 21 and 35-37, in one or more examples, a method 2100 (see Fig. 21) for layup and analysis of composite materials 3502 during fabrication of a composite workpiece 300 includes the method 2000 of Fig. 20 and continues from 2012 to 2102 where subsequent layers 3524 of the composite material 3502 for the composite workpiece 300 are laid up based on the localized zone data 3702 for the subsequent layers 3524. At 2104, as-built data 3638 for each subsequent layer 3524 is detected after the laying up 2102 of the corresponding subsequent layer 3524 using a quality detection device 3520. At 2106, the as-built data 3638 for the subsequent layers 3524 is processed to determine subsequent as-built fiber volume fill characteristics 3640 for each of the subsequent layers 3524. At 2108, the as-built fiber volume fill characteristics 3640 for the layer 3522 and for each of the subsequent layers 3524 is processed to determine through-thickness as-built fiber volume fill characteristics 3641 for the design zones 302 of each layer 3522, 3524 individually and for the multiple layers 3522, 3524 collectively.

With reference again to Figs. 3, 20, 22, 35 and 36, in one or more examples, a method 2200 (see Fig. 22) for layup and analysis of composite materials 3502 during fabrication of a composite workpiece 300 includes the method 2000 of Fig. 20 and continues from 2012 to 2202 where the laying up 2006, the detecting 2008, the processing 2010, and the comparing 2012 are repeated for each subsequent layer 3524 of the multiple layers 3522, 3524. At 2204, the projected fiber angle deviation ratios 3666 for the multiple layers 3522, 3524 are processed to determine a through-thickness projected fiber angle deviation ratio 3668 for the design zones 302 of each layer 3522, 3524 individually and for the multiple layers 3522, 3524 collectively. In some examples of the method 2200, the as-built fiber angle deviation characteristics 3664 for each layer 3522, 3524 of the multiple layers 3522, 3524 take into account measured orientation of unidirectional fibers in the corresponding layer of the multiple layers 3522, 3524. In some examples of the method 2200, a through-thickness projected fiber angle deviation ratio 3668 is determined for any combination of consecutive multiple layers 3522, 3524 of the composite workpiece 300. In some examples of the method 2200, the multiple layers 3522, 3524 include a four-layer group type and a through-thickness projected fiber angle deviation ratio 3668 is determined for four consecutive layers of the composite workpiece 300 or any combination of consecutive layers that is a multiple of four. In some examples of the method 2200, the multiple layers 3522, 3524 include a three-layer group type and a through-thickness projected fiber angle deviation ratio 3668 is determined for three consecutive layers of the composite workpiece 300 or any combination of consecutive layers that is a multiple of three. In some examples of the method 2200, the multiple layers 3522, 3524 include a two-layer group type and a through-thickness projected fiber angle deviation ratio 3668 is determined for two consecutive layers of the composite workpiece 300 or any combination of consecutive layers that is a multiple of two.

With reference again to Figs. 20, 22, 23, 35 and 36, in one or more examples, a method 2300 (see Fig. 23) for layup and analysis of composite materials 3502 during fabrication of a composite workpiece 300 includes the method 2000 of Fig. 20, the method 2200 of Fig. 22 and continues from 2204 of Fig. 22 to 2302 where fiber angle deviation ratio requirements 3670 are received for each layer 3522, 3524 individually and for the multiple layers 3522, 3524 collectively. At 2304, the projected fiber angle deviation ratios 3666 for each layer 3522, 3524 individually are compared to the fiber angle deviation ratio requirements 3670 for the corresponding layer to determine a risk probability 3648 of not achieving the fiber angle deviation ratio requirements 3670 for the composite workpiece 300 after the laying up 2006 of each layer 3522, 3524. At 2306, after the laying up 2006 of each subsequent layer 3524, the risk probability 3648 for each layer 3524 is processed to determine a through-thickness risk probability 3650 for current layers 4304 on a layup mandrel 3518.

In some examples, the method 2300 also includes receiving 2308 a risk threshold 3652 for the risk probability 3648 at each layer 3522, 3524 individually and for the multiple layers 3522, 3524 collectively to categorize the risk probability 3648 as acceptable or unacceptable. At 2310, the risk probability 3648 after the laying up 2006 of each layer 3522, 3524 is compared to the risk threshold 3652 for the risk probability 3648 at the corresponding layer. At 2312, after the laying up 2006 of each subsequent layer 3524, the risk probability 3648 for each layer 3524 is processed to determine a through-thickness risk probability 3650 for the current layers 4304 on the layup mandrel 3518 and the through-thickness risk probability 3650 is compared to the corresponding risk threshold 3652 for the current layers 4304 on the layup mandrel 3518.

With reference again to Figs. 3, 20, 22-25, 35 and 36, in one or more examples, a method 2400 (see Fig. 24) for layup and analysis of composite materials 3502 during fabrication of a composite workpiece 300 includes the method 2000 of Fig. 20, the method 2200 of Fig. 22, the method 2300 of Fig. 23 and continues from 2312 of Fig. 23 to 2402 if the through-thickness risk probability 3650 for the current layers 4304 on the layup mandrel 3518 exceeds the risk threshold 3652. In these and certain other examples, the through-thickness risk probability 3650 is unacceptable and the method 2400 includes optimizing 2402 the design data 3634 to form optimized design data 3654 for the layup of subsequent layers 3524 of the composite material 3502 during the fabrication of the composite workpiece 300 to reduce the through-thickness risk probability 3650 of not achieving the fiber angle deviation ratio requirements 3670 for the composite workpiece 300 after the laying up 2006 of the subsequent layers 3524. At 2404, the optimized design data 3654 for the subsequent layers 3524 of the layup is processed to determine as-planned fiber angle deviation characteristics 3662 for the subsequent layers 3524. At 2406, a next layer 4306 of the composite material 3502 is laid up over the current layers 4304 on the layup mandrel 3518 based on the optimized design data 3654.

In some examples of the method 2400, the optimizing 2402 of the design data 3634 includes optimizing 2502 (see Fig. 25) path planning for at least a portion of a remainder of the composite workpiece 300 to form an optimized path plan 3656 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300. In some examples of the method 2400, the optimizing 2402 of the design data 3634 includes optimizing 2504 (see Fig. 25) fiber angle deviation ratio requirements 3670 for at least a portion of a remainder of the composite workpiece 300 to form an optimized fiber angle deviation ratio requirement 3672 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300. In some examples of the method 2400, the optimizing 2402 of the design data 3634 includes optimizing 2506 (see Fig. 25) numerical control programming for at least a portion of a remainder of the composite workpiece 300 to form an optimized numerical control program 3660 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300.

With reference again to Figs. 3, 20, 22, 23, 26, 35 and 36, in one or more examples, a method 2600 (see Fig. 26) for layup and analysis of composite materials 3502 during fabrication of a composite workpiece 300 includes the method 2000 of Fig. 20, the method 2200 of Fig. 22, the method 2300 of Fig. 23 and continues from 2312 of Fig. 23 to 2602 if the through-thickness risk probability 3650 for the current layers 4304 on the layup mandrel 3518 does not exceed the risk threshold 3652. In these and certain other examples, the through-thickness risk probability 3650 is acceptable and the method 2600 includes processing 2602 the design data 3634 for a next layer 4306 of the layup to determine as-planned fiber angle deviation characteristics 3662 of the next layer 4306. At 2604, the next layer 4306 of the composite material 3502 is laid up over the current layers 4304 on the layup mandrel 3518 based on the design data 3634.

With reference again to Figs. 20, 22, 23, 35 and 36, in one or more examples, a method 2300 (see Fig. 23) for layup and analysis of composite materials 3502 during fabrication of a composite workpiece 300 includes the method 2000 of Fig. 20, the method 2200 of Fig. 22 and continues from 2204 of Fig. 22 to 2302 where fiber angle deviation ratio requirements 3670 are received for one or more design zone 302 of each layer 3522, 3524 individually and for the multiple layers 3522, 3524 collectively. At 2704, the projected fiber angle deviation ratios 3666 for the one or more design zone 302 are compared to the fiber angle deviation ratio requirements 3670 for the corresponding design zone 302 to determine a risk probability 3648 of not achieving the fiber angle deviation ratio requirements 3670 for the corresponding design zone 302 of the composite workpiece 300 after the laying up 2006 of each layer 3522, 3524. At 2706, after the laying up 2006 of each subsequent layer 3524, the risk probability 3648 for the corresponding design zone 302 of each layer 3524 on a layup mandrel 3518 is processed to determine a through-thickness risk probability 3650 for current layers 4304 on the layup mandrel 3518. In some examples, the method 2700 also includes receiving 2708 a risk threshold 3652 for the risk probability 3648 of the one or more design zone 302 at each layer 3522, 3524 individually and for the multiple layers 3522, 3524 collectively to categorize the risk probability 3648 as acceptable or unacceptable at each of the one or more design zone 302. At 2710, the risk probability 3648 after the laying up 2006 of each layer 3522, 3524 is compared to the risk threshold 3652 for the risk probability 3648 at the corresponding design zone 302. At 2712, after the laying up 2006 of each subsequent layer 3524, the risk probability 3648 for each of the one or more design zone 302 for each layer 3524 is processed to determine a through-thickness risk probability 3650 for the current layers 4304 on the layup mandrel 3518 and the through-thickness risk probability 3650 is compared to the corresponding risk threshold 3652 for the current layers 4304 on the layup mandrel 3518.

With reference again to Figs. 3, 20, 22, 27-29, 35 and 36, in one or more examples, a method 2800 (see Fig. 28) for layup and analysis of composite materials 3502 during fabrication of a composite workpiece 300 includes the method 2000 of Fig. 20, the method 2200 of Fig. 22, the method 2700 of Fig. 27 and continues from 2712 of Fig. 27 to 2802 if the through-thickness risk probability 3650 for the current layers 4304 on the layup mandrel 3518 exceeds the risk threshold 3652. In these and certain other examples, the through-thickness risk probability 3650 is unacceptable and the method 2800 includes optimizing 2802 the design data 3634 to form optimized design data 3654 for the layup of the one or more design zone 302 in subsequent layers 3524 of the composite material 3502 during the fabrication of the composite workpiece 300 to reduce the through-thickness risk probability 3650 of not achieving the fiber angle deviation ratio requirements 3670 for the one or more design zone 302 in the composite workpiece 300 after the laying up 2006 of the subsequent layers 3524. At 2804, the optimized design data 3654 for the one or more design zone 302 in the subsequent layers 3524 of the layup is processed to determine as-planned fiber angle deviation characteristics 3662 for the subsequent layers 3524. At 2806, a next layer 4306 of the composite material 3502 is laid up over the current layers 4304 on the layup mandrel 3518 based on the optimized design data 3654 for the one or more design zone 302.

In some examples of the method 2800, the optimizing 2802 of the design data 3634 includes optimizing 2902 (see Fig. 29) path planning for the layup of the one or more design zone 302 for at least a portion of a remainder of the subsequent layers 3524 in the composite workpiece 300 to form an optimized path plan 3656 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300. **In** some examples of the method 2800, the optimizing 2802 of the design data 3634 includes optimizing 2904 (see Fig. 29) fiber angle deviation ratio requirements 3670 for the layup of the one or more design zone 302 for at least a portion of a remainder of the subsequent layers 3524 in the composite workpiece 300 to form an optimized fiber angle deviation ratio requirement 3672 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300. In some examples of the method 2800, the optimizing 2802 of the design data 3634 includes optimizing 2906 (see Fig. 29) numerical control programming for the layup of the one or more design zone 302 for at least a portion of a remainder of the subsequent layers 3524 in the composite workpiece 300 to form an optimized numerical control program 3660 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300.

With reference again to Figs. 3, 20, 22, 27, 30, 35 and 36, in one or more examples, a method 3000 (see Fig. 30) for layup and analysis of composite materials 3502 during fabrication of a composite workpiece 300 includes the method 2000 of Fig. 20, the method 2200 of Fig. 22, the method 2700 of Fig. 27 and continues from 2712 of Fig. 27 to 3002 if the through-thickness risk probability 3650 for the current layers 4304 on the layup mandrel 3518 does not exceed the risk threshold 3652. In these and certain other examples, the through-thickness risk probability 3650 is acceptable and the method 3000 includes processing 3002 the design data 3634 for a next layer 4306 of the layup to determine as-planned fiber angle deviation characteristics 3662 of the next layer 4306. At 3004, the next layer 4306 of the composite material 3502 is laid up over the current layers 4304 on the layup mandrel 3518 based on the design data 3634.

With reference again to Figs. 3, 4, 20, 22, 31 and 35-37, in one or more examples, a method 3100 (see Fig. 31) for layup and analysis of composite materials 3502 during fabrication of a composite workpiece 300 includes the method 2000 of Fig. 20 and the method 2200 of Fig. 22. In these and certain other examples, at least a portion of the multiple design zones 302 are further decomposed into a design grid structure 402 with a plurality of design grid cells 404 for the corresponding design zone 302. The design data 3634 also includes localized grid data 3704 for the design grid cells 404 of the design grid structures 402. In the method 2000 of Fig. 20, the processing 2004 of the design data 3634 for the multiple layers 3522, 3524 of the composite workpiece 300 also determines the as-planned fiber volume fill characteristics 3636 for the design grid cells 404 of the design grid structures 402 of each layer 3522, 3524 individually and for the multiple layers 3522, 3524 collectively. At 2006 of Fig. 20, the laying up 2006 of the layer 3522 is also based on the localized grid data 3704 for the layer 3522. In these and certain other examples, the method 2000 of Fig. 20 also includes processing 2010 the as-built data 3638 for the layer 3522 to determine as-built fiber angle deviation characteristics 3664 of the layer 3522, the as-built fiber angle deviation characteristics 3664 stored in the plurality of as-built grid cells 4302. At 2012, the as-built fiber angle deviation characteristics 3664 for the layer 3522 are compared to the as-planned fiber angle deviation characteristics 3662 to determine projected fiber angle deviation ratios 3666. In these and certain other examples, the method 2200 of Fig. 22 includes repeating 2202 the laying up 2006, the detecting 2008, the processing 2010, and the comparing 2012 for each subsequent layer 3524 of the multiple layers 3522, 3524. At 2204, the projected fiber angle deviation ratios 3666 for the multiple layers 3522, 3524 are processed to determine a through-thickness projected fiber angle deviation ratio 3668 for the design zones 302 and design grid structures 402 of each layer 3522, 3524 individually and for the multiple layers 3522, 3524 collectively.

The method 3100 continues from 2204 of Fig. 22 to 3102 where fiber angle deviation ratio requirements 3670 are received for one or more design grid cell 404 in one or more design grid structure 402 of each layer 3522, 3524 individually and for the multiple layers 3522, 3524 collectively. At 3104, the projected fiber angle deviation ratios 3666 for the one or more design grid cell 404 are compared to the fiber angle deviation ratio requirements 3670 for the corresponding design grid cell 404 to determine a risk probability 3648 of not achieving the fiber angle deviation ratio requirements 3670 for the corresponding design grid cell 404 of the composite workpiece 300 after the laying up 2006 of each layer 3522, 3524. At 3106, after the laying up 2006 of each subsequent layer 3524, the risk probability 3648 for the corresponding design grid cell 404 of each layer 3524 on a layup mandrel 3518 is processed to determine a through-thickness risk probability 3650 for current layers 4304 on the layup mandrel 3518. In some examples, the method 3100 also includes receiving 3108 a risk threshold 3652 for the risk probability 3648 for one or more design grid cell 404 in one or more design grid structure 402 of each layer 3522, 3524 individually and for the multiple layers 3522, 3524 collectively to categorize the risk probability 3648 as acceptable or unacceptable at each of the one or more design grid cell 404. At 3110, the risk probability 3648 after the laying up 2006 of each layer 3522, 3524 is compared to the risk threshold 3652 for the risk probability 3648 at the corresponding design grid cell 404. At 3112, after the laying up 2006 of each subsequent layer 3524, the risk probability 3648 for the corresponding design grid cell 404 of each layer 3524 is processed to determine a through-thickness risk probability 3650 for the current layers 4304 on the layup mandrel 3518 and the through-thickness risk probability 3650 is compared to the corresponding risk threshold 3652 for the current layers 4304 on the layup mandrel 3518.

With reference again to Figs. 3, 4, 20, 22, 31-33, 35 and 36, in one or more examples, a method 3200 (see Fig. 32) for layup and analysis of composite materials 3502 during fabrication of a composite workpiece 300 includes the method 2000 of Fig. 20, the method 2200 of Fig. 22, the method 3100 of Fig. 31 and continues from 3112 of Fig. 31 to 3202 if the through-thickness risk probability 3650 for the current layers 4304 on the layup mandrel 3518 exceeds the risk threshold 3652. In these and certain other examples, the through-thickness risk probability 3650 is unacceptable and the method 3200 includes optimizing 3202 the design data 3634 to form optimized design data 3654 for the layup of the one or more design grid cell 404 in subsequent layers 3524 of the composite material 3502 during the fabrication of the composite workpiece 300 to reduce the through-thickness risk probability 3650 of not achieving the fiber angle deviation ratio requirements 3670 for the one or more design grid cell 404 in the composite workpiece 300 after the laying up 2006 of the subsequent layers 3524. At 3204, the optimized design data 3654 for the one or more design grid cell 404 in the subsequent layers 3524 of the layup is processed to determine as-planned fiber angle deviation characteristics 3662 for the subsequent layers 3524. At 3206, a next layer 4306 of the composite material 3502 is laid up over the current layers 4304 on the layup mandrel 3518 based on the optimized design data 3654 for the one or more design grid cell 404.

In some examples of the method 3200, the optimizing 3202 of the design data 3634 includes optimizing 3302 (see Fig. 33) path planning for the layup of the one or more design grid cell 404 for at least a portion of a remainder of the subsequent layers 3524 in the composite workpiece 300 to form an optimized path plan 3656 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300. In some examples of the method 3200, the optimizing 3202 of the design data 3634 includes optimizing 3304 (see Fig. 33) fiber angle deviation ratio requirements 3670 for the layup of the one or more design grid cell 404 for at least a portion of a remainder of the subsequent layers 3524 in the composite workpiece 300 to form an optimized fiber angle deviation ratio requirement 3672 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300. In some examples of the method 3200, the optimizing 3202 of the design data 3634 includes optimizing 3306 (see Fig. 33) numerical control programming for the layup of the one or more design grid cell 404 for at least a portion of a remainder of the subsequent layers 3524 in the composite workpiece 300 to form an optimized numerical control program 3660 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300.

With reference again to Figs. 3, 20, 22, 31 and 34-36, in one or more examples, a method 3400 (see Fig. 34) for layup and analysis of composite materials 3502 during fabrication of a composite workpiece 300 includes the method 2000 of Fig. 20, the method 2200 of Fig. 22, the method 3100 of Fig. 31 and continues from 3112 of Fig. 31 to 3402 if the through-thickness risk probability 3650 for the current layers 4304 on the layup mandrel 3518 does not exceed the risk threshold 3652. In these and certain other examples, the through-thickness risk probability 3650 is acceptable and the method 3400 includes processing 3402 the design data 3634 for a next layer 4306 of the layup to determine as-planned fiber angle deviation characteristics 3662 of the next layer 4306. At 3404, the next layer 4306 of the composite material 3502 is laid up over the current layers 4304 on the layup mandrel 3518 based on the design data 3634.

Referring generally to Figs. 3, 4, 35-39, 40A-C, 41A-B, 42 and 43, by way of examples, the present disclosure is directed to automated systems 3500 for layup and analysis of composite materials 3502 during fabrication of composite workpieces 300. Fig. 3 is a side view of an example of a composite workpiece 300 that includes multiple design zones 302. Fig. 4 is a top view of an example of a portion of the composite workpiece 300 of Fig. 3 that includes a portion of the multiple design zones 302 of Fig. 3 with each design zone 302 divided into a design grid structure 402 having a plurality of design grid cells 404. Fig. 35 is a functional block diagram of an example of an automated system 3500 for layup and analysis of composite material 3502 during fabrication of a composite workpiece 300. Fig. 36 is a functional block diagram of an example of the analytical computing device 3504 of Fig. 35. Fig. 37 is a block diagram showing examples of design data 3634, localized zone data 3702 and localized grid data 3704 used in conjunction with layup and analysis of composite material 3502 during fabrication of a composite workpiece 300. Fig. 38 is a block diagram showing an example of the composite material placement device 3516 of Fig. 35. Fig. 39 is a block diagram showing examples of as-built data 3638 used in conjunction with layup and analysis of composite material 3502 during fabrication of a composite workpiece 300. Figs. 40A-C are functional diagrams showing examples of plies 4002, tows 4005 and courses 4006 of tows 4005 used in conjunction with layup of composite material 3502 during fabrication of a composite workpiece 300. Figs. 41A and 41B are functional diagrams showing examples of gaps 4102 and overlaps 4104 between adjacent tows 4005 in conjunction with layup and analysis of composite material 3502 during fabrication of a composite workpiece 300. Fig. 42 is a block diagram showing examples of the quality detection device 3520 of Fig. 35. Fig. 43 is a functional diagram showing an example of an as-built grid structure 4300 with as-built grid cells 4302 for a composite workpiece 300 used in conjunction with layup and analysis of composite material 3502 during fabrication of a composite workpiece 300.

With reference again to Figs. 3, 4, 35-39, 40A-C, 41A-B, 42 and 43, in one or more examples, an automated system 3500 (see Fig. 35) for layup and analysis of composite material 3502 during fabrication of a composite workpiece 300 is disclosed. The automated system 3500 includes at least one analytical computing device 3504, a robotic manipulator 3512, a layup mandrel 3518 and a quality detection device 3520. The at least one analytical computing device 3504 storing a design data analysis application program 3506, a localized zone data analysis application program 3508 and a localized grid data analysis application program 3510. The at least one analytical computing device 3504 is configured to receive design data 3634 for the layup of the composite material 3502 from a design data storage device 3610 via a communication network 3604. The composite workpiece 300 decomposed into multiple design zones 302. At least a portion of the multiple design zones 302 further decomposed into a design grid structure 402 with a plurality of design grid cells 404 for the corresponding design zone 302. The design data 3634 including localized zone data 3702 for the multiple design zones 302. The design data 3634 also including localized grid data 3704 for the design grid cells 404 of the design grid structures 402. The robotic manipulator 3512 in a fabrication cell 3514 and in operative communication with the at least one analytical computing device 3504. The robotic manipulator 3512 including a composite material placement device 3516. The layup mandrel 3518 in the fabrication cell 3514 and configured for layup of the composite material 3502. A layer 3522 of the composite material 3502 is laid up on the layup mandrel 3518 in the fabrication cell 3514. A second layer 3523 of the composite material 3502 is laid up over the layer 3522 and subsequent layers 3524 of the composite material 3502 are laid up over current layers 4304. The quality detection device 3520 in the fabrication cell 3514 and in operative communication with the at least one analytical computing device 3504.

In some examples of the automated system 3500, the at least one analytical computing device 3504 includes a network interface 3602, at least one processor 3606 and associated memory 3608, at least one application program storage device 3612 and at least one local data storage device. The network interface 3602 in operative communication with a communication network 3604. The at least one processor 3606 in operative communication with a design data storage device 3610 via the network interface 3602 and the communication network 3604. The at least one application program storage device 3612 in operative communication with the at least one processor 3606 and storing the design data analysis application program 3506, the localized zone data analysis application program 3508 and the localized grid data analysis application program 3510, the at least one application program storage device 3612 also storing one or more of an as-built data analysis application program 3614, a projected fiber volume fill ratio application program 3616, a through-thickness fiber volume fill ratio application program 3618, a fiber volume fill risk application program 3620, a through-thickness risk probability application program 3622, a design data optimization application program 3624, a projected fiber angle deviation ratio application program 3626, a through-thickness fiber angle deviation ratio application program 3628 and a fiber angle deviation risk application program 3630.

The at least one local data storage device 3632 configured to at least temporarily store design data 3634, the at least one local data storage device 3632 also storing one or more of as-planned fiber volume fill characteristics 3636, as-built data 3638, as-built fiber volume fill characteristics 3640, through-thickness as-built fiber volume fill characteristics 3641, projected fiber volume fill ratios 3642, a through-thickness projected fiber volume fill ratio 3644, fiber volume fill ratio requirements 3646, a risk probability 3648, a through-thickness risk probability 3650, a risk threshold 3652, optimized design data 3654, an optimized path plan 3656, an optimized fiber volume fill ratio requirement 3658, an optimized numerical control program 3660, as-planned fiber angle deviation characteristics 3662, as-built fiber angle deviation characteristics 3664, projected fiber angle deviation ratios 3666, a through-thickness projected fiber angle deviation ratio 3668, fiber angle deviation ratio requirements 3670 and an optimized fiber angle deviation ratio requirement 3672. In some examples, the design data storage device 3610 is configured to store the design data 3634, design requirements and validation records for the composite workpiece 300.

In some examples of the automated system 3500, the at least one analytical computing device 3504 includes one or more analytical computing device 3504 located in a remote location in relation to the fabrication cell 3514, one or more analytical computing device 3504 located within the fabrication cell 3514 or any suitable analytical computing device in any suitable combination.

In some examples of the automated system 3500, the composite material placement device 3516 includes an automated fiber placement device 3802. In some examples, the automated fiber placement device 3802 is configured to lay at least one tow 4004 on the layup mandrel 3518. In some examples, the automated fiber placement device 3802 is configured to lay a course 4006 of tows 4005 on the layup mandrel 3518.

In some examples of the automated system 3500, the at least one analytical computing device 3504, in conjunction with running the design data analysis application program 3506, is configured to process the design data 3634 for multiple layers 3522, 3524 of the composite workpiece 300 to determine as-planned fiber volume fill characteristics 3636 for the design zones 302 and the design grid cells 404 of the design grid structures 402 of each layer 3522, 3524 individually and for the multiple layers 3522, 3524 collectively, The robotic manipulator 3512 and the composite material placement device 3516 are configured to layup a layer 3522 of the composite material 3502 for the composite workpiece 300 on the layup mandrel 3518 in the fabrication cell 3514 based on the localized zone data 3702 for the layer 3522 and the localized grid data 3704 for the layer 3522. After the layup of the layer 3522, the quality detection device 3520 is configured to detect as-built data 3638 for the layer 3522 using a quality detection device 3520. The as-built data 3638 is divided into an as-built grid structure 4300 that includes a plurality of as-built grid cells 4302.

In some examples, the at least one analytical computing device 3504, in conjunction with running an as-built data analysis application program 3614, is configured to process the as-built data 3638 for the layer 3522 to determine as-built fiber volume fill characteristics 3640 of the layer 3522. The at least one analytical computing device 3504, in conjunction with running a projected fiber volume fill ratio application program 3616, is configured to compare the as-built fiber volume fill characteristics 3640 for the layer 3522 to the as-planned fiber volume fill characteristics 3636 to determine projected fiber volume fill ratios 3642.

In some examples, the automated system 3500 is configured to repeat laying up of the composite material 3502, detecting of the as-built data 3638, processing of the as-built data 3638, and comparing the as-built fiber volume fill characteristics 3640 to the as-planned fiber volume fill characteristics 3636 for each subsequent layer 3524 of the multiple layers 3522, 3524. The at least one analytical computing device 3504, in conjunction with running a through-thickness fiber volume fill ratio application program 3618, is configured to process the projected fiber volume fill ratios 3642 for the multiple layers 3522, 3524 to determine a through-thickness projected fiber volume fill ratio 3644 for the design zones 302 and the design grid structures 402 of each layer 3522, 3524 individually and for the multiple layers 3522, 3524 collectively.

In a first fiber volume fill example of the automated system 3500, the at least one analytical computing device 3504 is configured to receive fiber volume fill ratio requirements 3646 for each layer 3522, 3524 individually and for the multiple layers 3522, 3524 collectively from the design data storage device 3610 via the communication network 3604. The at least one analytical computing device 3504, in conjunction with running a fiber volume fill risk application program 3620, is configured to compare the projected fiber volume fill ratios 3642 for each layer 3522, 3524 individually to the fiber volume fill ratio requirements 3646 for the corresponding layer to determine a risk probability 3648 of not achieving the fiber volume fill ratio requirements 3646 for the composite workpiece 300 after each layer 3522, 3524 is laid up. After each subsequent layer 3524 is laid up, the at least one analytical computing device 3504, in conjunction with running a through-thickness risk probability application program 3622, is configured to process the risk probability 3648 for each layer 3524 on the layup mandrel 3518 to determine a through-thickness risk probability 3650 for current layers 4304 on the layup mandrel 3518.

In some examples, the at least one analytical computing device 3504 is configured to receive a risk threshold 3652 for the risk probability 3648 at each layer 3522, 3524 individually and for the multiple layers 3522, 3524 collectively to categorize the risk probability 3648 as acceptable or unacceptable from the design data storage device 3610 via the communication network 3604. The at least one analytical computing device 3504, in conjunction with running the fiber volume fill risk application program 3620, is configured to compare the risk probability 3648 after each layer 3522, 3524 is laid up to the risk threshold 3652 for the risk probability 3648 at the corresponding layer. After each subsequent layer 3524 is laid up, the at least one analytical computing device 3504, in conjunction with running the through-thickness risk probability application program 3622, is configured to process the risk probability 3648 for each layer 3524 on the layup mandrel 3518 to determine a through-thickness risk probability 3650 for the current layers 4304 on the layup mandrel 3518 and comparing the through-thickness risk probability 3650 to the corresponding risk threshold 3652 for the current layers 4304 on the layup mandrel 3518.

In some examples, where the through-thickness risk probability 3650 for the current layers 4304 on the layup mandrel 3518 exceeds the risk threshold 3652, the through-thickness risk probability 3650 is unacceptable. In these and certain other examples, the at least one analytical computing device 3504, in conjunction with running a design data optimization application program 3624, is configured to optimize the design data 3634 to form optimized design data 3654 for the layup of subsequent layers 3524 of the composite material 3502 during the fabrication of the composite workpiece 300 to reduce the through-thickness risk probability 3650 of not achieving the fiber volume fill ratio requirements 3646 for the composite workpiece 300 after the subsequent layers 3524 are laid up. The at least one analytical computing device 3504, in conjunction with running the design data analysis application program 3506, is configured to process the optimized design data 3654 for the subsequent layers 3524 of the layup to determine as-planned fiber volume fill characteristics 3636 for the subsequent layers 3524. The robotic manipulator 3512 and the composite material placement device 3516 are configured to layup a next layer 4306 of the composite material 3502 over the current layers 4304 on the layup mandrel 3518 based on the optimized design data 3654.

In some examples, the at least one analytical computing device 3504, in conjunction with running the design data optimization application program 3624, is configured to optimize path planning for at least a portion of a remainder of the composite workpiece 300 to form an optimized path plan 3656 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300. In some examples, the at least one analytical computing device 3504, in conjunction with running the design data optimization application program 3624, is configured to optimize fiber volume fill ratio requirements 3646 for at least a portion of a remainder of the composite workpiece 300 to form an optimized fiber volume fill ratio requirement 3658 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300. In some examples, the at least one analytical computing device 3504, in conjunction with running the design data optimization application program 3624, is configured to optimize numerical control programming for at least a portion of a remainder of the composite workpiece 300 to form an optimized numerical control program 3660 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300.

In some examples, where the through-thickness risk probability 3650 for the current layers 4304 on the layup mandrel 3518 does not exceed the risk threshold 3652, the through-thickness risk probability 3650 is acceptable. In these and certain other examples, the at least one analytical computing device 3504, in conjunction with running the design data analysis application program 3506, is configured to process the design data 3634 for a next layer 4306 of the layup to determine as-planned fiber volume fill characteristics 3636 of the next layer 4306. The robotic manipulator 3512 and the composite material placement device 3516 are configured to layup the next layer 4306 of the composite material 3502 over the current layers 4304 on the layup mandrel 3518 based on the design data 3634.

In a second fiber volume fill example of the automated system 3500, the at least one analytical computing device 3504 is configured to receive fiber volume fill ratio requirements 3646 for one or more design zone 302 of each layer 3522, 3524 individually and for the multiple layers 3522, 3524 collectively from the design data storage device 3610 via the communication network 3604. The at least one analytical computing device 3504, in conjunction with running a fiber volume fill risk application program 3620, is configured to compare the projected fiber volume fill ratios 3642 for the one or more design zone 302 to the fiber volume fill ratio requirements 3646 for the corresponding design zone 302 to determine a risk probability 3648 of not achieving the fiber volume fill ratio requirements 3646 for the corresponding design zone 302 of the composite workpiece 300 after each layer 3522, 3524 is laid up. After each subsequent layer 3524 is laid up, the at least one analytical computing device 3504, in conjunction with running a through-thickness risk probability application program 3622, is configured to process the risk probability 3648 for the corresponding design zone 302 of each layer 3524 on the layup mandrel 3518 to determine a through-thickness risk probability 3650 for current layers 4304 on the layup mandrel 3518.

In some examples, the at least one analytical computing device 3504 is configured to receive a risk threshold 3652 for the risk probability 3648 of the one or more design zone 302 at each layer 3522, 3524 individually and for the multiple layers 3522, 3524 collectively to categorize the risk probability 3648 as acceptable or unacceptable at each of the one or more design zone 302 from the design data storage device 3610 via the communication network 3604. The at least one analytical computing device 3504, in conjunction with running the fiber volume fill risk application program 3620, is configured to compare the risk probability 3648 after each layer 3522, 3524 is laid up to the risk threshold 3652 for the risk probability 3648 at the corresponding design zone 302. After each subsequent layer 3524 is laid up, the at least one analytical computing device 3504, in conjunction with running the through-thickness risk probability application program 3622, is configured to process the risk probability 3648 for each of the one or more design zone 302 for each layer 3524 on the layup mandrel 3518 to determine a through-thickness risk probability 3650 for the current layers 4304 on the layup mandrel 3518 and comparing the through-thickness risk probability 3650 to the corresponding risk threshold 3652 for the current layers 4304 on the layup mandrel 3518.

In some examples, where the through-thickness risk probability 3650 for the current layers 4304 on the layup mandrel 3518 exceeds the risk threshold 3652, the through-thickness risk probability 3650 is unacceptable. In these and certain other examples, the at least one analytical computing device 3504, in conjunction with running a design data optimization application program 3624, is configured to optimize the design data 3634 to form optimized design data 3654 for the layup of the one or more design zone 302 in subsequent layers 3524 of the composite material 3502 during the fabrication of the composite workpiece 300 to reduce the through-thickness risk probability 3650 of not achieving the fiber volume fill ratio requirements 3646 for the one or more design zone 302 in the composite workpiece 300 after the subsequent layers 3524 are laid up. The at least one analytical computing device 3504, in conjunction with running the design data analysis application program 3506, is configured to process the optimized design data 3654 for the one or more design zone 302 in the subsequent layers 3524 of the layup to determine as-planned fiber volume fill characteristics 3636 for the subsequent layers 3524. The robotic manipulator 3512 and the composite material placement device 3516 are configured to lay up a next layer 4306 of the composite material 3502 over the current layers 4304 on the layup mandrel 3518 based on the optimized design data 3654 for the one or more design zone 302.

In some examples, the at least one analytical computing device 3504, in conjunction with running the design data optimization application program 3624, is configured to optimize path planning for the layup of the one or more design zone 302 for at least a portion of a remainder of the subsequent layers 3524 in the composite workpiece 300 to form an optimized path plan 3656 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300. In some examples, the at least one analytical computing device 3504, in conjunction with running the design data optimization application program 3624, is configured to optimize fiber volume fill ratio requirements 3646 for the layup of the one or more design zone 302 for at least a portion of a remainder of the subsequent layers 3524 in the composite workpiece 300 to form an optimized fiber volume fill ratio requirement 3658 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300. In some examples, the at least one analytical computing device 3504, in conjunction with running the design data optimization application program 3624, is configured to optimize numerical control programming for the layup of the one or more design zone 302 for at least a portion of a remainder of the subsequent layers 3524 in the composite workpiece 300 to form an optimized numerical control program 3660 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300.

In some examples, where the through-thickness risk probability 3650 for the current layers 4304 on the layup mandrel 3518 does not exceed the risk threshold 3652, the through-thickness risk probability 3650 is acceptable. In these and certain other examples, the at least one analytical computing device 3504, in conjunction with running the design data analysis application program 3506, is configured to process the design data 3634 for a next layer 4306 of the layup to determine as-planned fiber volume fill characteristics 3636 of the next layer 4306. The robotic manipulator 3512 and the composite material placement device 3516 are configured to layup the next layer 4306 of the composite material 3502 over the current layers 4304 on the layup mandrel 3518 based on the design data 3634.

In a third fiber volume fill example of the automated system 3500, the at least one analytical computing device 3504 is configured to receive fiber volume fill ratio requirements 3646 for one or more design grid cell 404 in one or more design grid structure 402 of each layer 3522, 3524 individually and for the multiple layers 3522, 3524 collectively from the design data storage device 3610 via the communication network 3604. The at least one analytical computing device 3504, in conjunction with running a fiber volume fill risk application program 3620, is configured to compare the projected fiber volume fill ratios 3642 for the one or more design grid cell 404 to the fiber volume fill ratio requirements 3646 for the corresponding design grid cell 404 to determine a risk probability 3648 of not achieving the fiber volume fill ratio requirements 3646 for the corresponding design grid cell 404 of the composite workpiece 300 after each layer 3522, 3524 is laid up. After each subsequent layer 3524 is laid up, the at least one analytical computing device 3504, in conjunction with running a through-thickness risk probability application program 3622, is configured to process the risk probability 3648 for the corresponding design grid cell 404 of each layer 3524 on the layup mandrel 3518 to determine a through-thickness risk probability 3650 for current layers 4304 on the layup mandrel 3518.

In some examples, the at least one analytical computing device 3504 is configured to receive a risk threshold 3652 for the risk probability 3648 for one or more design grid cell 404 in one or more design grid structure 402 of each layer 3522, 3524 individually and for the multiple layers 3522, 3524 collectively to categorize the risk probability 3648 as acceptable or unacceptable at each of the one or more design grid cell 404 from the design data storage device 3610 via the communication network 3604. The at least one analytical computing device 3504, in conjunction with running the fiber volume fill risk application program 3620, is configured to compare the risk probability 3648 after each layer 3522, 3524 is laid up to the risk threshold 3652 for the risk probability 3648 at the corresponding design grid cell 404. After each subsequent layer 3524 is laid up, the at least one analytical computing device 3504, in conjunction with running the through-thickness risk probability application program 3622, is configured to process the risk probability 3648 for the corresponding design grid cell 404 of each layer 3524 on the layup mandrel 3518 to determine a through-thickness risk probability 3650 for the current layers 4304 on the layup mandrel 3518 and comparing the through-thickness risk probability 3650 to the corresponding risk threshold 3652 for the current layers 4304 on the layup mandrel 3518.

In some examples, where the through-thickness risk probability 3650 for the current layers 4304 on the layup mandrel 3518 exceeds the risk threshold 3652, the through-thickness risk probability 3650 is unacceptable. In these and certain other examples, the at least one analytical computing device 3504, in conjunction with running a design data optimization application program 3624, is configured to optimize the design data 3634 to form optimized design data 3654 for the layup of the one or more design grid cell 404 in subsequent layers 3524 of the composite material 3502 during the fabrication of the composite workpiece 300 to reduce the through-thickness risk probability 3650 of not achieving the fiber volume fill ratio requirements 3646 for the one or more design grid cell 404 in the composite workpiece 300 after the subsequent layers 3524 are laid up. The at least one analytical computing device 3504, in conjunction with running the design data analysis application program 3506, is configured to process the optimized design data 3654 for the one or more design grid cell 404 in the subsequent layers 3524 of the layup to determine as-planned fiber volume fill characteristics 3636 for the subsequent layers 3524. The robotic manipulator 3512 and the composite material placement device 3516 are configured to lay up a next layer 4306 of the composite material 3502 over the current layers 4304 on the layup mandrel 3518 based on the optimized design data 3654 for the one or more design grid cell 404.

In some examples, the at least one analytical computing device 3504, in conjunction with running the design data optimization application program 3624, is configured to optimize path planning for the layup of the one or more design grid cell 404 for at least a portion of a remainder of the subsequent layers 3524 in the composite workpiece 300 to form an optimized path plan 3656 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300. In some examples, the at least one analytical computing device 3504, in conjunction with running the design data optimization application program 3624, is configured to optimize fiber volume fill ratio requirements 3646 for the layup of the one or more design grid cell 404 for at least a portion of a remainder of the subsequent layers 3524 in the composite workpiece 300 to form an optimized fiber volume fill ratio requirement 3658 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300. In some examples, the at least one analytical computing device 3504, in conjunction with running the design data optimization application program 3624, is configured to optimize numerical control programming for the layup of the one or more design grid cell 404 for at least a portion of a remainder of the subsequent layers 3524 in the composite workpiece 300 to form an optimized numerical control program 3660 for the layup of at least one subsequent layer 3524 of the composite material 3502 during the fabrication of the composite workpiece 300 to reduce the through-thickness risk probability 3650 of not achieving the fiber volume fill ratio requirements 3646 for the composite workpiece 300.

In some examples, where the through-thickness risk probability 3650 for the current layers 4304 on the layup mandrel 3518 does not exceed the risk threshold 3652, the through-thickness risk probability 3650 is acceptable. In these and certain other examples, the at least one analytical computing device 3504, in conjunction with running the design data analysis application program 3506, is configured to process the design data 3634 for a next layer 4306 of the layup to determine as-planned fiber volume fill characteristics 3636 of the next layer 4306. The robotic manipulator 3512 and the composite material placement device 3516 are configured to layup the next layer 4306 of the composite material 3502 over the current layers 4304 on the layup mandrel 3518 based on the design data 3634.

In some examples of the automated system 3500, the at least one analytical computing device 3504, in conjunction with running the design data analysis application program 3506, is configured to process the design data 3634 for multiple layers 3522, 3524 of the composite workpiece 300 to determine as-planned fiber angle deviation characteristics 3662 for the design zones 302 and the design grid cells 404 of the design grid structures 402 of each layer 3522, 3524 individually and for the multiple layers 3522, 3524 collectively. The robotic manipulator 3512 and the composite material placement device 3516 are configured to layup a layer 3522 of the composite material 3502 for the composite workpiece 300 on the layup mandrel 3518 in the fabrication cell 3514 based on the localized zone data 3702 for the layer 3522 and the localized grid data 3704 for the layer 3522. After the layup of the layer 3522, the quality detection device 3520 is configured to detect as-built data 3638 for the layer 3522 using a quality detection device 3520, the as-built data 3638 divided into an as-built grid structure 4300 that includes a plurality of as-built grid cells 4302.

In some examples, the at least one analytical computing device 3504, in conjunction with running an as-built data analysis application program 3614, is configured to process the as-built data 3638 for the layer 3522 to determine as-built fiber angle deviation characteristics 3664 of the layer 3522. The at least one analytical computing device 3504, in conjunction with running a projected fiber angle deviation ratio application program 3626, is configured to compare the as-built fiber angle deviation characteristics 3664 for the layer 3522 to the as-planned fiber angle deviation characteristics 3662 to determine projected fiber angle deviation ratios 3666.

In some examples, the automated system 3500 is configured to repeat laying up of the composite material 3502, detecting of the as-built data 3638, processing of the as-built data 3638, and comparing the as-built fiber angle deviation characteristics 3664 to the as-planned fiber angle deviation characteristics 3662 for each subsequent layer 3524 of the multiple layers 3522, 3524. The at least one analytical computing device 3504, in conjunction with running a through-thickness fiber angle deviation ratio application program 3628, is configured to process the projected fiber angle deviation ratios 3666 for the multiple layers 3522, 3524 to determine a through-thickness projected fiber angle deviation ratio 3668 for the design zones 302 and design grid structures 402 of each layer 3522, 3524 individually and for the multiple layers 3522, 3524 collectively.

In a first fiber angle deviation example of the automated system 3500, the at least one analytical computing device 3504 is configured to receive fiber angle deviation ratio requirements 3670 for each layer 3522, 3524 individually and for the multiple layers 3522, 3524 collectively from the design data storage device 3610 via the communication network 3604. The at least one analytical computing device 3504, in conjunction with running a fiber angle deviation risk application program 3630, is configured to compare the projected fiber angle deviation ratios 3666 for each layer 3522, 3524 individually to the fiber angle deviation ratio requirements 3670 for the corresponding layer to determine a risk probability 3648 of not achieving the fiber angle deviation ratio requirements 3670 for the composite workpiece 300 after each layer 3522, 3524 is laid up. After each subsequent layer 3524 is laid up, the at least one analytical computing device 3504, in conjunction with running a through-thickness risk probability application program 3622, is configured to process the risk probability 3648 for each layer 3524 on the layup mandrel 3518 to determine a through-thickness risk probability 3650 for current layers 4304 on the layup mandrel 3518.

In some examples, the at least one analytical computing device 3504 is configured to receive a risk threshold 3652 for the risk probability 3648 at each layer 3522, 3524 individually and for the multiple layers 3522, 3524 collectively to categorize the risk probability 3648 as acceptable or unacceptable from the design data storage device 3610 via the communication network 3604. The at least one analytical computing device 3504, in conjunction with running the fiber angle deviation risk application program 3630, is configured to compare the risk probability 3648 after each layer 3522, 3524 is laid up to the risk threshold 3652 for the risk probability 3648 at the corresponding layer. After each subsequent layer 3524 is laid up, the at least one analytical computing device 3504, in conjunction with running a through-thickness risk application program, is configured to process the risk probability 3648 for each layer 3524 on the layup mandrel 3518 to determine a through-thickness risk probability 3650 for the current layers 4304 on the layup mandrel 3518 and comparing the through-thickness risk probability 3650 to the corresponding risk threshold 3652 for the current layers 4304 on the layup mandrel 3518.

In some examples, where the through-thickness risk probability 3650 for the current layers 4304 on the layup mandrel 3518 exceeds the risk threshold 3652, the through-thickness risk probability 3650 is unacceptable. In this example, the at least one analytical computing device 3504, in conjunction with running a design data optimization application program 3624, is configured to optimize the design data 3634 to form optimized design data 3654 for the layup of subsequent layers 3524 of the composite material 3502 during the fabrication of the composite workpiece 300 to reduce the through-thickness risk probability 3650 of not achieving the fiber angle deviation ratio requirements 3670 for the composite workpiece 300 after the subsequent layers 3524 are laid up. The at least one analytical computing device 3504, in conjunction with running the design data analysis application program 3506, is configured to process the optimized design data 3654 for the subsequent layers 3524 of the layup to determine as-planned fiber angle deviation characteristics 3662 for the subsequent layers 3524. The robotic manipulator 3512 and the composite material placement device 3516 are configured to layup a next layer 4306 of the composite material 3502 over the current layers 4304 on the layup mandrel 3518 based on the optimized design data 3654.

In some examples, the at least one analytical computing device 3504, in conjunction with running the design data optimization application program 3624, is configured to optimize path planning for at least a portion of a remainder of the composite workpiece 300 to form an optimized path plan 3656 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300. In some examples, the at least one analytical computing device 3504, in conjunction with running the design data optimization application program 3624, is configured to optimize fiber angle deviation ratio requirements 3670 for at least a portion of a remainder of the composite workpiece 300 to form an optimized fiber angle deviation ratio requirement 3672 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300. In some examples, the at least one analytical computing device 3504, in conjunction with running the design data optimization application program 3624, is configured to optimize numerical control programming for at least a portion of a remainder of the composite workpiece 300 to form an optimized numerical control program 3660 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300.

In some examples, where the through-thickness risk probability 3650 for the current layers 4304 on the layup mandrel 3518 does not exceed the risk threshold 3652, the through-thickness risk probability 3650 is acceptable. In these and other examples, the at least one analytical computing device 3504, in conjunction with running the design data analysis application program 3506, is configured to process the design data 3634 for a next layer 4306 of the layup to determine as-planned fiber angle deviation characteristics 3662 of the next layer 4306. The robotic manipulator 3512 and the composite material placement device 3516 are configured to layup the next layer 4306 of the composite material 3502 over the current layers 4304 on the layup mandrel 3518 based on the design data 3634.

In a second fiber angle deviation example of the automated system 3500, the at least one analytical computing device 3504 is configured to receive fiber angle deviation ratio requirements 3670 for one or more design zone 302 of each layer 3522, 3524 individually and for the multiple layers 3522, 3524 collectively from the design data storage device 3610 via the communication network 3604. The at least one analytical computing device 3504, in conjunction with running a fiber angle deviation risk application program 3630, is configured to compare the projected fiber angle deviation ratios 3666 for the one or more design zone 302 to the fiber angle deviation ratio requirements 3670 for the corresponding design zone 302 to determine a risk probability 3648 of not achieving the fiber angle deviation ratio requirements 3670 for the corresponding design zone 302 of the composite workpiece 300 after each layer 3522, 3524 is laid up. After each subsequent layer 3524 is laid up, the at least one analytical computing device 3504, in conjunction with running a through-thickness risk probability application program 3622, is configured to process the risk probability 3648 for the corresponding design zone 302 of each layer 3524 on the layup mandrel 3518 to determine a through-thickness risk probability 3650 for current layers 4304 on the layup mandrel 3518.

In some examples, the at least one analytical computing device 3504 is configured to receive a risk threshold 3652 for the risk probability 3648 of the one or more design zone 302 at each layer 3522, 3524 individually and for the multiple layers 3522, 3524 collectively to categorize the risk probability 3648 as acceptable or unacceptable at each of the one or more design zone 302 from the design data storage device 3610 via the communication network 3604. The at least one analytical computing device 3504, in conjunction with running the fiber angle deviation risk application program 3630, is configured to compare the risk probability 3648 after each layer 3522, 3524 is laid up to the risk threshold 3652 for the risk probability 3648 at the corresponding design zone 302. After each subsequent layer 3524 is laid up, the at least one analytical computing device 3504, in conjunction with running a through-thickness risk application program, is configured to process the risk probability 3648 for each of the one or more design zone 302 for each layer 3524 on the layup mandrel 3518 to determine a through-thickness risk probability 3650 for the current layers 4304 on the layup mandrel 3518 and comparing the through-thickness risk probability 3650 to the corresponding risk threshold 3652 for the current layers 4304 on the layup mandrel 3518.

In some examples, where the through-thickness risk probability 3650 for the current layers 4304 on the layup mandrel 3518 exceeds the risk threshold 3652, the through-thickness risk probability 3650 is unacceptable. In these and certain other examples, the at least one analytical computing device 3504, in conjunction with running a design data optimization application program 3624, is configured to optimize the design data 3634 to form optimized design data 3654 for the layup of the one or more design zone 302 in subsequent layers 3524 of the composite material 3502 during the fabrication of the composite workpiece 300 to reduce the through-thickness risk probability 3650 of not achieving the fiber angle deviation ratio requirements 3670 for the one or more design zone 302 in the composite workpiece 300 after the subsequent layers 3524 are laid up. The at least one analytical computing device 3504, in conjunction with running the design data analysis application program 3506, is configured to process the optimized design data 3654 for the one or more design zone 302 in the subsequent layers 3524 of the layup to determine as-planned fiber angle deviation characteristics 3662 for the subsequent layers 3524. The robotic manipulator 3512 and the composite material placement device 3516 are configured to lay up a next layer 4306 of the composite material 3502 over the current layers 4304 on the layup mandrel 3518 based on the optimized design data 3654 for the one or more design zone 302.

In some examples, the at least one analytical computing device 3504, in conjunction with running the design data optimization application program 3624, is configured to optimize path planning for the layup of the one or more design zone 302 for at least a portion of a remainder of the subsequent layers 3524 in the composite workpiece 300 to form an optimized path plan 3656 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300. In some examples, the at least one analytical computing device 3504, in conjunction with running the design data optimization application program 3624, is configured to optimize fiber angle deviation ratio requirements 3670 for the layup of the one or more design zone 302 for at least a portion of a remainder of the subsequent layers 3524 in the composite workpiece 300 to form an optimized fiber angle deviation ratio requirement 3672 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300. In some examples, the at least one analytical computing device 3504, in conjunction with running the design data optimization application program 3624, is configured to optimize numerical control programming for the layup of the one or more design zone 302 for at least a portion of a remainder of the subsequent layers 3524 in the composite workpiece 300 to form an optimized numerical control program 3660 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300.

In some examples, where the through-thickness risk probability 3650 for the current layers 4304 on the layup mandrel 3518 does not exceed the risk threshold 3652, the through-thickness risk probability 3650 is acceptable. In these and certain other examples, the at least one analytical computing device 3504, in conjunction with running the design data analysis application program 3506, is configured to process the design data 3634 for a next layer 4306 of the layup to determine as-planned fiber angle deviation characteristics 3662 of the next layer 4306. The robotic manipulator 3512 and the composite material placement device 3516 are configured to layup the next layer 4306 of the composite material 3502 over the current layers 4304 on the layup mandrel 3518 based on the design data 3634.

In a third fiber angle deviation example of the automated system 3500, the at least one analytical computing device 3504 is configured to receive fiber angle deviation ratio requirements 3670 for one or more design grid cell 404 in one or more design grid structure 402 of each layer 3522, 3524 individually and for the multiple layers 3522, 3524 collectively from the design data storage device 3610 via the communication network 3604. The at least one analytical computing device 3504, in conjunction with running a fiber angle deviation risk application program 3630, is configured to compare the projected fiber angle deviation ratios 3666 for the one or more design grid cell 404 to the fiber angle deviation ratio requirements 3670 for the corresponding design grid cell 404 to determine a risk probability 3648 of not achieving the fiber angle deviation ratio requirements 3670 for the corresponding design grid cell 404 of the composite workpiece 300 after each layer 3522, 3524 is laid up. After each subsequent layer 3524 is laid up, the at least one analytical computing device 3504, in conjunction with running a through-thickness risk probability application program 3622, is configured to process the risk probability 3648 for the corresponding design grid cell 404 of each layer 3524 on the layup mandrel 3518 to determine a through-thickness risk probability 3650 for current layers 4304 on the layup mandrel 3518.

In some examples, the at least one analytical computing device 3504 is configured to receive a risk threshold 3652 for the risk probability 3648 for one or more design grid cell 404 in one or more design grid structure 402 of each layer 3522, 3524 individually and for the multiple layers 3522, 3524 collectively to categorize the risk probability 3648 as acceptable or unacceptable at each of the one or more design grid cell 404 from the design data storage device 3610 via the communication network 3604. The at least one analytical computing device 3504, in conjunction with running the fiber angle deviation risk application program 3630, is configured to compare the risk probability 3648 after each layer 3522, 3524 is laid up to the risk threshold 3652 for the risk probability 3648 at the corresponding design grid cell 404. After each subsequent layer 3524 is laid up, the at least one analytical computing device 3504, in conjunction with running a through-thickness risk application program, is configured to process the risk probability 3648 for the corresponding design grid cell 404 of each layer 3524 on the layup mandrel 3518 to determine a through-thickness risk probability 3650 for the current layers 4304 on the layup mandrel 3518 and comparing the through-thickness risk probability 3650 to the corresponding risk threshold 3652 for the current layers 4304 on the layup mandrel 3518.

In some examples, where the through-thickness risk probability 3650 for the current layers 4304 on the layup mandrel 3518 exceeds the risk threshold 3652, the through-thickness risk probability 3650 is unacceptable. In these and certain other examples, the at least one analytical computing device 3504, in conjunction with running a design data optimization application program 3624, is configured to optimize the design data 3634 to form optimized design data 3654 for the layup of the one or more design grid cell 404 in subsequent layers 3524 of the composite material 3502 during the fabrication of the composite workpiece 300 to reduce the through-thickness risk probability 3650 of not achieving the fiber angle deviation ratio requirements 3670 for the one or more design grid cell 404 in the composite workpiece 300 after the subsequent layers 3524 are laid up. The at least one analytical computing device 3504, in conjunction with running the design data analysis application program 3506, is configured to process the optimized design data 3654 for the one or more design grid cell 404 in the subsequent layers 3524 of the layup to determine as-planned fiber angle deviation characteristics 3662 for the subsequent layers 3524. The robotic manipulator 3512 and the composite material placement device 3516 are configured to lay up a next layer 4306 of the composite material 3502 over the current layers 4304 on the layup mandrel 3518 based on the optimized design data 3654 for the one or more design grid cell 404.

In some examples, the at least one analytical computing device 3504, in conjunction with running the design data optimization application program 3624, is configured to optimize path planning for the layup of the one or more design grid cell 404 for at least a portion of a remainder of the subsequent layers 3524 in the composite workpiece 300 to form an optimized path plan 3656 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300. In some examples, the at least one analytical computing device 3504, in conjunction with running the design data optimization application program 3624, is configured to optimize fiber angle deviation ratio requirements 3670 for the layup of the one or more design grid cell 404 for at least a portion of a remainder of the subsequent layers 3524 in the composite workpiece 300 to form an optimized fiber angle deviation ratio requirement 3672 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300. In some examples, the at least one analytical computing device 3504, in conjunction with running the design data optimization application program 3624, is configured to optimize numerical control programming for the layup of the one or more design grid cell 404 for at least a portion of a remainder of the subsequent layers 3524 in the composite workpiece 300 to form an optimized numerical control program 3660 for the layup of at least one subsequent layer 3524 of the composite material 3502 during the fabrication of the composite workpiece 300 to reduce the through-thickness risk probability 3650 of not achieving the fiber angle deviation ratio requirements 3670 for the composite workpiece 300.

In some examples, where the through-thickness risk probability 3650 for the current layers 4304 on the layup mandrel 3518 does not exceed the risk threshold 3652, the through-thickness risk probability 3650 is acceptable. In these and certain other examples, the at least one analytical computing device 3504, in conjunction with running the design data analysis application program 3506, is configured to process the design data 3634 for a next layer 4306 of the layup to determine as-planned fiber angle deviation characteristics 3662 of the next layer 4306. The robotic manipulator 3512 and the composite material placement device 3516 are configured to layup the next layer 4306 of the composite material 3502 over the current layers 4304 on the layup mandrel 3518 based on the design data 3634.

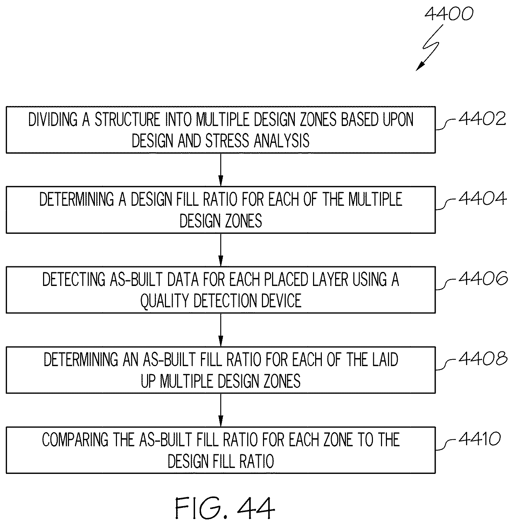

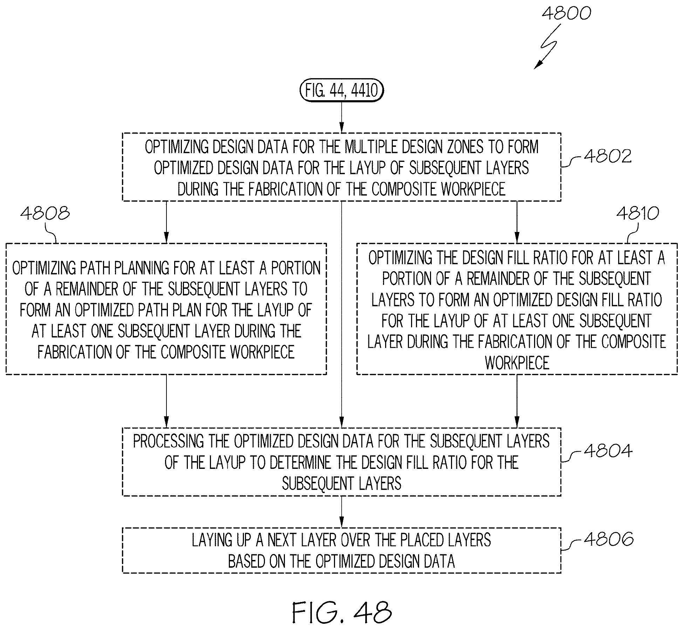

Referring generally to Figs 3, 35, 36, 44 and 48, by way of examples, the present disclosure is directed to methods 4400, 4800 for layup and analysis of composite materials 3502 during fabrication of composite workpieces 300. Fig. 3 is a side view of an example of a composite workpiece 300 that includes multiple design zones 302. Fig. 35 is a functional block diagram of an example of an automated system 3500 for layup and analysis of composite material 3502 during fabrication of a composite workpiece 300. Fig. 36 is a functional block diagram of an example of the analytical computing device 3504 of Fig. 35. Fig. 44 provides an example of the method 4400 for layup and analysis of composite material 3502 during fabrication of a composite workpiece 300. Fig. 48, in combination with Fig. 44, provides an example of the method 4800 for layup and analysis of composite material 3502 during fabrication of a composite workpiece 300.

With reference again to Figs. 3, 35, 36 and 44, in one or more examples, a method 4400 (see Fig. 44) for layup and analysis of composite material 3502 during fabrication of a composite workpiece 300 includes dividing 4402 a structure into multiple design zones 302 based upon design and stress analysis. At 4404, a design fill ratio is determined for each of the multiple design zones 302. At 4406, as-built data 3638 for each current layer 4304 is detected using a quality detection device 3520. At 4408, an as-built fill ratio is determined for each of the multiple design zones 302 that are laid up. At 4410, the as-built fill ratio for each design zone 302 is compared to the design fill ratio.

With reference again to Figs. 3, 35, 36, 44 and 48, in one or more examples, a method 4800 (see Fig. 48) for layup and analysis of composite material 3502 during fabrication of a composite workpiece 300 includes the method 4400 of Fig. 44 and continues from 4410 to 4802 where design data 3634 for the multiple design zones 302 is optimized to form optimized design data 3654 for the layup of subsequent layers 3524 during the fabrication of the composite workpiece 300. At 4804, the optimized design data 3654 for the subsequent layers 3524 of the layup is processed to determine the design fill ratio for the subsequent layers 3524. At 4806, a next layer 4306 is laid up over the current layers 4304 based on the optimized design data 3654. In some examples of the method 4800, the optimizing 4802 of the design data 3634 includes optimizing 4808 path planning for at least a portion of a remainder of the subsequent layers 3524 to form an optimized path plan 3656 for the layup of at least one subsequent layer 3524 during the fabrication of the composite workpiece 300. In some examples of the method 4800, the optimizing 4802 of the design data 3634 includes optimizing 4810 the design fill ratio for at least a portion of a remainder of the subsequent layers 3524 to form an optimized design fill ratio for the layup of at least one subsequent layer 3524 during the fabrication of the composite workpiece 300.

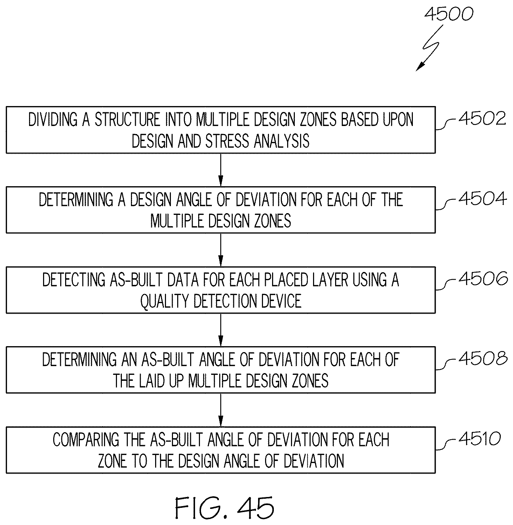

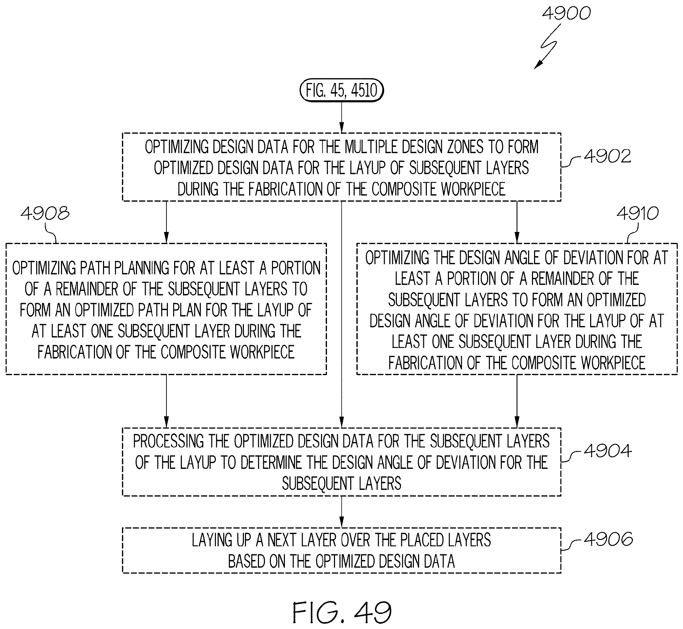

Referring generally to Figs 3, 35, 45 and 49, by way of examples, the present disclosure is directed to methods 4500, 4900 for layup and analysis of composite materials 3502 during fabrication of composite workpieces 300. Fig. 3 is a side view of an example of a composite workpiece 300 that includes multiple design zones 302. Fig. 35 is a functional block diagram of an example of an automated system 3500 for layup and analysis of composite material 3502 during fabrication of a composite workpiece 300. Fig. 45 provides an example of the method 4500 for layup and analysis of composite material 3502 during fabrication of a composite workpiece 300. Fig. 49, in combination with Fig. 45, provides an example of the method 4900 for layup and analysis of composite material 3502 during fabrication of a composite workpiece 300.

With reference again to Figs. 3, 35 and 45, in one or more examples, a method 4500 (see Fig. 45) for layup and analysis of composite material 3502 during fabrication of a composite workpiece 300 includes dividing 4502 a structure into multiple design zones 302 based upon design and stress analysis. At 4504, a design angle of deviation is determined for each of the multiple design zones 302. At 4506, as-built data for each current layer 4304 is detected using a quality detection device 3520. At 4508, an as-built angle of deviation is determined for each of the multiple design zones 302 that are laid up. At 4510, the as-built angle of deviation for each design zone 302 is compared to the design angle of deviation.

With reference again to Figs. 3, 35, 36, 45 and 49, in one or more examples, a method 4900 (see Fig. 49) for layup and analysis of composite material 3502 during fabrication of a composite workpiece 300 includes the method 4500 of Fig. 45 and continues from 4510 to 4902 where design data 3634 for the multiple design zones 302 is optimized to form optimized design data 3654 for the layup of subsequent layers 3524 during the fabrication of the composite workpiece 300. At 4904, the optimized design data 3654 for the subsequent layers 3524 of the layup is processed to determine the design angle of deviation for the subsequent layers 3524. At 4906, a next layer 4306 is laid up over the current layers 4304 based on the optimized design data 3654. In some examples of the method 4900, the optimizing 4902 of the design data 3634 includes optimizing 4908 path planning for at least a portion of a remainder of the subsequent layers 3524 to form an optimized path plan 3656 for the layup of at least one subsequent layer 3524 during the fabrication of the composite workpiece 300. In some examples of the method 4900, the optimizing 4902 of the design data 3634 includes optimizing 4910 the design angle of deviation for at least a portion of a remainder of the subsequent layers 3524 to form an optimized design angle of deviation for the layup of at least one subsequent layer 3524 during the fabrication of the composite workpiece 300.

Referring generally to Figs 3, 35 and 36, by way of examples, the present disclosure is directed to automated systems 3500 for layup and analysis of composite materials 3502 during fabrication of composite workpieces 300. Fig. 3 is a side view of an example of a composite workpiece 300 that includes multiple design zones 302. Fig. 35 is a functional block diagram of an example of an automated system 3500 for layup and analysis of composite material 3502 during fabrication of a composite workpiece 300. Fig. 36 is a functional block diagram of an example of the analytical computing device 3504 of Fig. 35.

With reference again to Figs. 3, 35 and 36, in one or more examples, an automated system 3500 (see Fig. 35) for layup and analysis of composite material 3502 during fabrication of a composite workpiece 300 includes at least one analytical computing device 3504, a robotic manipulator 3512, a layup mandrel 3518 and a quality detection device 3520. The at least one analytical computing device 3504 storing a design data analysis application program 3506, a localized zone data analysis application program 3508 and a localized grid data analysis application program 3510. The at least one analytical computing device 3504 is configured to receive design data 3634 for the layup of the composite material 3502. The robotic manipulator 3512 in a fabrication cell 3514 and in operative communication with the at least one analytical computing device 3504. The robotic manipulator 3512 including a composite material placement device 3516. The layup mandrel 3518 in the fabrication cell 3514 and configured for layup of the composite material 3502. The quality detection device 3520 in the fabrication cell 3514 and in operative communication with the at least one analytical computing device 3504. The at least one analytical computing device 3504, in conjunction with running a design data optimization application program 3624, is configured to optimize the design data 3634 to form optimized design data 3654 for the layup of subsequent layers 3524 of the composite material 3502 during the fabrication of the composite workpiece 300 to reduce a through-thickness risk probability 3650 of not achieving fiber requirements for the composite workpiece 300 after the subsequent layers 3524 are laid up. The at least one analytical computing device 3504, in conjunction with running the design data analysis application program 3506, is configured to process the optimized design data 3654 for the subsequent layers 3524 of the layup to determine as-planned fiber characteristics for the subsequent layers 3524. The robotic manipulator 3512 and the composite material placement device 3516 are configured to layup a next layer 4306 of the composite material 3502 over current layers 4304 currently on the layup mandrel 3518 based on the optimized design data 3654.

Examples of the methods 500, 600, 700, 800, 900, 1100, 1200, 1300, 1500, 1600, 1700, 1900, 2000, 2100, 2200, 2300, 2400, 2600, 2700, 2800, 3000, 3100, 3200, 3400, 4400, 4500, 4800, 4900 for layup and analysis of composite material 3502 during fabrication of composite workpieces 300 and automated systems 100, 200, 3500 for layup and analysis of composite materials 3502 during fabrication of composite workpieces 300 may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of various products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more example," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc., are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1-4, 35-39, 40A-C, 41A-B, 42 and 43, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 1-4, 35-39, 40A-C, 41A-B, 42 and 43, referred to above, need be included in every example and not all elements, features and/or components described herein are necessarily depicted in each illustrative example. Accordingly, some of the elements, features and/or components described and illustrated in Figs. 14, 35-39, 40A-C, 41A-B, 42 and 43 may be combined in various ways without the need to include other features described and illustrated in Figs. 1-4, 35-39, 40A-C, 41A-B, 42 and 43, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 1-4, 35-39, 40A-C, 41A-B, 42 and 43, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 1-4, 35-39, 40A-C, 41A-B, 42 and 43 and such elements, features and/or components may not be discussed in detail herein with reference to each of Figs. 1-4, 35-39, 40A-C, 41A-B, 42 and 43. Similarly, all elements, features and/or components may not be labeled in each of Figs. 1-4, 35-39, 40A-C, 41A-B, 42 and 43, but reference numerals associated therewith may be utilized herein for consistency.

In Figs. 5-34, 44, 45, 48 and 49, referred to above, the blocks may represent operations, steps and/or portions thereof, and lines connecting the various blocks do not imply any particular order or dependency of the operations or portions thereof. It will be understood that not all dependencies among the various disclosed operations are necessarily represented. Figs. 5-34, 44, 45, 48 and 49 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all the operations described need to be performed.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

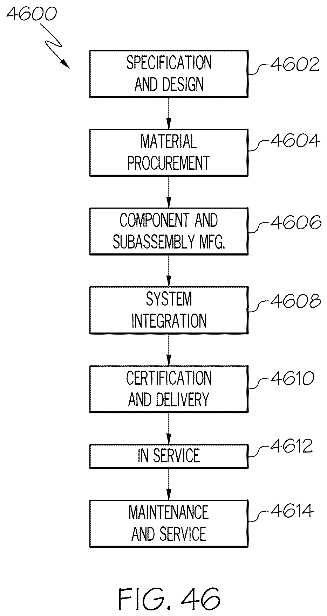

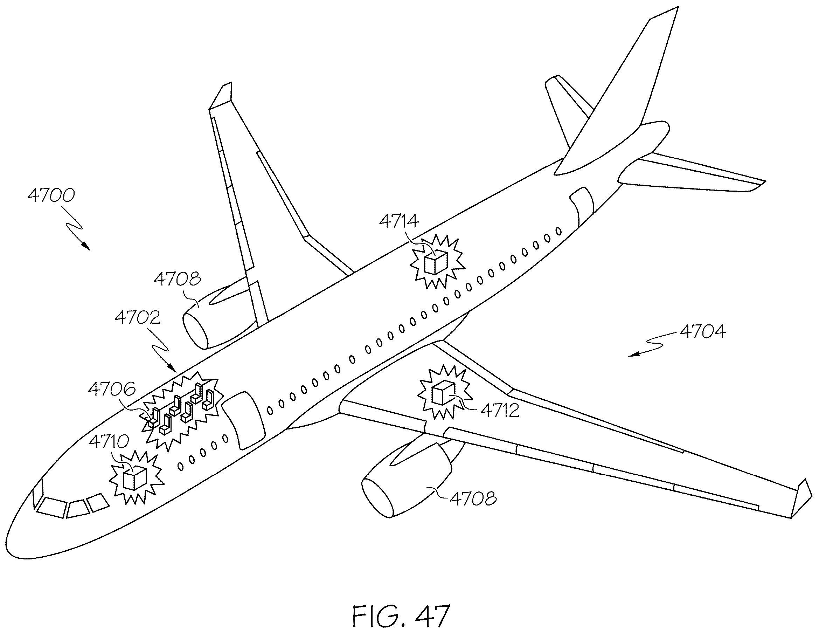

Examples of the subject matter disclosed herein may be described in the context of aircraft manufacturing and service method 4600 as shown in Fig. 46 and aircraft 4700 as shown in Fig. 47. In one or more examples, the disclosed methods 500, 600, 700, 800, 900, 1100, 1200, 1300, 1500, 1600, 1700, 1900, 2000, 2100, 2200, 2300, 2400, 2600, 2700, 2800, 3000, 3100, 3200, 3400, 4400, 4500, 4800, 4900 for layup and analysis of composite materials 3502 during fabrication of composite workpieces 300 and automated systems 100, 200, 3500 for layup and analysis of composite materials 3502 during fabrication of composite workpieces 300 may be used in aircraft manufacturing. During pre-production, the service method 4600 may include specification and design (block 4602) of aircraft 4700 and material procurement (block 4604). During production, component and subassembly manufacturing (block 4606) and system integration (block 4608) of aircraft 4700 may take place. Thereafter, aircraft 4700 may go through certification and delivery (block 4610) to be placed in service (block 4612). While in service, aircraft 4700 may be scheduled for routine maintenance and service (block 4614). Routine maintenance and service may include modification, reconfiguration, refurbishment, etc. of one or more systems of aircraft 4700.

Each of the processes of the service method 4600 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 47, aircraft 4700 produced by the service method 4600 may include airframe 4702 with a plurality of high-level systems 4704 and interior 4706. Examples of high-level systems 4704 include one or more of propulsion system 4708, electrical system 4710, hydraulic system 4712 and environmental system 4714. Any number of other systems may be included. Although an aerospace example is shown, the principles disclosed herein may be applied to other industries, such as the automotive industry. Accordingly, in addition to aircraft 4700, the principles disclosed herein may apply to other vehicles, e.g., land vehicles, marine vehicles, space vehicles, etc.

The disclosed methods 500, 600, 700, 800, 900, 1100, 1200, 1300, 1500, 1600, 1700, 1900, 2000, 2100, 2200, 2300, 2400, 2600, 2700, 2800, 3000, 3100, 3200, 3400, 4400, 4500, 4800, 4900 for layup and analysis of composite materials 3502 during fabrication of composite workpieces 300 and automated systems 100, 200, 3500 for layup and analysis of composite materials 3502 during fabrication of composite workpieces 300 may be used in fabrication of aircraft components. For example, components or subassemblies corresponding to component and subassembly manufacturing (block 4606) may be fabricated or manufactured in a manner similar to components or subassemblies produced while aircraft 4700 is in service (block 4612). Also, one or more examples of the system(s), method(s), or combination thereof may be utilized during production stages (block 4606 and block 4608), for example, by substantially expediting assembly of or reducing the cost of aircraft 4700. Similarly, one or more examples of the system or method realizations, or a combination thereof, may be utilized, for example and without limitation, while aircraft 4700 is in service (block 4612) and/or during maintenance and service (block 4614).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, various examples of the methods 500, 600, 700, 800, 900, 1100, 1200, 1300, 1500, 1600, 1700, 1900, 2000, 2100, 2200, 2300, 2400, 2600, 2700, 2800, 3000, 3100, 3200, 3400, 4400, 4500, 4800, 4900 for layup and analysis of composite materials 3502 during fabrication of composite workpieces 300 and automated systems 100, 200, 3500 for layup and analysis of composite materials 3502 during fabrication of composite workpieces 300 have been shown and described, modifications may occur to those skilled in the art upon reading the specification. The present application includes such modifications and is limited only by the scope of the claims.

Further examples are set out in the following clauses.

Clause 1. A method for layup and analysis of composite material during fabrication of a composite workpiece, comprising:
receiving design data for the layup of the composite material, the composite workpiece decomposed into multiple design zones, the design data comprising localized zone data for the multiple design zones;
processing the design data for multiple layers of the composite workpiece to determine as-planned fiber volume fill characteristics for the design zones of each layer individually and for the multiple layers collectively;
laying up a layer of the composite material for the composite workpiece based on the localized zone data for the layer; and
detecting as-built data for the layer using a quality detection device, the as-built data divided into an as-built grid structure that comprises a plurality of as-built grid cells.

Clause 2. The method of Clause 1, further comprising:
processing the as-built data for the layer to determine as-built fiber volume fill characteristics of the layer, the as-built fiber volume fill characteristics stored in the plurality of as-built grid cells; and
comparing the as-built fiber volume fill characteristics for the layer to the as-planned fiber volume fill characteristics to determine projected fiber volume fill ratios.

Clause 3. The method of Clause 2, further comprising:
laying up subsequent layers of the composite material for the composite workpiece based on the localized zone data for the subsequent layers;
detecting as-built data for each subsequent layer after the laying up of the corresponding subsequent layer using a quality detection device;
processing the as-built data for the subsequent layers to determine subsequent as-built fiber volume fill characteristics for each of the subsequent layers; and
processing the as-built fiber volume fill characteristics for the layer and for each of the subsequent layers to determine through-thickness as-built fiber volume fill characteristics for the design zones of each layer individually and for the multiple layers collectively.

Clause 4. The method of Clause 2 or 3, further comprising:
repeating the laying up, the detecting, the processing, and the comparing for each subsequent layer of the multiple layers; and
processing the projected fiber volume fill ratios for the multiple layers to determine a through-thickness projected fiber volume fill ratio for the design zones of each layer individually and for the multiple layers collectively.

Clause 5. The method of Clause 4, further comprising:
receiving fiber volume fill ratio requirements for each layer individually and for the multiple layers collectively;
comparing the projected fiber volume fill ratios for each layer individually to the fiber volume fill ratio requirements for the corresponding layer to determine a risk probability of not achieving the fiber volume fill ratio requirements for the composite workpiece after the laying up of each layer; and
after the laying up of each subsequent layer, processing the risk probability for each layer to determine a through-thickness risk probability for current layers on a layup mandrel.

Clause 6. The method of Clause 5, further comprising:
receiving a risk threshold for the risk probability at each layer individually and for the multiple layers collectively to categorize the risk probability as acceptable or unacceptable;
comparing the risk probability after the laying up of each layer to the risk threshold for the risk probability at the corresponding layer; and
after the laying up of each subsequent layer, processing the risk probability for each layer to determine a through-thickness risk probability for the current layers on the layup mandrel and comparing the through-thickness risk probability to the corresponding risk threshold for the current layers on the layup mandrel.

Clause 7. The method of Clause 6 wherein, where the through-thickness risk probability for the current layers on the layup mandrel exceeds the risk threshold, the through-thickness risk probability is unacceptable, the method further comprising:
optimizing the design data to form optimized design data for the layup of subsequent layers of the composite material during the fabrication of the composite workpiece to reduce the through-thickness risk probability of not achieving the fiber volume fill ratio requirements for the composite workpiece after the laying up of the subsequent layers;
processing the optimized design data for the subsequent layers of the layup to determine the as-planned fiber volume fill characteristics for the subsequent layers; and
laying up a next layer of the composite material over the current layers on the layup mandrel based on the optimized design data.

Clause 8. The method of Clause 7, the optimizing of the design data comprising:
optimizing path planning for at least a portion of a remainder of the composite workpiece to form an optimized path plan for the layup of at least one subsequent layer of the composite material during the fabrication of the composite workpiece to reduce the through-thickness risk probability of not achieving the fiber volume fill ratio requirements for the composite workpiece.

Clause 9. The method of Clause 7 or 8, the optimizing of the design data comprising:
optimizing fiber volume fill ratio requirements for at least a portion of a remainder of the composite workpiece to form an optimized fiber volume fill ratio requirement for the layup of at least one subsequent layer of the composite material during the fabrication of the composite workpiece to reduce the through-thickness risk probability of not achieving the fiber volume fill ratio requirements for the composite workpiece.

Clause 10. The method of any of Clauses 7 to 9, the optimizing of the design data comprising:
optimizing numerical control programming for at least a portion of a remainder of the composite workpiece to form an optimized numerical control program for the layup of at least one subsequent layer of the composite material during the fabrication of the composite workpiece to reduce the through-thickness risk probability of not achieving the fiber volume fill ratio requirements for the composite workpiece.

Clause 11. The method of any of Clauses 6 wherein, where the through-thickness risk probability for the current layers on the layup mandrel does not exceed the risk threshold, the through-thickness risk probability is acceptable, the method further comprising:
processing the design data for a next layer of the layup to determine the as-planned fiber volume fill characteristics of the next layer; and
laying up the next layer of the composite material over the current layers on the layup mandrel based on the design data.

Clause 12. The method of any of Clauses 4 to 11, further comprising:
receiving fiber volume fill ratio requirements for one or more design zone of each layer individually and for the multiple layers collectively;
comparing the projected fiber volume fill ratios for the one or more design zone to the fiber volume fill ratio requirements for the corresponding design zone to determine a risk probability of not achieving the fiber volume fill ratio requirements for the corresponding design zone of the composite workpiece after the laying up of each layer; and
after the laying up of each subsequent layer, processing the risk probability for the corresponding design zone of each layer to determine a through-thickness risk probability for current layers on a layup mandrel.

Clause 13. The method of Clause 12, further comprising:
receiving a risk threshold for the risk probability of the one or more design zone at each layer individually and for the multiple layers collectively to categorize the risk probability as acceptable or unacceptable at each of the one or more design zone;
comparing the risk probability after the laying up of each layer to the risk threshold for the risk probability at the corresponding design zone; and
after the laying up of each subsequent layer, processing the risk probability for each of the one or more design zone for each layer to determine a through-thickness risk probability for the current layers on the layup mandrel and comparing the through-thickness risk probability to the corresponding risk threshold for the current layers on the layup mandrel.

Clause 14. The method of Clause 13 wherein, where the through-thickness risk probability for the current layers on the layup mandrel exceeds the risk threshold, the through-thickness risk probability is unacceptable, the method further comprising:
optimizing the design data to form optimized design data for the layup of the one or more design zone in subsequent layers of the composite material during the fabrication of the composite workpiece to reduce the through-thickness risk probability of not achieving the fiber volume fill ratio requirements for the one or more design zone in the composite workpiece after the laying up of the subsequent layers;
processing the optimized design data for the one or more design zone in the subsequent layers of the layup to determine the as-planned fiber volume fill characteristics for the subsequent layers; and
laying up a next layer of the composite material over the current layers on the layup mandrel based on the optimized design data for the one or more design zone.

Clause 15. The method of Clause 14, the optimizing of the design data comprising:
optimizing path planning for the layup of the one or more design zone for at least a portion of a remainder of the subsequent layers in the composite workpiece to form an optimized path plan for the layup of at least one subsequent layer of the composite material during the fabrication of the composite workpiece to reduce the through-thickness risk probability of not achieving the fiber volume fill ratio requirements for the composite workpiece.

Clause 16. The method of Clause 14 or 15, the optimizing of the design data comprising:
optimizing fiber volume fill ratio requirements for the layup of the one or more design zone for at least a portion of a remainder of the subsequent layers in the composite workpiece to form an optimized fiber volume fill ratio requirement for the layup of at least one subsequent layer of the composite material during the fabrication of the composite workpiece to reduce the through-thickness risk probability of not achieving the fiber volume fill ratio requirements for the composite workpiece.

Clause 17. The method of any of Clauses 14 to 16, the optimizing of the design data comprising:
optimizing numerical control programming for the layup of the one or more design zone for at least a portion of a remainder of the subsequent layers in the composite workpiece to form an optimized numerical control program for the layup of at least one subsequent layer of the composite material during the fabrication of the composite workpiece to reduce the through-thickness risk probability of not achieving the fiber volume fill ratio requirements for the composite workpiece.

Clause 18. The method of any of Clauses 13 to 17 wherein, where the through-thickness risk probability for the current layers on the layup mandrel does not exceed the risk threshold, the through-thickness risk probability is acceptable, the method further comprising:
processing the design data for a next layer of the layup to determine the as-planned fiber volume fill characteristics of the next layer; and
laying up the next layer of the composite material over the current layers on the layup mandrel based on the design data.

Clause 19. The method of any of Clauses 1 to 18 wherein at least a portion of the multiple design zones are further decomposed into a design grid structure with a plurality of design grid cells for the corresponding design zone, the design data further comprising localized grid data for the design grid cells of the design grid structures.

Clause 20. The method of Clause 19, further comprising:
processing the design data for the multiple layers of the composite workpiece to determine the as-planned fiber volume fill characteristics for the design grid cells of the design grid structures of each layer individually and for the multiple layers collectively.

Clause 21. The method of Clause 20 wherein the laying up of the layer is also based on the localized grid data for the layer.

Clause 22..The method of Clause 21, further comprising:
processing the as-built data for the layer to determine as-built fiber volume fill characteristics of the layer, the as-built fiber volume fill characteristics stored in the plurality of as-built grid cells; and
comparing the as-built fiber volume fill characteristics for the layer to the as-planned fiber volume fill characteristics to determine projected fiber volume fill ratios.

Clause 23. The method of Clause 22, further comprising:
repeating the laying up, the detecting, the processing, and the comparing for each subsequent layer of the multiple layers; and
processing the projected fiber volume fill ratios for the multiple layers to determine a through-thickness projected fiber volume fill ratio for the design zones and the design grid structures of each layer individually and for the multiple layers collectively.

Clause 24. The method of Clause 23, further comprising:
receiving fiber volume fill ratio requirements for one or more design grid cell in one or more design grid structure of each layer individually and for the multiple layers collectively;
comparing the projected fiber volume fill ratios for the one or more design grid cell to the fiber volume fill ratio requirements for the corresponding design grid cell to determine a risk probability of not achieving the fiber volume fill ratio requirements for the corresponding design grid cell of the composite workpiece after the laying up of each layer; and
after the laying up of each subsequent layer, processing the risk probability for the corresponding design grid cell of each layer to determine a through-thickness risk probability for current layers on a layup mandrel.

Clause 25. The method of Clause 24, further comprising:
receiving a risk threshold for the risk probability for one or more design grid cell in one or more design grid structure of each layer individually and for the multiple layers collectively to categorize the risk probability as acceptable or unacceptable at each of the one or more design grid cell;
comparing the risk probability after the laying up of each layer to the risk threshold for the risk probability at the corresponding design grid cell; and
after the laying up of each subsequent layer, processing the risk probability for the corresponding design grid cell of each layer to determine a through-thickness risk probability for the current layers on the layup mandrel and comparing the through-thickness risk probability to the corresponding risk threshold for the current layers on the layup mandrel.

Clause 26. The method of Clause 25 wherein, where the through-thickness risk probability for the current layers on the layup mandrel exceeds the risk threshold, the through-thickness risk probability is unacceptable, the method further comprising:
optimizing the design data to form optimized design data for the layup of the one or more design grid cell in subsequent layers of the composite material during the fabrication of the composite workpiece to reduce the through-thickness risk probability of not achieving the fiber volume fill ratio requirements for the one or more design grid cell in the composite workpiece after the laying up of the subsequent layers;
processing the optimized design data for the one or more design grid cell in the subsequent layers of the layup to determine the as-planned fiber volume fill characteristics for the subsequent layers; and
laying up a next layer of the composite material over the current layers on the layup mandrel based on the optimized design data for the one or more design grid cell.

Clause 27. The method of Clause 26, the optimizing of the design data comprising:
optimizing path planning for the layup of the one or more design grid cell for at least a portion of a remainder of the subsequent layers in the composite workpiece to form an optimized path plan for the layup of at least one subsequent layer of the composite material during the fabrication of the composite workpiece to reduce the through-thickness risk probability of not achieving the fiber volume fill ratio requirements for the composite workpiece.

Clause 28. The method of Clause 26 or 27, the optimizing of the design data comprising:
optimizing fiber volume fill ratio requirements for the layup of the one or more design grid cell for at least a portion of a remainder of the subsequent layers in the composite workpiece to form an optimized fiber volume fill ratio requirement for the layup of at least one subsequent layer of the composite material during the fabrication of the composite workpiece to reduce the through-thickness risk probability of not achieving the fiber volume fill ratio requirements for the composite workpiece.

Clause 29. The method of any of Clauses 26 to 28, the optimizing of the design data comprising:
optimizing numerical control programming for the layup of the one or more design grid cell for at least a portion of a remainder of the subsequent layers in the composite workpiece to form an optimized numerical control program for the layup of at least one subsequent layer of the composite material during the fabrication of the composite workpiece to reduce the through-thickness risk probability of not achieving the fiber volume fill ratio requirements for the composite workpiece.

Clause 30. The method of any of Clauses 25 to 29 wherein, where the through-thickness risk probability for the current layers on the layup mandrel does not exceed the risk threshold, the through-thickness risk probability is acceptable, the method further comprising:
processing the design data for a next layer of the layup to determine the as-planned fiber volume fill characteristics of the next layer; and
laying up the next layer of the composite material over the current layers on the layup mandrel based on the design data.

Clause 31. A method for layup and analysis of composite material during fabrication of a composite workpiece, comprising:
receiving design data for the layup of the composite material, the composite workpiece decomposed into multiple design zones, the design data comprising localized zone data for the multiple design zones;
processing the design data for multiple layers of the composite workpiece to determine as-planned fiber angle deviation characteristics for the design zones of each layer individually and for the multiple layers collectively;
laying up a layer of the composite material for the composite workpiece based on the localized zone data for the layer; and
detecting as-built data for the layer using a quality detection device, the as-built data divided into an as-built grid structure comprises a plurality of as-built grid cells.

Clause 32. The method of Clause 31, further comprising:
processing the as-built data for the layer to determine as-built fiber angle deviation characteristics of the layer, the as-built fiber angle deviation characteristics stored in the plurality of as-built grid cells; and
comparing the as-built fiber angle deviation characteristics for the layer to the as-planned fiber angle deviation characteristics to determine projected fiber angle deviation ratios.

Clause 33. The method of Clause 32, further comprising:
laying up subsequent layers of the composite material for the composite workpiece based on the localized zone data for the subsequent layers;
detecting as-built data for each subsequent layer after the laying up of the corresponding subsequent layer using a quality detection device;
processing the as-built data for the subsequent layers to determine subsequent as-built fiber volume fill characteristics for each of the subsequent layers; and
processing the as-built fiber volume fill characteristics for the layer and for each of the subsequent layers to determine through-thickness as-built fiber volume fill characteristics for the design zones of each layer individually and for the multiple layers collectively.

Clause 34. The method of Clause 32 or 33, further comprising:
repeating the laying up, the detecting, the processing, and the comparing for each subsequent layer of the multiple layers; and
processing the projected fiber angle deviation ratios for the multiple layers to determine a through-thickness projected fiber angle deviation ratio for the design zones of each layer individually and for the multiple layers collectively.

Clause 35. The method of Clause 34, further comprising:
receiving fiber angle deviation ratio requirements for each layer individually and for the multiple layers collectively;
comparing the projected fiber angle deviation ratios for each layer individually to the fiber angle deviation ratio requirements for the corresponding layer to determine a risk probability of not achieving the fiber angle deviation ratio requirements for the composite workpiece after the laying up of each layer; and
after the laying up of each subsequent layer, processing the risk probability for each layer to determine a through-thickness risk probability for current layers on a layup mandrel.

Clause 36. The method of Clause 35, further comprising:
receiving a risk threshold for the risk probability at each layer individually and for the multiple layers collectively to categorize the risk probability as acceptable or unacceptable;
comparing the risk probability after the laying up of each layer to the risk threshold for the risk probability at the corresponding layer; and
after the laying up of each subsequent layer, processing the risk probability for each layer to determine a through-thickness risk probability for the current layers on the layup mandrel and comparing the through-thickness risk probability to the corresponding risk threshold for the current layers on the layup mandrel.

Clause 37. The method of Clause 36 wherein, where the through-thickness risk probability for the current layers on the layup mandrel exceeds the risk threshold, the through-thickness risk probability is unacceptable, the method further comprising:
optimizing the design data to form optimized design data for the layup of subsequent layers of the composite material during the fabrication of the composite workpiece to reduce the through-thickness risk probability of not achieving the fiber angle deviation ratio requirements for the composite workpiece after the laying up of the subsequent layers;
processing the optimized design data for the subsequent layers of the layup to determine the as-planned fiber angle deviation characteristics for the subsequent layers; and
laying up a next layer of the composite material over the current layers on the layup mandrel based on the optimized design data.

Clause 38. The method of Clause 37, the optimizing of the design data comprising:
optimizing path planning for at least a portion of a remainder of the composite workpiece to form an optimized path plan for the layup of at least one subsequent layer of the composite material during the fabrication of the composite workpiece to reduce the through-thickness risk probability of not achieving the fiber angle deviation ratio requirements for the composite workpiece.

Clause 39. The method of Clause 37 or 38, the optimizing of the design data comprising:
optimizing fiber angle deviation ratio requirements for at least a portion of a remainder of the composite workpiece to form an optimized fiber angle deviation ratio requirement for the layup of at least one subsequent layer of the composite material during the fabrication of the composite workpiece to reduce the through-thickness risk probability of not achieving the fiber angle deviation ratio requirements for the composite workpiece.

Clause 40. The method of any of Clauses 37 to 39, the optimizing of the design data comprising:
optimizing numerical control programming for at least a portion of a remainder of the composite workpiece to form an optimized numerical control program for the layup of at least one subsequent layer of the composite material during the fabrication of the composite workpiece to reduce the through-thickness risk probability of not achieving the fiber angle deviation ratio requirements for the composite workpiece.

Clause 41. The method of any of Clauses 36 to 40 wherein, where the through-thickness risk probability for the current layers on the layup mandrel does not exceed the risk threshold, the through-thickness risk probability is acceptable, the method further comprising:
processing the design data for a next layer of the layup to determine the as-planned fiber angle deviation characteristics of the next layer; and
laying up the next layer of the composite material over the current layers on the layup mandrel based on the design data.

Clause 42. The method of any of Clauses 34 to 41, further comprising:
receiving fiber angle deviation ratio requirements for one or more design zone of each layer individually and for the multiple layers collectively;
comparing the projected fiber angle deviation ratios for the one or more design zone to the fiber angle deviation ratio requirements for the corresponding design zone to determine a risk probability of not achieving the fiber angle deviation ratio requirements for the corresponding design zone of the composite workpiece after the laying up of each layer; and
after the laying up of each subsequent layer, processing the risk probability for the corresponding design zone of each layer on a layup mandrel to determine a through-thickness risk probability for current layers on the layup mandrel.

Clause 43. The method of Clause 42, further comprising:
receiving a risk threshold for the risk probability of the one or more design zone at each layer individually and for the multiple layers collectively to categorize the risk probability as acceptable or unacceptable at each of the one or more design zone;
comparing the risk probability after the laying up of each layer to the risk threshold for the risk probability at the corresponding design zone; and
after the laying up of each subsequent layer, processing the risk probability for each of the one or more design zone for each layer to determine a through-thickness risk probability for the current layers on the layup mandrel and comparing the through-thickness risk probability to the corresponding risk threshold for the current layers on the layup mandrel.

Clause 44. The method of Clause 43 wherein, where the through-thickness risk probability for the current layers on the layup mandrel exceeds the risk threshold, the through-thickness risk probability is unacceptable, the method further comprising:
optimizing the design data to form optimized design data for the layup of the one or more design zone in subsequent layers of the composite material during the fabrication of the composite workpiece to reduce the through-thickness risk probability of not achieving the fiber angle deviation ratio requirements for the one or more design zone in the composite workpiece after the laying up of the subsequent layers;
processing the optimized design data for the one or more design zone in the subsequent layers of the layup to determine the as-planned fiber angle deviation characteristics for the subsequent layers; and
laying up a next layer of the composite material over the current layers on the layup mandrel based on the optimized design data for the one or more design zone.

Clause 45. The method of Clause 44, the optimizing of the design data comprising:
optimizing path planning for the layup of the one or more design zone for at least a portion of a remainder of the subsequent layers in the composite workpiece to form an optimized path plan for the layup of at least one subsequent layer of the composite material during the fabrication of the composite workpiece to reduce the through-thickness risk probability of not achieving the fiber angle deviation ratio requirements for the composite workpiece.

Clause 46. The method of Clause 44 or 45, the optimizing of the design data comprising:
optimizing fiber angle deviation ratio requirements for the layup of the one or more design zone for at least a portion of a remainder of the subsequent layers in the composite workpiece to form an optimized fiber angle deviation ratio requirement for the layup of at least one subsequent layer of the composite material during the fabrication of the composite workpiece to reduce the through-thickness risk probability of not achieving the fiber angle deviation ratio requirements for the composite workpiece.

Clause 47. The method of any Clauses 44 to 46, the optimizing of the design data comprising:
optimizing numerical control programming for the layup of the one or more design zone for at least a portion of a remainder of the subsequent layers in the composite workpiece to form an optimized numerical control program for the layup of at least one subsequent layer of the composite material during the fabrication of the composite workpiece to reduce the through-thickness risk probability of not achieving the fiber angle deviation ratio requirements for the composite workpiece.

Clause 48. The method of any Clauses 43 to 47 wherein, where the through-thickness risk probability for the current layers on the layup mandrel does not exceed the risk threshold, the through-thickness risk probability is acceptable, the method further comprising:
processing the design data for a next layer of the layup to determine the as-planned fiber angle deviation characteristics of the next layer; and
laying up the next layer of the composite material over the current layers on the layup mandrel based on the design data.

Clause 49. The method of any of Clauses 31 to 48 wherein at least a portion of the multiple design zones are further decomposed into a design grid structure with a plurality of design grid cells for the corresponding design zone, the design data further comprising localized grid data for the design grid cells of the design grid structures.

Clause 50. The method of Clause 49, further comprising:
processing the design data for the multiple layers of the composite workpiece to determine the as-planned fiber angle deviation characteristics for the design grid cells of the design grid structures of each layer individually and for the multiple layers collectively.

Clause 51. The method of Clause 50 wherein the laying up of the layer is also based on the localized grid data for the layer.

Clause 52. The method of Clause 51, further comprising:
processing the as-built data for the layer to determine as-built fiber angle deviation characteristics of the layer, the as-built fiber angle deviation characteristics stored in the plurality of as-built grid cells; and
comparing the as-built fiber angle deviation characteristics for the layer to the as-planned fiber angle deviation characteristics to determine projected fiber angle deviation ratios.

Clause 53. The method of Clause 52, further comprising:
repeating the laying up, the detecting, the processing, and the comparing for each subsequent layer of the multiple layers; and
processing the projected fiber angle deviation ratios for the multiple layers to determine a through-thickness projected fiber angle deviation ratio for the design zones and design grid structures of each layer individually and for the multiple layers collectively.

Clause 54. The method of Clause 53, further comprising:
receiving fiber angle deviation ratio requirements for one or more design grid cell in one or more design grid structure of each layer individually and for the multiple layers collectively;
comparing the projected fiber angle deviation ratios for the one or more design grid cell to the fiber angle deviation ratio requirements for the corresponding design grid cell to determine a risk probability of not achieving the fiber angle deviation ratio requirements for the corresponding design grid cell of the composite workpiece after the laying up of each layer; and
after the laying up of each subsequent layer, processing the risk probability for the corresponding design grid cell of each layer on a layup mandrel to determine a through-thickness risk probability for current layers on the layup mandrel.

Clause 55. The method of Clause 54, further comprising:
receiving a risk threshold for the risk probability for one or more design grid cell in one or more design grid structure of each layer individually and for the multiple layers collectively to categorize the risk probability as acceptable or unacceptable at each of the one or more design grid cell;
comparing the risk probability after the laying up of each layer to the risk threshold for the risk probability at the corresponding design grid cell; and
after the laying up of each subsequent layer, processing the risk probability for the corresponding design grid cell of each layer to determine a through-thickness risk probability for the current layers on the layup mandrel and comparing the through-thickness risk probability to the corresponding risk threshold for the current layers on the layup mandrel.

Clause 56. The method of Clause 55 wherein, where the through-thickness risk probability for the current layers on the layup mandrel exceeds the risk threshold, the through-thickness risk probability is unacceptable, the method further comprising:
optimizing the design data to form optimized design data for the layup of the one or more design grid cell in subsequent layers of the composite material during the fabrication of the composite workpiece to reduce the through-thickness risk probability of not achieving the fiber angle deviation ratio requirements for the one or more design grid cell in the composite workpiece after the laying up of the subsequent layers;
processing the optimized design data for the one or more design grid cell in the subsequent layers of the layup to determine the as-planned fiber angle deviation characteristics for the subsequent layers; and
laying up a next layer of the composite material over the current layers on the layup mandrel based on the optimized design data for the one or more design grid cell.

Clause 57. The method of Clause 56, the optimizing of the design data comprising:
optimizing path planning for the layup of the one or more design grid cell for at least a portion of a remainder of the subsequent layers in the composite workpiece to form an optimized path plan for the layup of at least one subsequent layer of the composite material during the fabrication of the composite workpiece to reduce the through-thickness risk probability of not achieving the fiber angle deviation ratio requirements for the composite workpiece.

Clause 58. The method of Clause 56 or 57, the optimizing of the design data comprising:
optimizing fiber angle deviation ratio requirements for the layup of the one or more design grid cell for at least a portion of a remainder of the subsequent layers in the composite workpiece to form an optimized fiber angle deviation ratio requirement for the layup of at least one subsequent layer of the composite material during the fabrication of the composite workpiece to reduce the through-thickness risk probability of not achieving the fiber angle deviation ratio requirements for the composite workpiece.

Clause 59. The method of any of Clauses 56 to 58, the optimizing of the design data comprising:
optimizing numerical control programming for the layup of the one or more design grid cell for at least a portion of a remainder of the subsequent layers in the composite workpiece to form an optimized numerical control program for the layup of at least one subsequent layer of the composite material during the fabrication of the composite workpiece to reduce the through-thickness risk probability of not achieving the fiber angle deviation ratio requirements for the composite workpiece.

Clause 60. The method of any of Clauses 55 to 59 wherein, where the through-thickness risk probability for the current layers on the layup mandrel does not exceed the risk threshold, the through-thickness risk probability is acceptable, the method further comprising:
processing the design data for a next layer of the layup to determine the as-planned fiber angle deviation characteristics of the next layer; and
laying up the next layer of the composite material over the current layers on the layup mandrel based on the design data.

Clause 61. An automated system for layup and analysis of composite material during fabrication of a composite workpiece, comprising:
at least one analytical computing device storing a design data analysis application program, a localized zone data analysis application program and a localized grid data analysis application program, wherein the at least one analytical computing device is configured to receive design data for the layup of the composite material from a design data storage device via a communication network, the composite workpiece decomposed into multiple design zones, at least a portion of the multiple design zones further decomposed into a design grid structure with a plurality of design grid cells for the corresponding design zone, the design data comprising localized zone data for the multiple design zones, the design data further comprising localized grid data for the design grid cells of the design grid structures;
a robotic manipulator in a fabrication cell and in operative communication with the at least one analytical computing device, the robotic manipulator comprising a composite material placement device;
a layup mandrel in the fabrication cell and configured for layup of the composite material, wherein a layer of the composite material is laid up on the layup mandrel in the fabrication cell, a second layer of the composite material is laid up over the layer and subsequent layers of the composite material are laid up over current layers; and
a quality detection device in the fabrication cell and in operative communication with the at least one analytical computing device.

Clause 62. The automated system of Clause 61, the at least one analytical computing device, comprising:
a network interface in operative communication with a communication network;
at least one processor and associated memory, the at least one processor in operative communication with a design data storage device via the network interface and the communication network;
at least one application program storage device in operative communication with the at least one processor and storing the design data analysis application program, the localized zone data analysis application program and the localized grid data analysis application program, the at least one application program storage device also storing one or more of an as-built data analysis application program, a projected fiber volume fill ratio application program, a through-thickness fiber volume fill ratio application program, a fiber volume fill risk application program, a through-thickness risk probability application program, a design data optimization application program, a projected fiber angle deviation ratio application program, a through-thickness fiber angle deviation ratio application program and a fiber angle deviation risk application program; and
at least one local data storage device configured to at least temporarily store design data, the at least one local data storage device also storing one or more of as-planned fiber volume fill characteristics, as-built data, as-built fiber volume fill characteristics, through-thickness as-built fiber volume fill characteristics, projected fiber volume fill ratios, a through-thickness projected fiber volume fill ratio, fiber volume fill ratio requirements, a risk probability, a through-thickness risk probability, a risk threshold, optimized design data, an optimized path plan, an optimized fiber volume fill ratio requirement, an optimized numerical control program, as-planned fiber angle deviation characteristics, as-built fiber angle deviation characteristics, projected fiber angle deviation ratios, a through-thickness projected fiber angle deviation ratio, fiber angle deviation ratio requirements and an optimized fiber angle deviation ratio requirement.

Clause 63. The automated system of Clause 61 or 62 wherein the at least one analytical computing device, in conjunction with running the design data analysis application program, is configured to process the design data for multiple layers of the composite workpiece to determine as-planned fiber volume fill characteristics for the design zones and the design grid cells of the design grid structures of each layer individually and for the multiple layers collectively,
wherein the robotic manipulator and the composite material placement device are configured to layup a layer of the composite material for the composite workpiece on the layup mandrel in the fabrication cell based on the localized zone data for the layer and the localized grid data for the layer, and
wherein, after the layup of the layer, the quality detection device is configured to detect as-built data for the layer using a quality detection device, the as-built data divided into an as-built grid structure that comprises a plurality of as-built grid cells.

Clause 64. The automated system of Clause 63 wherein the at least one analytical computing device, in conjunction with running an as-built data analysis application program, is configured to process the as-built data for the layer to determine as-built fiber volume fill characteristics of the layer,
wherein the at least one analytical computing device, in conjunction with running a projected fiber volume fill ratio application program, is configured to compare the as-built fiber volume fill characteristics for the layer to the as-planned fiber volume fill characteristics to determine projected fiber volume fill ratios.

Clause 65. The automated system of Clause 64 wherein the automated system is configured to repeat laying up of the composite material, detecting of the as-built data, processing of the as-built data, and comparing the as-built fiber volume fill characteristics to the as-planned fiber volume fill characteristics for each subsequent layer of the multiple layers, and
wherein the at least one analytical computing device, in conjunction with running a through-thickness fiber volume fill ratio application program, is configured to process the projected fiber volume fill ratios for the multiple layers to determine a through-thickness projected fiber volume fill ratio for the design zones and the design grid structures of each layer individually and for the multiple layers collectively.

Clause 66. The automated system of Clause 65 wherein the at least one analytical computing device is configured to receive fiber volume fill ratio requirements for each layer individually and for the multiple layers collectively from the design data storage device via the communication network,
wherein the at least one analytical computing device, in conjunction with running a fiber volume fill risk application program, is configured to compare the projected fiber volume fill ratios for each layer individually to the fiber volume fill ratio requirements for the corresponding layer to determine a risk probability of not achieving the fiber volume fill ratio requirements for the composite workpiece each layer is laid up, and
wherein, each subsequent layer is laid up, the at least one analytical computing device, in conjunction with running a through-thickness risk probability application program, is configured to process the risk probability for each layer on the layup mandrel to determine a through-thickness risk probability for current layers on the layup mandrel.

Clause 67. The automated system of Clause 66 wherein the at least one analytical computing device is configured to receive a risk threshold for the risk probability at each layer individually and for the multiple layers collectively to categorize the risk probability as acceptable or unacceptable from the design data storage device via the communication network,
wherein the at least one analytical computing device, in conjunction with running the fiber volume fill risk application program, is configured to compare the risk probability after each layer is laid up to the risk threshold for the risk probability at the corresponding layer, and
wherein, after each subsequent layer is laid up, the at least one analytical computing device, in conjunction with running the through-thickness risk probability application program, is configured to process the risk probability for each layer on the layup mandrel to determine a through-thickness risk probability for the current layers on the layup mandrel and comparing the through-thickness risk probability to the corresponding risk threshold for the current layers on the layup mandrel.

Clause 68. The automated system of Clause 67 wherein, where the through-thickness risk probability for the current layers on the layup mandrel exceeds the risk threshold, the through-thickness risk probability is unacceptable,
wherein the at least one analytical computing device, in conjunction with running a design data optimization application program, is configured to optimize the design data to form optimized design data for the layup of subsequent layers of the composite material during the fabrication of the composite workpiece to reduce the through-thickness risk probability of not achieving the fiber volume fill ratio requirements for the composite workpiece after the subsequent layers are laid up,
wherein the at least one analytical computing device, in conjunction with running the design data analysis application program, is configured to process the optimized design data for the subsequent layers of the layup to determine the as-planned fiber volume fill characteristics for the subsequent layers, and
wherein the robotic manipulator and the composite material placement device are configured to layup a next layer of the composite material over the current layers on the layup mandrel based on the optimized design data.

Clause 69. The automated system of Clause 67 or 68 wherein, where the through-thickness risk probability for the current layers on the layup mandrel does not exceed the risk threshold, the through-thickness risk probability is acceptable,
wherein the at least one analytical computing device, in conjunction with running the design data analysis application program, is configured to process the design data for a next layer of the layup to determine the as-planned fiber volume fill characteristics of the next layer, and
wherein the robotic manipulator and the composite material placement device are configured to layup the next layer of the composite material over the current layers on the layup mandrel based on the design data.

Clause 70. The automated system of any of Clauses 65 to 69 wherein the at least one analytical computing device is configured to receive fiber volume fill ratio requirements for one or more design zone of each layer individually and for the multiple layers collectively from the design data storage device via the communication network,
wherein the at least one analytical computing device, in conjunction with running a fiber volume fill risk application program, is configured to compare the projected fiber volume fill ratios for the one or more design zone to the fiber volume fill ratio requirements for the corresponding design zone to determine a risk probability of not achieving the fiber volume fill ratio requirements for the corresponding design zone of the composite workpiece after each layer is laid up, and
wherein, after each subsequent layer is laid up, the at least one analytical computing device, in conjunction with running a through-thickness risk probability application program, is configured to process the risk probability for the corresponding design zone of each layer on the layup mandrel to determine a through-thickness risk probability for current layers on the layup mandrel.

Clause 71. The automated system of Clause 70 wherein the at least one analytical computing device is configured to receive a risk threshold for the risk probability of the one or more design zone at each layer individually and for the multiple layers collectively to categorize the risk probability as acceptable or unacceptable at each of the one or more design zone from the design data storage device via the communication network,
wherein the at least one analytical computing device, in conjunction with running the fiber volume fill risk application program, is configured to compare the risk probability after each layer is laid up to the risk threshold for the risk probability at the corresponding design zone, and
wherein, after each subsequent layer is laid up, the at least one analytical computing device, in conjunction with running the through-thickness risk probability application program, is configured to process the risk probability for each of the one or more design zone for each layer on the layup mandrel to determine a through-thickness risk probability for the current layers on the layup mandrel and comparing the through-thickness risk probability to the corresponding risk threshold for the current layers on the layup mandrel.

Clause 72. The automated system of Clause 71 wherein, where the through-thickness risk probability for the current layers on the layup mandrel exceeds the risk threshold, the through-thickness risk probability is unacceptable,
wherein the at least one analytical computing device, in conjunction with running a design data optimization application program, is configured to optimize the design data to form optimized design data for the layup of the one or more design zone in subsequent layers of the composite material during the fabrication of the composite workpiece to reduce the through-thickness risk probability of not achieving the fiber volume fill ratio requirements for the one or more design zone in the composite workpiece after the subsequent layers are laid up,
wherein the at least one analytical computing device, in conjunction with running the design data analysis application program, is configured to process the optimized design data for the one or more design zone in the subsequent layers of the layup to determine the as-planned fiber volume fill characteristics for the subsequent layers, and
wherein the robotic manipulator and the composite material placement device are configured to layup a next layer of the composite material over the current layers on the layup mandrel based on the optimized design data for the one or more design zone.

Clause 73. The automated system of Clause 71 or 72 wherein, where the through-thickness risk probability for the current layers on the layup mandrel does not exceed the risk threshold, the through-thickness risk probability is acceptable,
wherein the at least one analytical computing device, in conjunction with running the design data analysis application program, is configured to process the design data for a next layer of the layup to determine the as-planned fiber volume fill characteristics of the next layer, and
wherein the robotic manipulator and the composite material placement device are configured to layup the next layer of the composite material over the current layers on the layup mandrel based on the design data.

Clause 74. The automated system of any of Clauses 65 to 73 wherein the at least one analytical computing device is configured to receive fiber volume fill ratio requirements for one or more design grid cell in one or more design grid structure of each layer individually and for the multiple layers collectively from the design data storage device via the communication network,
wherein the at least one analytical computing device, in conjunction with running a fiber volume fill risk application program, is configured to compare the projected fiber volume fill ratios for the one or more design grid cell to the fiber volume fill ratio requirements for the corresponding design grid cell to determine a risk probability of not achieving the fiber volume fill ratio requirements for the corresponding design grid cell of the composite workpiece after each layer is laid up, and
wherein, after each subsequent layer is laid up, the at least one analytical computing device, in conjunction with running a through-thickness risk probability application program, is configured to process the risk probability for the corresponding design grid cell of each layer on the layup mandrel to determine a through-thickness risk probability for current layers on the layup mandrel.

Clause 75. The automated system of Clause 74 wherein the at least one analytical computing device is configured to receive a risk threshold for the risk probability for one or more design grid cell in one or more design grid structure of each layer individually and for the multiple layers collectively to categorize the risk probability as acceptable or unacceptable at each of the one or more design grid cell from the design data storage device via the communication network,
wherein the at least one analytical computing device, in conjunction with running the fiber volume fill risk application program, is configured to compare the risk probability after each layer is laid up to the risk threshold for the risk probability at the corresponding design grid cell, and
wherein, after each subsequent layer is laid up, the at least one analytical computing device, in conjunction with running the through-thickness risk probability application program, is configured to process the risk probability for the corresponding design grid cell of each layer on the layup mandrel to determine a through-thickness risk probability for the current layers on the layup mandrel and comparing the through-thickness risk probability to the corresponding risk threshold for the current layers on the layup mandrel.

Clause 76. The automated system of Clause 75 wherein, where the through-thickness risk probability for the current layers on the layup mandrel exceeds the risk threshold, the through-thickness risk probability is unacceptable,
wherein the at least one analytical computing device, in conjunction with running a design data optimization application program, is configured to optimize the design data to form optimized design data for the layup of the one or more design grid cell in subsequent layers of the composite material during the fabrication of the composite workpiece to reduce the through-thickness risk probability of not achieving the fiber volume fill ratio requirements for the one or more design grid cell in the composite workpiece after the subsequent layers are laid up,
wherein the at least one analytical computing device, in conjunction with running the design data analysis application program, is configured to process the optimized design data for the one or more design grid cell in the subsequent layers of the layup to determine the as-planned fiber volume fill characteristics for the subsequent layers, and
wherein the robotic manipulator and the composite material placement device are configured to layup a next layer of the composite material over the current layers on the layup mandrel based on the optimized design data for the one or more design grid cell.

Clause 77. The automated system of Clause 75 or 76 wherein, where the through-thickness risk probability for the current layers on the layup mandrel does not exceed the risk threshold, the through-thickness risk probability is acceptable,
wherein the at least one analytical computing device, in conjunction with running the design data analysis application program, is configured to process the design data for a next layer of the layup to determine the as-planned fiber volume fill characteristics of the next layer, and
wherein the robotic manipulator and the composite material placement device are configured to layup the next layer of the composite material over the current layers on the layup mandrel based on the design data.

Clause 78. The automated system of any of Clauses 61 to 77 wherein the at least one analytical computing device, in conjunction with running the design data analysis application program, is configured to process the design data for multiple layers of the composite workpiece to determine as-planned fiber angle deviation characteristics for the design zones and the design grid cells of the design grid structures of each layer individually and for the multiple layers collectively,
wherein the robotic manipulator and the composite material placement device are configured to layup a layer of the composite material for the composite workpiece on the layup mandrel in the fabrication cell based on the localized zone data for the layer and the localized grid data for the layer, and
wherein, after the layup of the layer, the quality detection device is configured to detect as-built data for the layer using a quality detection device, the as-built data divided into an as-built grid structure that comprises a plurality of as-built grid cells.

Clause 79. The automated system of Clause 78 wherein the at least one analytical computing device, in conjunction with running an as-built data analysis application program, is configured to process the as-built data for the layer to determine as-built fiber angle deviation characteristics of the layer, and
wherein the at least one analytical computing device, in conjunction with running a projected fiber angle deviation ratio application program, is configured to compare the as-built fiber angle deviation characteristics for the layer to the as-planned fiber angle deviation characteristics to determine projected fiber angle deviation ratios.

Clause 80. The automated system of Clause 79 wherein the automated system is configured to repeat laying up of the composite material, detecting of the as-built data, processing of the as-built data, and comparing the as-built fiber angle deviation characteristics to the as-planned fiber angle deviation characteristics for each subsequent layer of the multiple layers, and
wherein the at least one analytical computing device, in conjunction with running a through-thickness fiber angle deviation ratio application program, is configured to process the projected fiber angle deviation ratios for the multiple layers to determine a through-thickness projected fiber angle deviation ratio for the design zones and design grid structures of each layer individually and for the multiple layers collectively.

Clause 81. The automated system of Clause 80 wherein the at least one analytical computing device is configured to receive fiber angle deviation ratio requirements for each layer individually and for the multiple layers collectively from the design data storage device via the communication network,
wherein the at least one analytical computing device, in conjunction with running a fiber angle deviation risk application program, is configured to compare the projected fiber angle deviation ratios for each layer individually to the fiber angle deviation ratio requirements for the corresponding layer to determine a risk probability of not achieving the fiber angle deviation ratio requirements for the composite workpiece after each layer is laid up, and
wherein, after each subsequent layer is laid up, the at least one analytical computing device, in conjunction with running a through-thickness risk probability application program, is configured to process the risk probability for each layer on the layup mandrel to determine a through-thickness risk probability for current layers on the layup mandrel.

Clause 82. The automated system of Clause 81 wherein the at least one analytical computing device is configured to receive a risk threshold for the risk probability at each layer individually and for the multiple layers collectively to categorize the risk probability as acceptable or unacceptable from the design data storage device via the communication network,
wherein the at least one analytical computing device, in conjunction with running the fiber angle deviation risk application program, is configured to compare the risk probability after each layer is laid up to the risk threshold for the risk probability at the corresponding layer; and
wherein, after each subsequent layer is laid up, the at least one analytical computing device, in conjunction with running a through-thickness risk application program, is configured to process the risk probability for each layer on the layup mandrel to determine a through-thickness risk probability for the current layers on the layup mandrel and comparing the through-thickness risk probability to the corresponding risk threshold for the current layers on the layup mandrel.

Clause 83. The automated system of Clause 82 wherein, where the through-thickness risk probability for the current layers on the layup mandrel exceeds the risk threshold, the through-thickness risk probability is unacceptable,
wherein the at least one analytical computing device, in conjunction with running a design data optimization application program, is configured to optimize the design data to form optimized design data for the layup of subsequent layers of the composite material during the fabrication of the composite workpiece to reduce the through-thickness risk probability of not achieving the fiber angle deviation ratio requirements for the composite workpiece after the subsequent layers are laid up,
wherein the at least one analytical computing device, in conjunction with running the design data analysis application program, is configured to process the optimized design data for the subsequent layers of the layup to determine the as-planned fiber angle deviation characteristics for the subsequent layers; and
wherein the robotic manipulator and the composite material placement device are configured to layup a next layer of the composite material over the current layers on the layup mandrel based on the optimized design data.

Clause 84. The automated system of Clause 82 or 83 wherein, where the through-thickness risk probability for the current layers on the layup mandrel does not exceed the risk threshold, the through-thickness risk probability is acceptable,
wherein the at least one analytical computing device, in conjunction with running the design data analysis application program, is configured to process the design data for a next layer of the layup to determine the as-planned fiber angle deviation characteristics of the next layer, and
wherein the robotic manipulator and the composite material placement device are configured to layup the next layer of the composite material over the current layers on the layup mandrel based on the design data.

Clause 85. The automated system of any of Clauses 80 to 84 wherein the at least one analytical computing device is configured to receive fiber angle deviation ratio requirements for one or more design zone of each layer individually and for the multiple layers collectively from the design data storage device via the communication network,
wherein the at least one analytical computing device, in conjunction with running a fiber angle deviation risk application program, is configured to compare the projected fiber angle deviation ratios for the one or more design zone to the fiber angle deviation ratio requirements for the corresponding design zone to determine a risk probability of not achieving the fiber angle deviation ratio requirements for the corresponding design zone of the composite workpiece after each layer is laid up, and
wherein, after each subsequent layer is laid up, the at least one analytical computing device, in conjunction with running a through-thickness risk probability application program, is configured to process the risk probability for the corresponding design zone of each layer on the layup mandrel to determine a through-thickness risk probability for current layers on the layup mandrel.

Clause 86. The automated system of Clause 85 wherein the at least one analytical computing device is configured to receive a risk threshold for the risk probability of the one or more design zone at each layer individually and for the multiple layers collectively to categorize the risk probability as acceptable or unacceptable at each of the one or more design zone from the design data storage device via the communication network,
wherein the at least one analytical computing device, in conjunction with running the fiber angle deviation risk application program, is configured to compare the risk probability after each layer is laid up to the risk threshold for the risk probability at the corresponding design zone, and
wherein, after each subsequent layer is laid up, the at least one analytical computing device, in conjunction with running a through-thickness risk application program, is configured to process the risk probability for each of the one or more design zone for each layer on the layup mandrel to determine a through-thickness risk probability for the current layers on the layup mandrel and comparing the through-thickness risk probability to the corresponding risk threshold for the current layers on the layup mandrel.

Clause 87. The automated system of Clause 86 wherein, where the through-thickness risk probability for the current layers on the layup mandrel exceeds the risk threshold, the through-thickness risk probability is unacceptable,
wherein the at least one analytical computing device, in conjunction with running a design data optimization application program, is configured to optimize the design data to form optimized design data for the layup of the one or more design zone in subsequent layers of the composite material during the fabrication of the composite workpiece to reduce the through-thickness risk probability of not achieving the fiber angle deviation ratio requirements for the one or more design zone in the composite workpiece after the subsequent layers are laid up,
wherein the at least one analytical computing device, in conjunction with running the design data analysis application program, is configured to process the optimized design data for the one or more design zone in the subsequent layers of the layup to determine the as-planned fiber angle deviation characteristics for the subsequent layers, and
wherein the robotic manipulator and the composite material placement device are configured to layup a next layer of the composite material over the current layers on the layup mandrel based on the optimized design data for the one or more design zone.

Clause 88. The automated system of Clause 86 or 87 wherein, where the through-thickness risk probability for the current layers on the layup mandrel does not exceed the risk threshold, the through-thickness risk probability is acceptable,
wherein the at least one analytical computing device, in conjunction with running the design data analysis application program, is configured to process the design data for a next layer of the layup to determine the as-planned fiber angle deviation characteristics of the next layer, and
wherein the robotic manipulator and the composite material placement device are configured to layup the next layer of the composite material over the current layers on the layup mandrel based on the design data.

Clause 89. The automated system of any of Clauses 80 to 81 wherein the at least one analytical computing device is configured to receive fiber angle deviation ratio requirements for one or more design grid cell in one or more design grid structure of each layer individually and for the multiple layers collectively from the design data storage device via the communication network,
wherein the at least one analytical computing device, in conjunction with running a fiber angle deviation risk application program, is configured to compare the projected fiber angle deviation ratios for the one or more design grid cell to the fiber angle deviation ratio requirements for the corresponding design grid cell to determine a risk probability of not achieving the fiber angle deviation ratio requirements for the corresponding design grid cell of the composite workpiece after each layer is laid up, and
wherein, after each subsequent layer is laid up, the at least one analytical computing device, in conjunction with running a through-thickness risk probability application program, is configured to process the risk probability for the corresponding design grid cell of each layer on the layup mandrel to determine a through-thickness risk probability for current layers on the layup mandrel.

Clause 90. The automated system of Clause 89 wherein the at least one analytical computing device is configured to receive a risk threshold for the risk probability for one or more design grid cell in one or more design grid structure of each layer individually and for the multiple layers collectively to categorize the risk probability as acceptable or unacceptable at each of the one or more design grid cell from the design data storage device via the communication network,
wherein the at least one analytical computing device, in conjunction with running the fiber angle deviation risk application program, is configured to compare the risk probability after each layer is laid up to the risk threshold for the risk probability at the corresponding design grid cell, and
wherein, after each subsequent layer is laid up, the at least one analytical computing device, in conjunction with running a through-thickness risk application program, is configured to process the risk probability for the corresponding design grid cell of each layer on the layup mandrel to determine a through-thickness risk probability for the current layers on the layup mandrel and comparing the through-thickness risk probability to the corresponding risk threshold for the current layers on the layup mandrel.

Clause 91. The automated system of Clause 90 wherein, where the through-thickness risk probability for the current layers on the layup mandrel exceeds the risk threshold, the through-thickness risk probability is unacceptable,
wherein the at least one analytical computing device, in conjunction with running a design data optimization application program, is configured to optimize the design data to form optimized design data for the layup of the one or more design grid cell in subsequent layers of the composite material during the fabrication of the composite workpiece to reduce the through-thickness risk probability of not achieving the fiber angle deviation ratio requirements for the one or more design grid cell in the composite workpiece after the subsequent layers are laid up,
wherein the at least one analytical computing device, in conjunction with running the design data analysis application program, is configured to process the optimized design data for the one or more design grid cell in the subsequent layers of the layup to determine the as-planned fiber angle deviation characteristics for the subsequent layers, and
wherein the robotic manipulator and the composite material placement device are configured to layup a next layer of the composite material over the current layers on the layup mandrel based on the optimized design data for the one or more design grid cell.

Clause 92. The automated system of Clause 90 or 91 wherein, where the through-thickness risk probability for the current layers on the layup mandrel does not exceed the risk threshold, the through-thickness risk probability is acceptable,
wherein the at least one analytical computing device, in conjunction with running the design data analysis application program, is configured to process the design data for a next layer of the layup to determine the as-planned fiber angle deviation characteristics of the next layer, and
wherein the robotic manipulator and the composite material placement device are configured to layup the next layer of the composite material over the current layers on the layup mandrel based on the design data.

Clause 93. A method for layup and analysis of composite material during fabrication of a composite workpiece, comprising:
dividing a structure into multiple design zones based upon design and stress analysis;
determining a design fill ratio for each of the multiple design zones;
detecting as-built data for each current layer using a quality detection device;
determining an as-built fill ratio for each of the multiple design zones that are laid up; and
comparing the as-built fill ratio for each zone to the design fill ratio.

Clause 94. The method of Clause 93, further comprising:
optimizing design data for the multiple design zones to form optimized design data for the layup of subsequent layers during the fabrication of the composite workpiece;
processing the optimized design data for the subsequent layers of the layup to determine the design fill ratio for the subsequent layers; and
laying up a next layer over the current layers based on the optimized design data.

Clause 95. The method of Clause 94, the optimizing of the design data comprising:
optimizing path planning for at least a portion of a remainder of the subsequent layers to form an optimized path plan for the layup of at least one subsequent layer during the fabrication of the composite workpiece.

Clause 96. The method of Clause 94 or 95, the optimizing of the design data comprising:
optimizing the design fill ratio for at least a portion of a remainder of the subsequent layers to form an optimized design fill ratio for the layup of at least one subsequent layer during the fabrication of the composite workpiece.

Clause 97. A method for layup and analysis of composite material during fabrication of a composite workpiece, comprising:
dividing a structure into multiple design zones based upon design and stress analysis;
determining a design angle of deviation for each of the multiple design zones;
detecting as-built data for each current layer using a quality detection device;
determining an as-built angle of deviation for each of the multiple design zones that are laid up; and
comparing the as-built angle of deviation for each zone to the design angle of deviation.

Clause 98. The method of Clause 97, further comprising:
optimizing design data for the multiple design zones to form optimized design data for the layup of subsequent layers during the fabrication of the composite workpiece;
processing the optimized design data for the subsequent layers of the layup to determine the design angle of deviation for the subsequent layers; and
laying up a next layer over the current layers based on the optimized design data.

Clause 99. The method of Clause 98, the optimizing of the design data comprising:
optimizing path planning for at least a portion of a remainder of the subsequent layers to form an optimized path plan for the layup of at least one subsequent layer during the fabrication of the composite workpiece.

Clause 100. The method of Clause 98 or 99, the optimizing of the design data comprising:
optimizing the design angle of deviation for at least a portion of a remainder of the subsequent layers to form an optimized design angle of deviation for the layup of at least one subsequent layer during the fabrication of the composite workpiece.

Clause 101. An automated system for layup and analysis of composite material during fabrication of a composite workpiece, comprising:
at least one analytical computing device storing a design data analysis application program, a localized zone data analysis application program and a localized grid data analysis application program, wherein the at least one analytical computing device is configured to receive design data for the layup of the composite material;
a robotic manipulator in a fabrication cell and in operative communication with the at least one analytical computing device, the robotic manipulator comprising a composite material placement device;
a layup mandrel in the fabrication cell and configured for layup of multiple layers the composite material; and
a quality detection device in the fabrication cell and in operative communication with the at least one analytical computing device,
wherein the at least one analytical computing device, in conjunction with running a design data optimization application program, is configured to optimize the design data to form optimized design data for the layup of subsequent layers of the composite material during the fabrication of the composite workpiece to reduce a through-thickness risk probability of not achieving fiber requirements for the composite workpiece after the subsequent layers are laid up,
wherein the at least one analytical computing device, in conjunction with running the design data analysis application program, is configured to process the optimized design data for the subsequent layers of the layup to determine as-planned fiber characteristics for the subsequent layers, and
wherein the robotic manipulator and the composite material placement device are configured to layup a next layer of the composite material over current layers currently on the layup mandrel based on the optimized design data.

## Claims

1. A method (500) for layup and analysis of composite material (3502) during fabrication of a composite workpiece (300), comprising:
receiving (502) design data (3634) for the layup of the composite material (3502), the composite workpiece (300) decomposed into multiple design zones (302), the design data (3634) comprising localized zone data (3702) for the multiple design zones (302);
processing (504) the design data (3634) for multiple layers (3522, 3524) of the composite workpiece (300) to determine as-planned fiber volume fill characteristics (3636) for the design zones (302) of each layer (3522, 3524) individually and for the multiple layers (3522, 3524) collectively;
laying up (506) a layer (3522) of the composite material (3502) for the composite workpiece (300) based on the localized zone data (3702) for the layer (3522); and
detecting (508) as-built data (3638) for the layer (3522) using a quality detection device (3520), the as-built data (3638) divided into an as-built grid structure (4300) that comprises a plurality of as-built grid cells (4302).

2. The method (500) of Claim 1, further comprising:
processing (510) the as-built data (3638) for the layer (3522) to determine as-built fiber volume fill characteristics (3640) of the layer (3522), the as-built fiber volume fill characteristics (3640) stored in the plurality of as-built grid cells (4302); and
comparing (512) the as-built fiber volume fill characteristics (3640) for the layer (3522) to the as-planned fiber volume fill characteristics (3636) to determine projected fiber volume fill ratios (3642).

3. The method (600) of Claim 2, further comprising:
laying up (602) subsequent layers (3524) of the composite material (3502) for the composite workpiece (300) based on the localized zone data (3702) for the subsequent layers (3524);
detecting (604) as-built data (3638) for each subsequent layer (3524) after the laying up (602) of the corresponding subsequent layer (3524) using a quality detection device (3520);
processing (606) the as-built data (3638) for the subsequent layers (3524) to determine subsequent as-built fiber volume fill characteristics (3640) for each of the subsequent layers (3524); and
processing (608) the as-built fiber volume fill characteristics (3640) for the layer (3522) and for each of the subsequent layers (3524) to determine through-thickness as-built fiber volume fill characteristics (3641) for the design zones (302) of each layer (3522, 3524) individually and for the multiple layers (3522, 3524) collectively.

4. The method (700) of Claim 2 or 3, further comprising:
repeating (702) the laying up (506), the detecting (508), the processing (510), and the comparing (512) for each subsequent layer (3524) of the multiple layers (3522, 3524); and
processing (704) the projected fiber volume fill ratios (3642) for the multiple layers (3522, 3524) to determine a through-thickness projected fiber volume fill ratio (3644) for the design zones (302) of each layer (3522, 3524) individually and for the multiple layers (3522, 3524) collectively.

5. The method (800) of Claim 4, further comprising:
receiving (802) fiber volume fill ratio requirements (3646) for each layer (3522, 3524) individually and for the multiple layers (3522, 3524) collectively;
comparing (804) the projected fiber volume fill ratios (3642) for each layer (3522, 3524) individually to the fiber volume fill ratio requirements (3646) for the corresponding layer to determine a risk probability (3648) of not achieving the fiber volume fill ratio requirements (3646) for the composite workpiece (300) after the laying up (506) of each layer (3522, 3524); and
after the laying up (506) of each subsequent layer (3524), processing (806) the risk probability (3648) for each layer (3524) to determine a through-thickness risk probability (3650) for current layers (4304) on a layup mandrel (3518).

6. The method (800) of Claim 5, further comprising:
receiving (808) a risk threshold (3652) for the risk probability (3648) at each layer (3522, 3524) individually and for the multiple layers (3522, 3524) collectively to categorize the risk probability (3648) as acceptable or unacceptable;
comparing (810) the risk probability (3648) after the laying up (506) of each layer (3522, 3524) to the risk threshold (3652) for the risk probability (3648) at the corresponding layer; and
after the laying up (506) of each subsequent layer (3524), processing (812) the risk probability (3648) for each layer (3524) to determine a through-thickness risk probability (3650) for the current layers (4304) on the layup mandrel (3518) and comparing the through-thickness risk probability (3650) to the corresponding risk threshold (3652) for the current layers (4304) on the layup mandrel (3518).

7. The method (900) of Claim 6 wherein, where the through-thickness risk probability (3650) for the current layers (4304) on the layup mandrel (3518) exceeds the risk threshold (3652), the through-thickness risk probability (3650) is unacceptable, the method further comprising:
optimizing (902) the design data (3634) to form optimized design data (3654) for the layup of subsequent layers (3524) of the composite material (3502) during the fabrication of the composite workpiece (300) to reduce the through-thickness risk probability (3650) of not achieving the fiber volume fill ratio requirements (3646) for the composite workpiece (300) after the laying up (506) of the subsequent layers (3524);
processing (904) the optimized design data (3654) for the subsequent layers (3524) of the layup to determine the as-planned fiber volume fill characteristics (3636) for the subsequent layers (3524); and
laying up (906) a next layer (4306) of the composite material (3502) over the current layers (4304) on the layup mandrel (3518) based on the optimized design data (3654); and, optionally,
the optimizing (902) of the design data (3634) comprising:
optimizing (1002) path planning for at least a portion of a remainder of the composite workpiece (300) to form an optimized path plan (3656) for the layup of at least one subsequent layer (3524) of the composite material (3502) during the fabrication of the composite workpiece (300) to reduce the through-thickness risk probability (3650) of not achieving the fiber volume fill ratio requirements (3646) for the composite workpiece (300).

8. The method of Claim 7, the optimizing (902) of the design data (3634) comprising:
optimizing (1004) fiber volume fill ratio requirements (3646) for at least a portion of a remainder of the composite workpiece (300) to form an optimized fiber volume fill ratio requirement (3658) for the layup of at least one subsequent layer (3524) of the composite material (3502) during the fabrication of the composite workpiece (300) to reduce the through-thickness risk probability (3650) of not achieving the fiber volume fill ratio requirements (3646) for the composite workpiece (300); and/or
optimizing (1006) numerical control programming for at least a portion of a remainder of the composite workpiece (300) to form an optimized numerical control program (3660) for the layup of at least one subsequent layer (3524) of the composite material (3502) during the fabrication of the composite workpiece (300) to reduce the through-thickness risk probability (3650) of not achieving the fiber volume fill ratio requirements (3646) for the composite workpiece (300).

9. The method (1100) of any of Claims 6 to 8 wherein, where the through-thickness risk probability (3650) for the current layers (4304) on the layup mandrel (3518) does not exceed the risk threshold (3652), the through-thickness risk probability (3650) is acceptable, the method further comprising:
processing (1102) the design data (3634) for a next layer (4306) of the layup to determine the as-planned fiber volume fill characteristics (3636) of the next layer (4306); and
laying up (1104) the next layer (4306) of the composite material (3502) over the current layers (4304) on the layup mandrel (3518) based on the design data (3634).

10. The method (1200) of any of Claims 4 to 9, further comprising:
receiving (1202) fiber volume fill ratio requirements (3646) for one or more design zone (302) of each layer (3522, 3524) individually and for the multiple layers (3522, 3524) collectively;
comparing (1204) the projected fiber volume fill ratios (3642) for the one or more design zone (302) to the fiber volume fill ratio requirements (3646) for the corresponding design zone (302) to determine a risk probability (3648) of not achieving the fiber volume fill ratio requirements (3646) for the corresponding design zone (302) of the composite workpiece (300) after the laying up (506) of each layer (3522, 3524); and
after the laying up (506) of each subsequent layer (3524), processing (1206) the risk probability (3648) for the corresponding design zone (302) of each layer (3524) to determine a through-thickness risk probability (3650) for current layers (4304) on a layup mandrel (3518).

11. The method (1200) of Claim 10, further comprising:
receiving (1208) a risk threshold (3652) for the risk probability (3648) of the one or more design zone (302) at each layer (3522, 3524) individually and for the multiple layers (3522, 3524) collectively to categorize the risk probability (3648) as acceptable or unacceptable at each of the one or more design zone (302);
comparing (1210) the risk probability (3648) after the laying up (506) of each layer (3522, 3524) to the risk threshold (3652) for the risk probability (3648) at the corresponding design zone (302); and
after the laying up (506) of each subsequent layer (3524), processing (1212) the risk probability (3648) for each of the one or more design zone (302) for each layer (3524) to determine a through-thickness risk probability (3650) for the current layers (4304) on the layup mandrel (3518) and comparing the through-thickness risk probability (3650) to the corresponding risk threshold (3652) for the current layers (4304) on the layup mandrel (3518).

12. The method (1300) of Claim 11 wherein, where the through-thickness risk probability (3650) for the current layers (4304) on the layup mandrel (3518) exceeds the risk threshold (3652), the through-thickness risk probability (3650) is unacceptable, the method further comprising:
optimizing (1302) the design data (3634) to form optimized design data (3654) for the layup of the one or more design zone (302) in subsequent layers (3524) of the composite material (3502) during the fabrication of the composite workpiece (300) to reduce the through-thickness risk probability (3650) of not achieving the fiber volume fill ratio requirements (3646) for the one or more design zone (302) in the composite workpiece (300) after the laying up (506) of the subsequent layers (3524);
processing (1304) the optimized design data (3654) for the one or more design zone (302) in the subsequent layers (3524) of the layup to determine the as-planned fiber volume fill characteristics (3636) for the subsequent layers (3524); and
laying up (1306) a next layer (4306) of the composite material (3502) over the current layers (4304) on the layup mandrel (3518) based on the optimized design data (3654) for the one or more design zone (302).

13. The method of Claim 12, the optimizing (1302) of the design data (3634) comprising:
optimizing (1402) path planning for the layup of the one or more design zone (302) for at least a portion of a remainder of the subsequent layers (3524) in the composite workpiece (300) to form an optimized path plan (3656) for the layup of at least one subsequent layer (3524) of the composite material (3502) during the fabrication of the composite workpiece (300) to reduce the through-thickness risk probability (3650) of not achieving the fiber volume fill ratio requirements (3646) for the composite workpiece (300); and/or
optimizing (1404) fiber volume fill ratio requirements (3646) for the layup of the one or more design zone (302) for at least a portion of a remainder of the subsequent layers (3524) in the composite workpiece (300) to form an optimized fiber volume fill ratio requirement (3658) for the layup of at least one subsequent layer (3524) of the composite material (3502) during the fabrication of the composite workpiece (300) to reduce the through-thickness risk probability (3650) of not achieving the fiber volume fill ratio requirements (3646) for the composite workpiece (300).

14. The method of any of Claims 1 to 13 wherein at least a portion of the multiple design zones (302) are further decomposed into a design grid structure (402) with a plurality of design grid cells (404) for the corresponding design zone (302), the design data (3634) further comprising localized grid data (3704) for the design grid cells (404) of the design grid structures (402), and the method further comprises:
processing (504) the design data (3634) for the multiple layers (3522, 3524) of the composite workpiece (300) to determine the as-planned fiber volume fill characteristics (3636) for the design grid cells (404) of the design grid structures (402) of each layer (3522, 3524) individually and for the multiple layers (3522, 3524) collectively, wherein the laying up (506) of the layer (3522) is also based on the localized grid data (3704) for the layer (3522);
processing (510) the as-built data (3638) for the layer (3522) to determine as-built fiber volume fill characteristics (3640) of the layer (3522), the as-built fiber volume fill characteristics (3640) stored in the plurality of as-built grid cells (4302);
comparing (512) the as-built fiber volume fill characteristics (3640) for the layer (3522) to the as-planned fiber volume fill characteristics (3636) to determine projected fiber volume fill ratios (3642);
repeating (702) the laying up (506), the detecting (508), the processing (510), and the comparing (512) for each subsequent layer (3524) of the multiple layers (3522, 3524);
processing (704) the projected fiber volume fill ratios (3642) for the multiple layers (3522, 3524) to determine a through-thickness projected fiber volume fill ratio (3644) for the design zones (302) and the design grid structures (402) of each layer (3522, 3524) individually and for the multiple layers (3522, 3524) collectively;
receiving (1602) fiber volume fill ratio requirements (3646) for one or more design grid cell (404) in one or more design grid structure (402) of each layer (3522, 3524) individually and for the multiple layers (3522, 3524) collectively;
comparing (1604) the projected fiber volume fill ratios (3642) for the one or more design grid cell (404) to the fiber volume fill ratio requirements (3646) for the corresponding design grid cell (404) to determine a risk probability (3648) of not achieving the fiber volume fill ratio requirements (3646) for the corresponding design grid cell (404) of the composite workpiece (300) after the laying up (506) of each layer (3522, 3524); and
after the laying up (506) of each subsequent layer (3524), processing (1606) the risk probability (3648) for the corresponding design grid cell (404) of each layer (3524) to determine a through-thickness risk probability (3650) for current layers (4304) on a layup mandrel (3518).

15. An automated system (3500) for layup and analysis of composite material (3502) during fabrication of a composite workpiece (300), comprising:
at least one analytical computing device (3504) programmed to implement the method of any of claims 1 to 14.
